# EUROPEAN PATENT APPLICATION

(11) **EP 4 274 293 A1**
(43) Date of publication of application: **08.11.2023**
(21) Application number: 21924448.0
(22) Date of filing: 23.12.2021
(51) Int. Cl.: H04W 24/02

(54) **WIFI SCAN CONTROL METHOD AND RELATED DEVICE**

(30) Priority: 04.02.2021 CN 202110153928
(71) Applicant: Huawei Technologies Co., Ltd., Shenzhen, Guangdong 518129 (CN)
(72) Inventor: SHU, Haw-Wei, Shenzhen, Guangdong 518129 (CN); LI, Shijun, Shenzhen, Guangdong 518129 (CN); WANG, Tongbo, Shenzhen, Guangdong 518129 (CN); DING, Ji, Shenzhen, Guangdong 518129 (CN)
(74) Representative: Pfenning, Meinig & Partner mbB
(86) International application number: PCT/CN2021/140873
(87) International publication number: WO 2022/166455

(57) **Abstract**

Embodiments of this application disclose a Wi-Fi scanning control method and a related apparatus. The method includes: A terminal device performs a first Wi-Fi service by using a first Wi-Fi path. The terminal device includes at least two Wi-Fi chips, and can provide at least two concurrent Wi-Fi paths. After obtaining a Wi-Fi scanning request, the terminal device determines a first target path from a second Wi-Fi path in an idle state, and then in response to the Wi-Fi scanning request, performs Wi-Fi scanning by using the first target path. In embodiments of this application, when the first Wi-Fi path is used to perform the first Wi-Fi service, the second Wi-Fi path in the idle state is used to perform Wi-Fi scanning, so that Wi-Fi scanning does not occupy a slot of the Wi-Fi path corresponding to the first Wi-Fi service, to reduce or even avoid impact of Wi-Fi scanning on performance of a currently running Wi-Fi service.

## Description

This application claims priority to Chinese Patent Application No. 202110153928.3, filed with the China National Intellectual Property Administration on February 4, 2021, and entitled "WI-FI SCANNING CONTROL METHOD AND RELATED APPARATUS", which is incorporated herein by reference in its entirety.

### TECHNICAL FIELD

This application relates to field of wireless communication technologies, and in particular, to a Wi-Fi scanning control method and a related apparatus.

### BACKGROUND

With continuous development of wireless communication technologies, wireless fidelity (Wireless Fidelity, Wi-Fi) is applied increasingly widely, and types and quantities of Wi-Fi devices are also increasing.

When running a Wi-Fi service, a terminal device that supports Wi-Fi may further need to perform Wi-Fi scanning. Wi-Fi scanning affects performance of a currently running Wi-Fi service, especially a low-latency service. For example, a user is using a mobile phone to play a game. That is, a foreground Wi-Fi service running on the mobile phone is a game service. In this case, an application in the background performs Wi-Fi scanning, and Wi-Fi scanning of the background application causes a latency. This affects real-time performance of the foreground game service.

### SUMMARY

Embodiments of this application provide a Wi-Fi scanning control method and a related apparatus, to reduce or even avoid impact of Wi-Fi scanning on performance of a running Wi-Fi service.

According to a first aspect, an embodiment of this application provides a Wi-Fi scanning control method, applied to a terminal device. The terminal device includes at least two Wi-Fi chips, and can provide at least two concurrent Wi-Fi paths. The method includes: performing a first Wi-Fi service by using a first Wi-Fi path; obtaining a Wi-Fi scanning request; determining a first target path from a second Wi-Fi path in an idle state, where the at least two Wi-Fi paths include the first Wi-Fi path and the second Wi-Fi path; and in response to the Wi-Fi scanning request, performing Wi-Fi scanning by using the first target path.

According to the foregoing technical solution, the terminal device includes the at least two Wi-Fi chips, and provides at least two concurrent Wi-Fi paths. When the first Wi-Fi path is used to perform the first Wi-Fi service, the second Wi-Fi path in the idle state is used to perform Wi-Fi scanning, so that Wi-Fi scanning does not occupy a slot of the Wi-Fi path corresponding to the first Wi-Fi service, to reduce or even avoid impact of Wi-Fi scanning on performance of a currently running Wi-Fi service.

The first Wi-Fi path may include one or more Wi-Fi paths, the first Wi-Fi service may include one or more Wi-Fi services, and one Wi-Fi service may use one or more Wi-Fi paths. For example, the first Wi-Fi service includes a projection service and an internet access service, and the two services each occupy a Wi-Fi path. For another example, the first Wi-Fi service is a foreground high-speed download service, and the service occupies two or three Wi-Fi paths.

The second Wi-Fi path in the idle state may include one or more Wi-Fi paths, the first target path may include one or more Wi-Fi paths, the first target path may be equivalent to the second Wi-Fi path, and the second Wi-Fi path may also include the first target path. For example, the second Wi-Fi path includes only two paths of different bands, and the first target path also includes two paths of different bands. In this case, the first target path is equivalent to the second Wi-Fi path.

The terminal device may determine the first target path from the second Wi-Fi path, to select a path used for Wi-Fi scanning. If the second Wi-Fi path includes only one path, the terminal device may directly use the second Wi-Fi path as the first target path. If the second Wi-Fi path includes two paths of different bands, the terminal device may directly use the second Wi-Fi path as the first target path, or select one of the paths as the first target path. If the second Wi-Fi path includes two paths of a same band, the terminal device may select one path as the first target path. If the second Wi-Fi path includes at least three paths, the terminal device may select one path, or select two paths of different bands as the first target path.

In some possible implementations of the first aspect, the first target path may include a Wi-Fi path of a first band and a Wi-Fi path of a second band. The first band may be a 2.4G band or a 5G band, and the second band is correspondingly the 5G band or the 2.4G band. The first band is different from the second band.

In this implementation, the second Wi-Fi path includes at least two paths, and the plurality of paths include paths of different bands. For example, the terminal device performs an internet access service by using a 2.4G band path of the first Wi-Fi chip. In this case, the second Wi-Fi path in the idle state includes a 5G band path of the first Wi-Fi chip and a 5G band or 2.4G band path of the second Wi-Fi chip. To obtain a full-band scanning result, it may be determined that the first target path is the 5G band path of the first Wi-Fi chip and the 2.4G band path of the second Wi-Fi chip.

Certainly, in another implementation, the terminal device may alternatively perform scanning by using a path of only one band. In this case, the Wi-Fi scanning request may include indication information indicating a scanning band or a scanning channel, and the terminal device selects, based on the indication information carried in the Wi-Fi scanning request, a Wi-Fi path of a specific band as the first target path.

In some possible implementations of the first aspect, after the obtaining a Wi-Fi scanning request, if the second Wi-Fi path includes a Wi-Fi path of only one band, the method may further include:
determining whether a Wi-Fi service of a preset type exists on a Wi-Fi path of a target band in the first Wi-Fi path, where the first Wi-Fi service includes at least two Wi-Fi services, and the first Wi-Fi path includes at least two Wi-Fi paths; if the Wi-Fi service of the preset type exists on the Wi-Fi path of the target band, determining a Wi-Fi path corresponding to the Wi-Fi service of the preset type as a second target path; and in response to the Wi-Fi scanning request, performing Wi-Fi scanning by using the second target path and a third target path. The target band is different from a band of the second Wi-Fi path, and the second Wi-Fi path includes the third target path. The Wi-Fi service of the preset type may be of a target service type.

In this implementation, to obtain a full-band scanning result and reduce, as much as possible, impact of Wi-Fi scanning on performance of a currently running Wi-Fi service, if a Wi-Fi path of only one band is in an idle state at this time, Wi-Fi scanning may be performed by using a path corresponding to the Wi-Fi service of the preset type.

For example, the terminal device performs a projection service by using a 5G band path of the first Wi-Fi chip, and performs an internet access service by using a 2.4G band path of the first Wi-Fi chip. In this case, only a 5G band path of the second Wi-Fi chip is in an idle state. To obtain a full-band scanning result, a service type on the 2.4G band (that is, the target band) path of the first Wi-Fi chip may be detected. Because the internet access service is a non-low-latency service and is insensitive to a latency, the 2.4G band path (that is, the second target path) of the first Wi-Fi chip and the 5G band path (that is, the third target path) of the second Wi-Fi chip may be used for scanning, to obtain scanning results of a 2.4G band and a 5G band.

In another implementation, if the second Wi-Fi path includes paths of two different bands, to obtain a full-band scanning result, the terminal device may select two paths of different bands from Wi-Fi paths in the idle state for scanning.

In some possible implementations of the first aspect, the Wi-Fi service of the preset type may include a non-low-latency service. The non-low-latency service is a service insensitive to a latency, for example, an internet access service. Correspondingly, a low-latency service is a service sensitive to a latency, for example, a projection service.

In some possible implementations of the first aspect, before the performing a first Wi-Fi service by using a first Wi-Fi path, the method may further include: determining whether the first Wi-Fi service is a foreground Wi-Fi service; if the first Wi-Fi service is a foreground Wi-Fi service, determining a service type of the first Wi-Fi service; and determining the first Wi-Fi path based on the service type.

When the service type is a first type, the first Wi-Fi path includes one Wi-Fi path; and when the service type is a second type, the first Wi-Fi path includes at least two Wi-Fi paths.

In this implementation, when the first Wi-Fi path is determined, a quantity of used Wi-Fi paths may be determined based on a type of the first Wi-Fi service. If the first Wi-Fi service is a foreground service and is of the second type, a plurality of Wi-Fi paths may be used to accelerate the first Wi-Fi service.

For example, if the first Wi-Fi service is a foreground high-speed download service, the terminal device may be connected to a first hotspot through a 5G band path of the first Wi-Fi chip, the terminal device may be connected to a second hotspot through a 5G band path of the second Wi-Fi chip, and two 5G band Wi-Fi hotspots are used to perform the download service, to improve a download speed. In this case, the first Wi-Fi path includes the 5G band path of the first Wi-Fi chip and the 5G band path of the second Wi-Fi chip.

In some possible implementations of the first aspect, the first type may include a low-latency type or a conventional Wi-Fi service, for example, a projection service, and the second type may include a high-speed download type.

In some possible implementations of the first aspect, when the terminal device can provide at least three concurrent Wi-Fi paths, the process of performing a first Wi-Fi service by using a first Wi-Fi path may include: performing a first projection service by using a fourth target path, and performing a second Wi-Fi service by using a fifth target path. The first Wi-Fi service includes the first projection service and the second Wi-Fi service. The first Wi-Fi path includes the fourth target path and the fifth target path, and the second Wi-Fi service is a non-low-latency service, for example, an internet access service.

In other words, the terminal device performs two Wi-Fi services. For example, the terminal device performs the first projection service by using a 5G band path (that is, the fourth target path) of the first Wi-Fi chip, and performs the internet access service by using a 2.4G band path (that is, the fifth target path) of the second Wi-Fi chip. The fourth target path and the fifth target path are Wi-Fi paths in an occupied state.

After the performing Wi-Fi scanning by using the first target path, the method may further include: obtaining a first Wi-Fi scanning result; and performing a second projection service by using a sixth target path based on the first Wi-Fi scanning result. The second Wi-Fi path includes the sixth target path.

The sixth target path may be the same as the first target path, or may be different from the first target path. For example, the terminal device performs the first projection service by using the 5G band path (that is, the fourth target path) of the first Wi-Fi chip, and performs the internet access service by using the 2.4G band path (that is, the fifth target path) of the first Wi-Fi chip. After scanning is performed by using the first target path to obtain the first scanning result, the second projection service is performed by using a 5G band path (that is, the sixth target path) of the second Wi-Fi chip. In this case, the first target path used for Wi-Fi scanning may include the 5G band path (that is, the sixth target path) of the second Wi-Fi chip. Certainly, if a full-band scanning result needs to be obtained, scanning may be performed by using the 2.4G band path of the first Wi-Fi chip and the 5G band path of the second Wi-Fi chip, and then the second projection service is performed by using the 5G band path of the second Wi-Fi chip. Alternatively, if the internet access service is performed by using the 5G band of the second Wi-Fi chip, the terminal device may first switch the internet access service to the 2.4G band path of the first Wi-Fi chip, and then perform Wi-Fi scanning. For a Wi-Fi scanning solution, refer to various implementations of the first aspect. Details are not described herein again.

For example, the first Wi-Fi scanning result may include an SSID, a BSSID, and a PWR.

In some possible implementations of the first aspect, before the performing Wi-Fi scanning by using the first target path, the method may further include: determining whether a band of the fifth target path is a 5G band; and if it is determined that the band of the fifth target path is a 5G band, switching the second Wi-Fi service from the fifth target path to a seventh target path in an idle state, to perform the second Wi-Fi service by using the seventh target path. The seventh target path is a 2.4G band Wi-Fi path, the first target path includes the fifth target path, and the fifth target path is used as the sixth target path.

For example, the terminal device performs the first projection service by using the 5G band path (that is, the fourth target path) of the first Wi-Fi chip, and performs the internet access service by using the 5G band path (that is, the fifth target path) of the second Wi-Fi chip. The first scanning request is used to trigger establishment of a Wi-Fi P2P connection, to perform the second projection service. When detecting that the path corresponding to the second Wi-Fi service is in a 5G band, the terminal device switches the second Wi-Fi service to an idle 2.4G band path, and then performs Wi-Fi scanning by using the first target path. In this case, the first target path includes the 5G band path of the second Wi-Fi chip, and the fifth target path is used as the sixth target path. That is, the second projection service is performed by using the fifth target path, to implement concurrency of dual-path projection services.

Certainly, in another implementation, the second projection service may be performed by using the 2.4G band path, and the second Wi-Fi service is not switched to the 2.4G band path.

In some possible implementations of the first aspect, the process of performing Wi-Fi scanning by using the first target path may include: obtaining a second Wi-Fi scanning result; after identifying a target device based on the second Wi-Fi scanning result, performing scanning at a first scanning frequency by using the first target path, to obtain first Wi-Fi information broadcast by the target device; determining a first distance to the target device based on the first Wi-Fi information; and when the first distance is less than or equal to a first preset threshold, performing scanning at a second scanning frequency by using the first target path, and obtaining second Wi-Fi information of the target device. The second scanning frequency is higher than the first scanning frequency.

For example, in a proximity discovery scanning scenario, the terminal device performs the first Wi-Fi service by using the first Wi-Fi path. After obtaining the Wi-Fi scanning request, the terminal device may perform Wi-Fi scanning by using the first target path in the idle state, to reduce or even avoid impact of proximity discovery scanning on performance of the first Wi-Fi service. In addition, when scanning is performed by using the first target path, a distance to the target device (for example, a soy milk maker) is calculated based on the second Wi-Fi scanning result. When the distance is less than a specific threshold, a scanning frequency is increased, so that the distance to the target device is calculated more accurately.

The second Wi-Fi scanning result may include an SSID, a BSSID, a PWR, and the like. The first scanning frequency, the second scanning frequency, and the first preset threshold may be set according to an actual requirement. The first Wi-Fi information is information used to calculate a distance, and may include, for example, information such as an SSID and a PWR.

In some possible implementations of the first aspect, after the performing scanning at a second scanning frequency by using the first target path, and obtaining second Wi-Fi information of the target device, the method may further include: determining a second distance to the target device based on the second Wi-Fi information; and when the second distance is less than or equal to a second preset threshold, popping up a window, and displaying information about the target device in the window. The second preset threshold is less than the first preset threshold.

The information about the target device may include information such as a device name and a device picture. The second threshold may be set according to an actual requirement. The second Wi-Fi information is information used to calculate a distance, and may include, for example, information such as an SSID and a PWR.

For example, in a proximity discovery scanning scenario, if it is determined that a distance between two devices is less than the second preset threshold, a reporting action may be performed, and a window pops up, to trigger a connection action. For example, a network configuration window of the soy milk maker is displayed. The network configuration window includes a name, a picture, Wi-Fi network information, and the like of the soy milk maker.

According to a second aspect, an embodiment of this application provides a terminal device, including at least two Wi-Fi chips, a memory, a processor, and a computer program that is stored in the memory and that can be run on the processor. The terminal device can provide at least two concurrent Wi-Fi paths based on the at least two Wi-Fi chips. When executing the computer program, the processor implements the following processes: performing a first Wi-Fi service by using a first Wi-Fi path; obtaining a Wi-Fi scanning request; determining a first target path from a second Wi-Fi path in an idle state, where the at least two Wi-Fi paths include the first Wi-Fi path and the second Wi-Fi path; and in response to the Wi-Fi scanning request, performing Wi-Fi scanning by using the first target path.

In some possible implementations of the second aspect, the first target path includes a Wi-Fi path of a first band and a Wi-Fi path of a second band.

In some possible implementations of the second aspect, if the second Wi-Fi path includes a Wi-Fi path of only one band, when executing the computer program, the processor further implements the following process: determining whether a Wi-Fi service of a preset type exists on a Wi-Fi path of a target band in the first Wi-Fi path, where the first Wi-Fi service includes at least two Wi-Fi services, and the first Wi-Fi path includes at least two Wi-Fi paths; if the Wi-Fi service of the preset type exists on the Wi-Fi path of the target band, determining a Wi-Fi path corresponding to the Wi-Fi service of the preset type as a second target path; and in response to the Wi-Fi scanning request, performing Wi-Fi scanning by using the second target path and a third target path, where the target band is different from a band of the second Wi-Fi path, and the second Wi-Fi path includes the third target path.

In some possible implementations of the second aspect, the Wi-Fi service of the preset type includes a non-low-latency service.

In some possible implementations of the second aspect, when executing the computer program, the processor further implements the following process: determining whether the first Wi-Fi service is a foreground Wi-Fi service; if the first Wi-Fi service is a foreground Wi-Fi service, determining a service type of the first Wi-Fi service; and determining the first Wi-Fi path based on the service type. When the service type is a first type, the first Wi-Fi path includes one Wi-Fi path; and when the service type is a second type, the first Wi-Fi path includes at least two Wi-Fi paths.

In some possible implementations of the second aspect, the first type includes a low latency type, and the second type includes a high-speed download type.

In some possible implementations of the second aspect, when the terminal device can provide at least three concurrent Wi-Fi paths, when executing the computer program, the processor specifically implements the following process: performing a first projection service by using a fourth target path, and performing a second Wi-Fi service by using a fifth target path. The first Wi-Fi service includes the first projection service and the second Wi-Fi service, the first Wi-Fi path includes the fourth target path and the fifth target path, and the second Wi-Fi service is a non-low-latency service.

When executing the computer program, the processor further implements the following processes: obtaining a first Wi-Fi scanning result; and performing a second projection service by using a sixth target path based on the first Wi-Fi scanning result. The second Wi-Fi path includes the sixth target path.

In some possible implementations of the second aspect, when executing the computer program, the processor further implements the following process: determining whether a band of the fifth target path is a 5G band; and if it is determined that the band of the fifth target path is a 5G band, switching the second Wi-Fi service from the fifth target path to a seventh target path in an idle state, to perform the second Wi-Fi service by using the seventh target path. The seventh target path is a 2.4G band Wi-Fi path, the first target path includes the fifth target path, and the fifth target path is used as the sixth target path.

In some possible implementations of the second aspect, when executing the computer program, the processor specifically implements the following processes: obtaining a second Wi-Fi scanning result; after identifying a target device based on the second Wi-Fi scanning result, performing scanning at a first scanning frequency by using the first target path, to obtain first Wi-Fi information broadcast by the target device; determining a first distance to the target device based on the first Wi-Fi information; and when the first distance is less than or equal to a first preset threshold, performing scanning at a second scanning frequency by using the first target path, and obtaining second Wi-Fi information of the target device. The second scanning frequency is higher than the first scanning frequency.

In some possible implementations of the second aspect, when executing the computer program, the processor further implements the following process: determining a second distance to the target device based on the second Wi-Fi information; and when the second distance is less than or equal to a second preset threshold, popping up a window, and displaying information about the target device in the window. The second preset threshold is less than the first preset threshold.

According to a third aspect, an embodiment of this application provides a Wi-Fi scanning control apparatus. The Wi-Fi scanning control apparatus may be integrated into a terminal device, the terminal device includes at least two Wi-Fi chips, and can provide at least two concurrent Wi-Fi paths. The apparatus may include:
a first using module, configured to perform a first Wi-Fi service by using a first Wi-Fi path;
a first scanning request obtaining module, configured to obtain a Wi-Fi scanning request;
a determining module, configured to determine a first target path from a second Wi-Fi path in an idle state, where the at least two Wi-Fi paths include the first Wi-Fi path and the second Wi-Fi path; and
a first Wi-Fi scanning module, configured to: in response to the Wi-Fi scanning request, perform Wi-Fi scanning by using the first target path.

In some possible implementations of the third aspect, the first target path includes a Wi-Fi path of a first band and a Wi-Fi path of a second band.

In some possible implementations of the third aspect, if the second Wi-Fi path includes a Wi-Fi path of only one band, the apparatus further includes:
a first service type determining module, configured to determine whether a Wi-Fi service of a preset type exists on a Wi-Fi path of a target band in the first Wi-Fi path, where the first Wi-Fi service includes at least two Wi-Fi services, and the first Wi-Fi path includes at least two Wi-Fi paths;
a first path determining module, configured to: if the Wi-Fi service of the preset type exists on the Wi-Fi path of the target band, determine a Wi-Fi path corresponding to the Wi-Fi service of the preset type as a second target path; and
a second Wi-Fi scanning module, configured to: in response to the Wi-Fi scanning request, perform Wi-Fi scanning by using the second target path and a third target path.

The target band is different from a band of the second Wi-Fi path, and the second Wi-Fi path includes the third target path.

In some possible implementations of the third aspect, the Wi-Fi service of the preset type includes a non-low-latency service.

In some possible implementations of the third aspect, the apparatus may further include: a foreground service determining module, configured to determine whether the first Wi-Fi service is a foreground Wi-Fi service;
a second service type determining module, configured to: if the first Wi-Fi service is a foreground Wi-Fi service, determine a service type of the first Wi-Fi service; and
a second path determining module, configured to determine the first Wi-Fi path based on the service type.

When the service type is a first type, the first Wi-Fi path includes one Wi-Fi path; and when the service type is a second type, the first Wi-Fi path includes at least two Wi-Fi paths.

In some possible implementations of the third aspect, the first type includes a low latency type, and the second type includes a high-speed download type.

In some possible implementations of the first aspect, when the terminal device can provide at least three concurrent Wi-Fi paths, the first using module is specifically configured to: perform a first projection service by using a fourth target path, and perform a second Wi-Fi service by using a fifth target path. The first Wi-Fi service includes the first projection service and the second Wi-Fi service, the first Wi-Fi path includes the fourth target path and the fifth target path, and the second Wi-Fi service is a non-low-latency service.

The apparatus may further include: a first scanning result obtaining module, configured to obtain a first Wi-Fi scanning result; and a second using module, configured to perform a second projection service by using a sixth target path based on the first Wi-Fi scanning result. The second Wi-Fi path includes the sixth target path.

In some possible implementations of the third aspect, the apparatus may further include: a band determining module, configured to determine whether a band of the fifth target path is a 5G band; and a path switching module, configured to: if it is determined that the band of the fifth target path is a 5G band, switch the second Wi-Fi service from the fifth target path to a seventh target path in an idle state, to perform the second Wi-Fi service by using the seventh target path. The seventh target path is a 2.4G band Wi-Fi path, the first target path includes the fifth target path, and the fifth target path is used as the sixth target path.

In some possible implementations of the third aspect, the first Wi-Fi scanning module is specifically configured to: obtain a second Wi-Fi scanning result; after a target device is identified based on the second Wi-Fi scanning result, perform scanning at a first scanning frequency by using the first target path, to obtain first Wi-Fi information broadcast by the target device; determine a first distance to the target device based on the first Wi-Fi information; and when the first distance is less than or equal to a first preset threshold, perform scanning at a second scanning frequency by using the first target path, and obtain second Wi-Fi information of the target device. The second scanning frequency is higher than the first scanning frequency.

In some possible implementations of the third aspect, the apparatus may further include: a distance determining module, configured to determine a second distance to the target device based on the second Wi-Fi information; and a triggering module, configured to: when the second distance is less than or equal to a second preset threshold, pop up a window, and display information about the target device in the window. The second preset threshold is less than the first preset threshold.

The Wi-Fi scanning control apparatus has a function of implementing the Wi-Fi scanning control method in the first aspect. The function may be implemented by hardware, or may be implemented by hardware executing corresponding software. The hardware or software includes one or more modules corresponding to the foregoing function, and the module may be software and/or hardware.

According to a fourth aspect, an embodiment of this application provides a computer-readable storage medium. The computer-readable storage medium stores a computer program, and when the computer program is executed by a processor, the method according to any one of the first aspect is implemented.

According to a fifth aspect, an embodiment of this application provides a chip system, including a processor and at least two Wi-Fi chips. The processor is coupled to a memory, and the processor executes a computer program stored in the memory, to implement the method according to any one of the first aspect. The chip system may be a single chip or a chip module including a plurality of chips.

According to a sixth aspect, an embodiment of this application provides a computer program product. When the computer program product is run on a terminal device, the terminal device performs the method according to any one of the first aspect.

It may be understood that, for beneficial effects of the second aspect to the sixth aspect, refer to related descriptions in the first aspect. Details are not described herein again.

### BRIEF DESCRIPTION OF DRAWINGS

FIG. 1(a) is a schematic diagram of a Wi-Fi scanning slot and a Wi-Fi service working slot in a same Wi-Fi path according to an embodiment of this application;
FIG. 1(b) is a schematic diagram of a time-sharing model according to an embodiment of this application;
FIG. 2(a)-1 to FIG. 2(d)-2 are schematic diagrams of Wi-Fi scanning in a multi-screen collaboration scenario according to an embodiment of this application;
FIG. 3 is a schematic block diagram of an architecture of a terminal device with dual Wi-Fi chips according to an embodiment of this application;
FIG. 4 is a schematic block diagram of another architecture of a terminal device with dual Wi-Fi chips according to an embodiment of this application;
FIG. 5 is a schematic diagram of slots of a Wi-Fi path according to an embodiment of this application;
FIG. 6 is a schematic block diagram of a procedure of a Wi-Fi scanning control method according to an embodiment of this application;
FIG. 7(a)-1 to FIG. 7(a)-5 are a schematic diagram of an interference detection scenario according to an embodiment of this application;

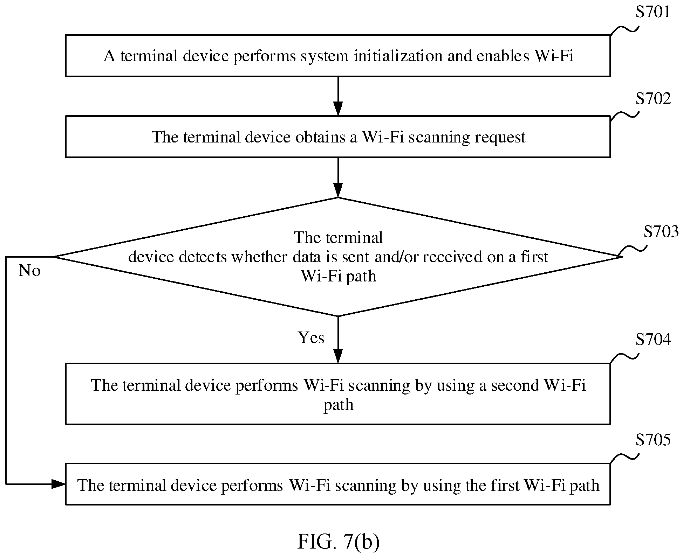

FIG. 7(b) is a schematic block diagram of another procedure of a Wi-Fi scanning control method according to an embodiment of this application;

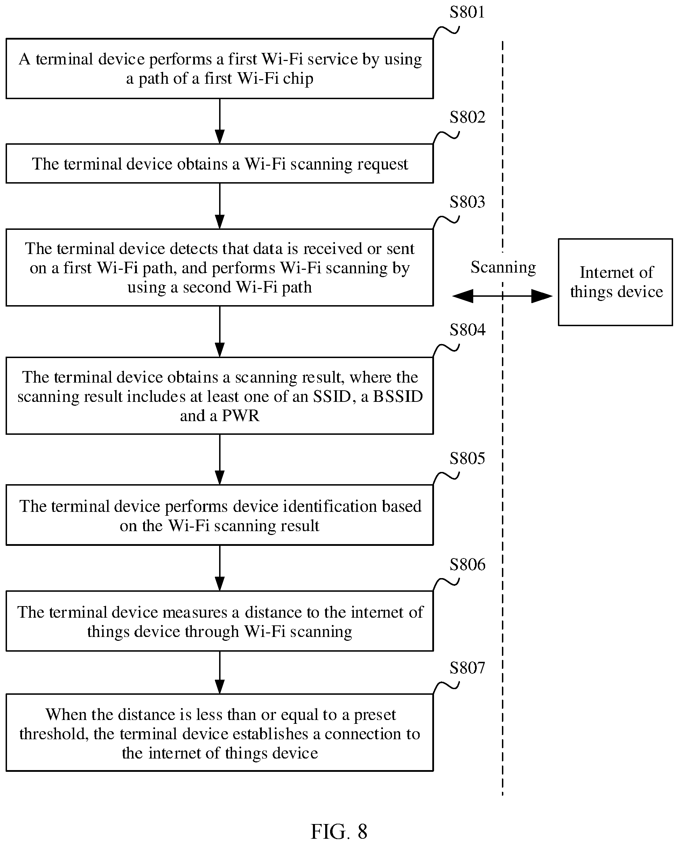

FIG. 8 is a schematic block diagram of a procedure of a proximity discovery scenario according to an embodiment of this application;

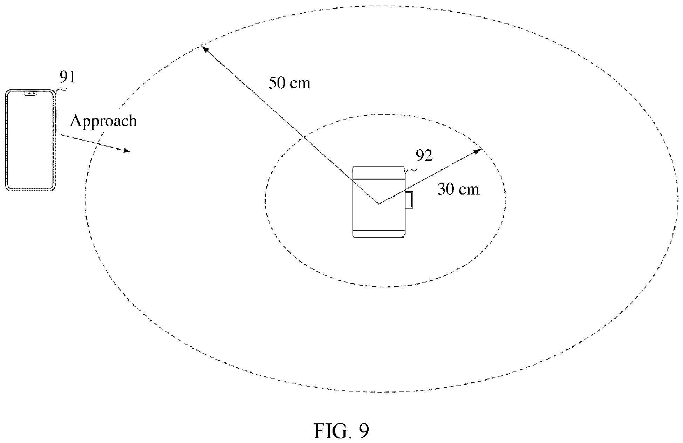

FIG. 9 is a schematic diagram of a scenario of dynamically adjusting a Wi-Fi scanning frequency according to an embodiment of this application;

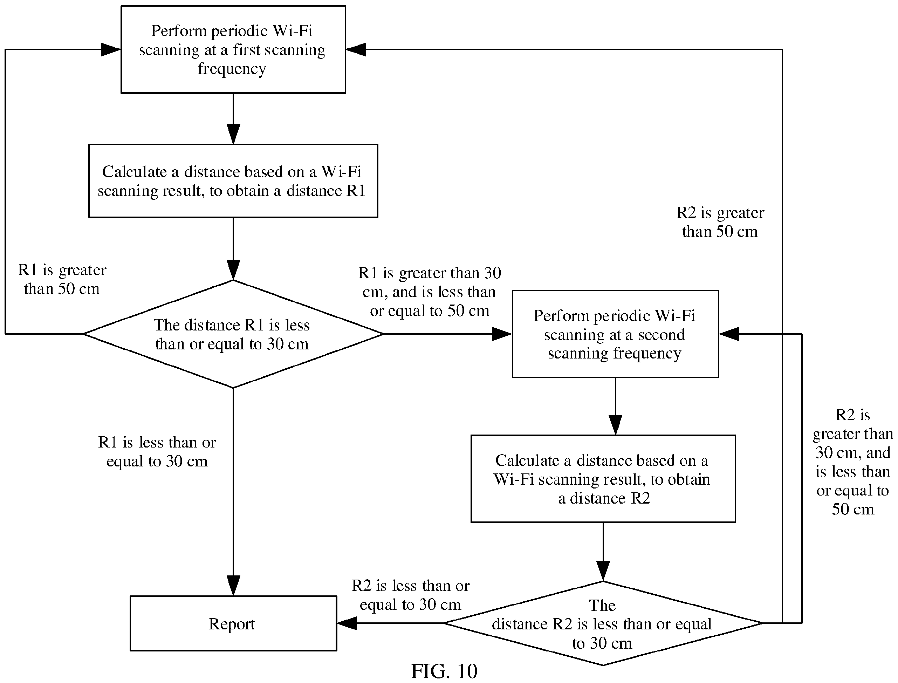

FIG. 10 is a schematic block diagram of a ranging scanning procedure according to an embodiment of this application;

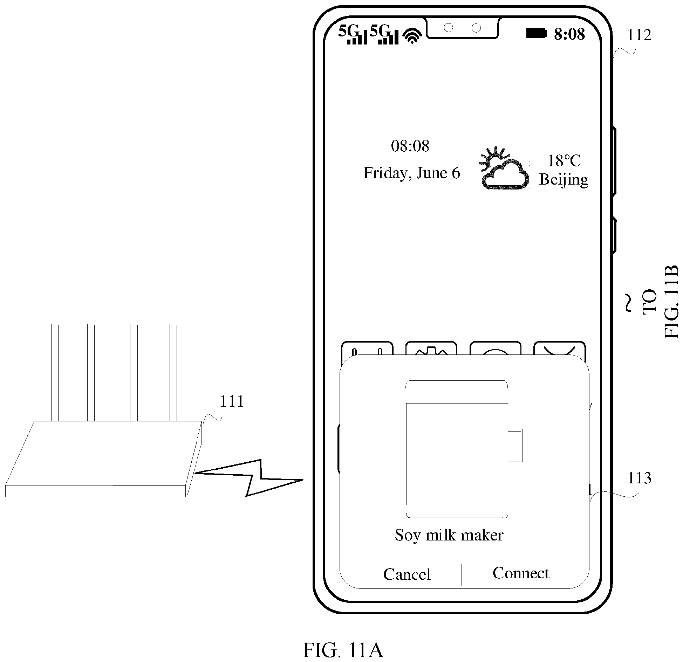

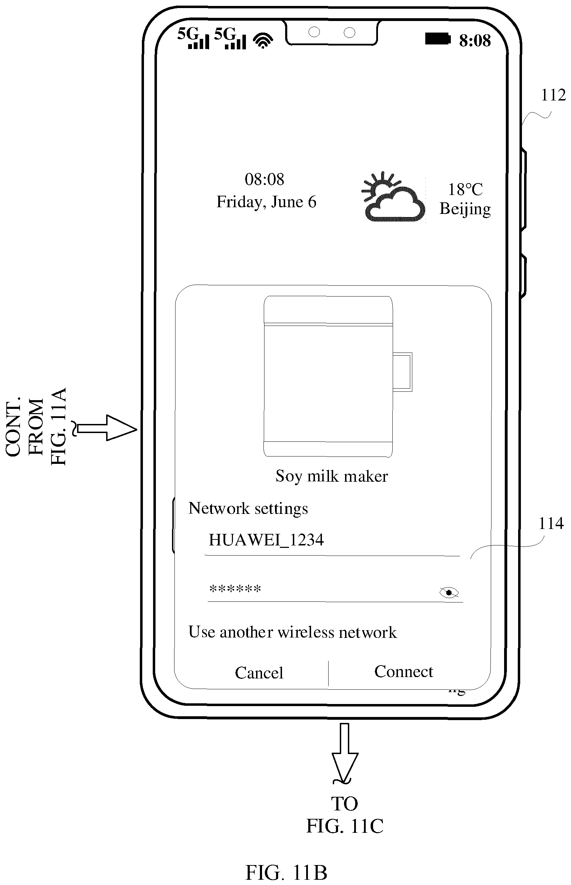

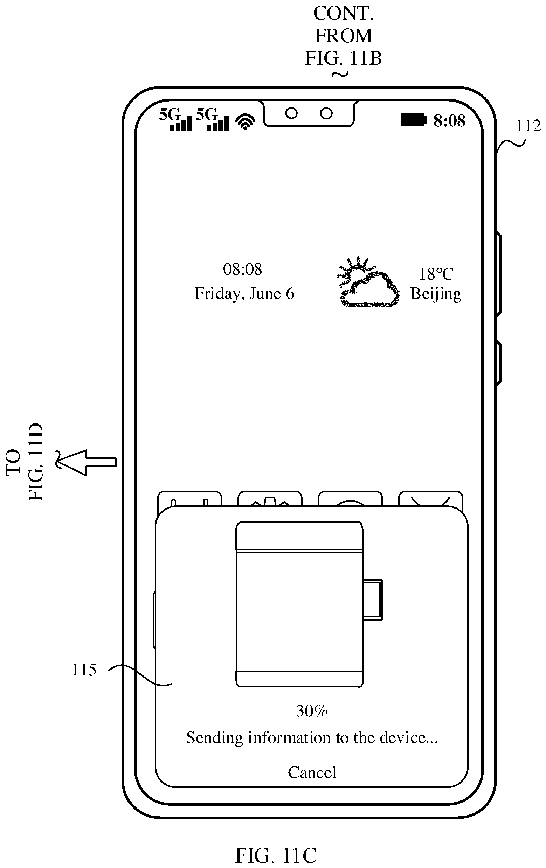

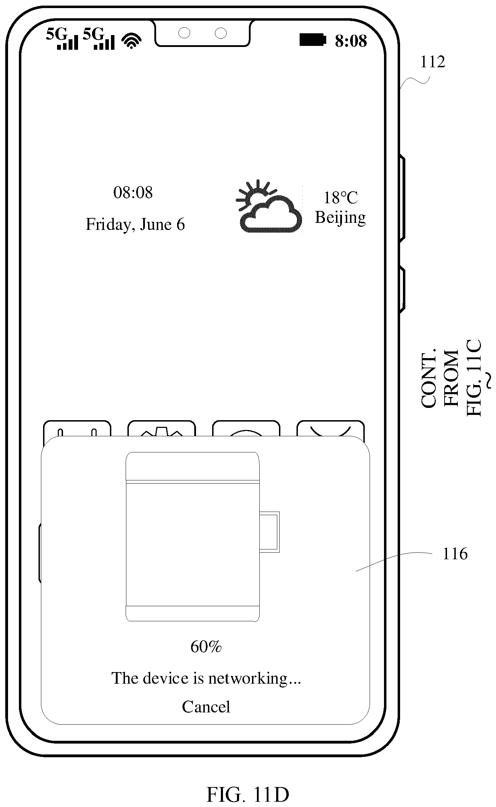

FIG. 11A to FIG. 11D are a schematic diagram of network configuration in a proximity discovery scenario according to an embodiment of this application;

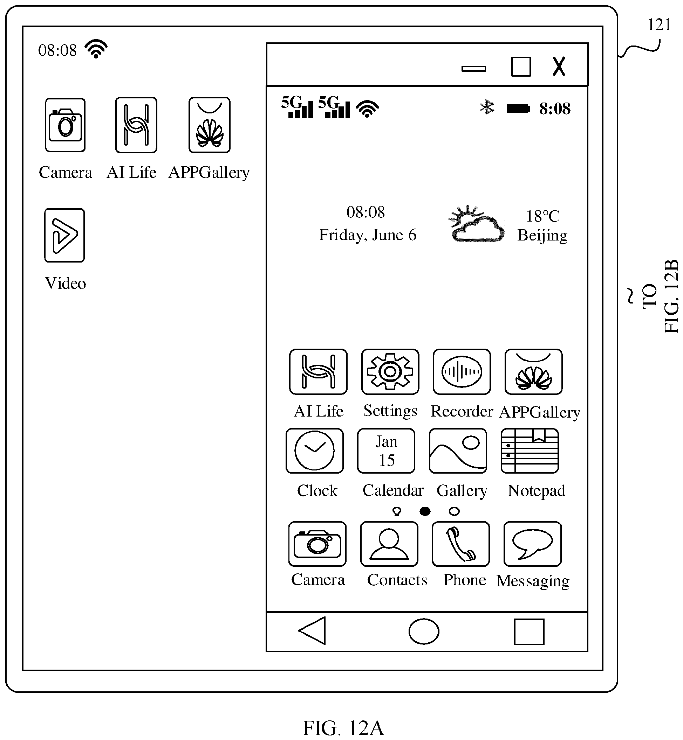

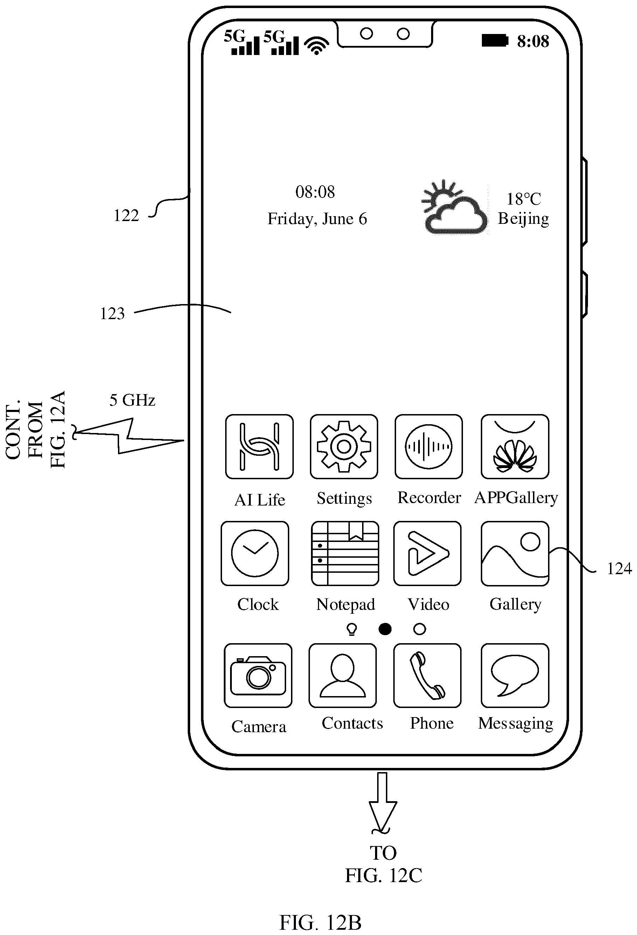

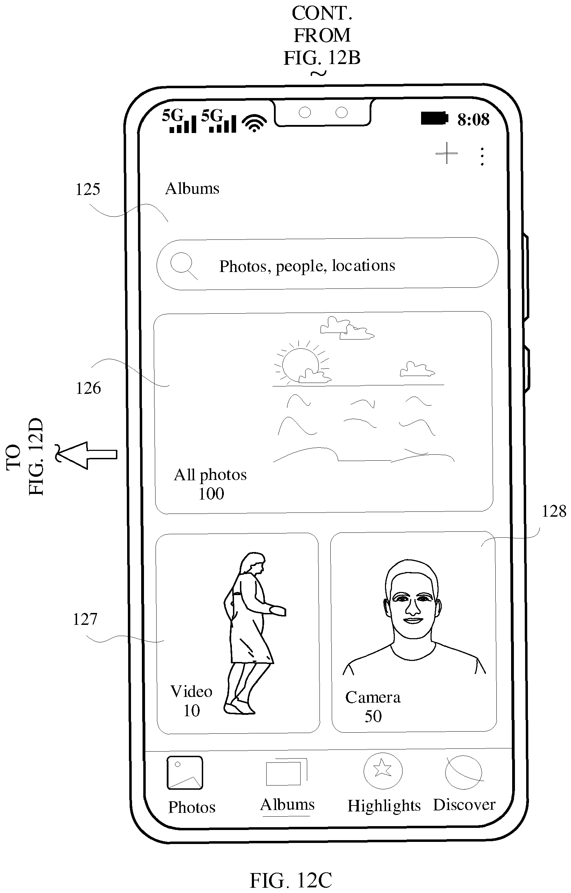

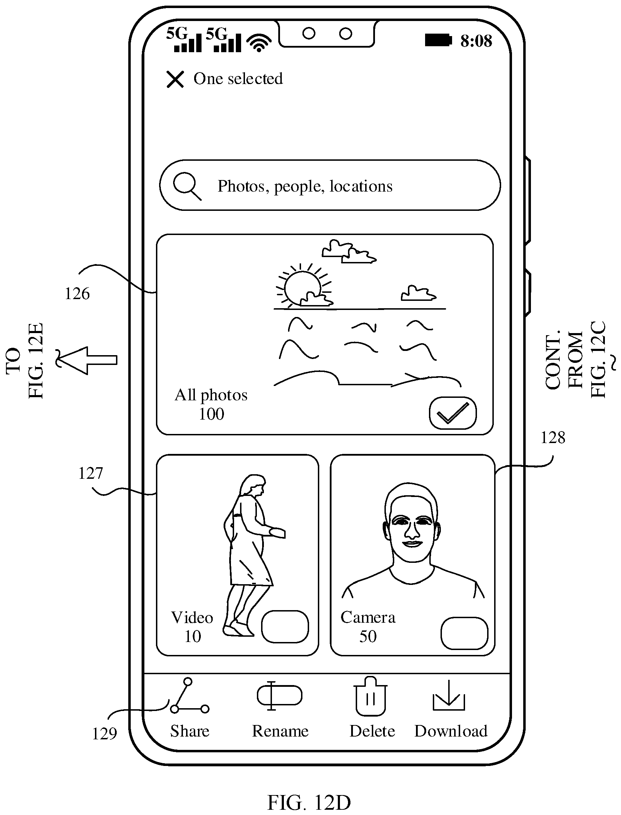

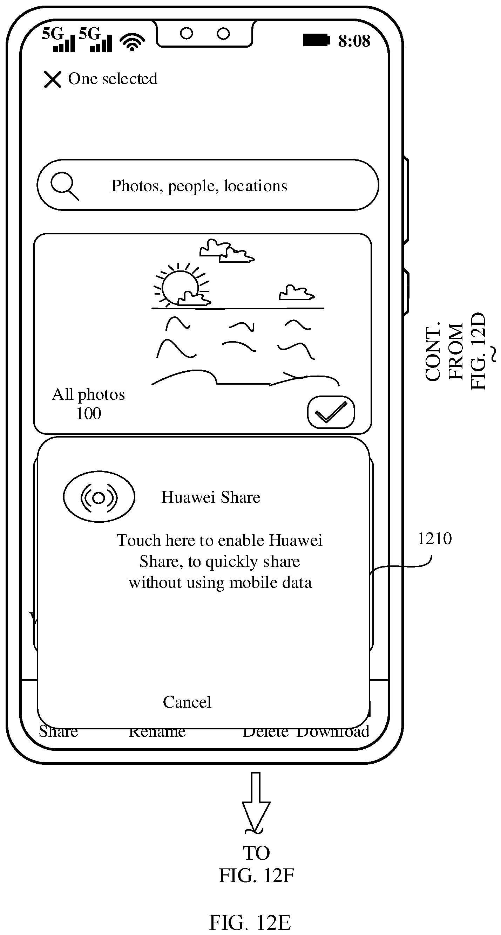

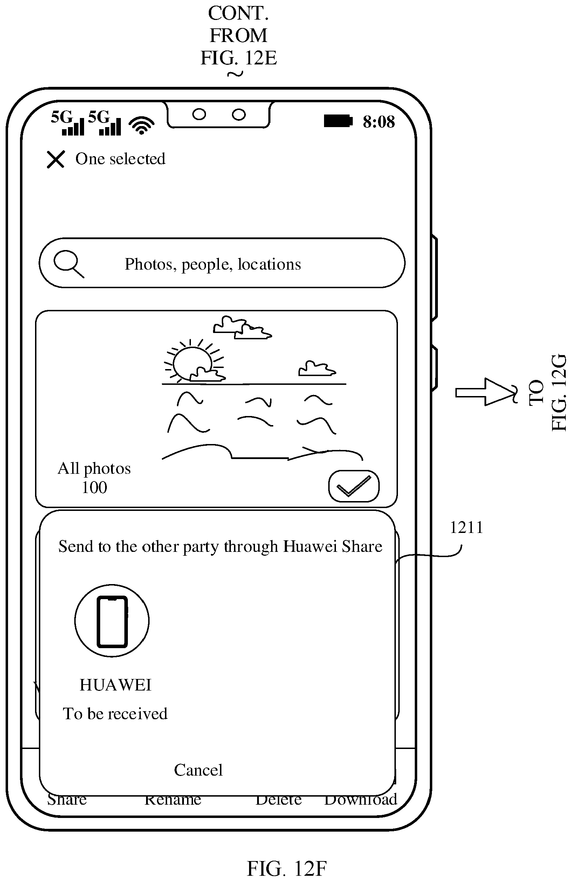

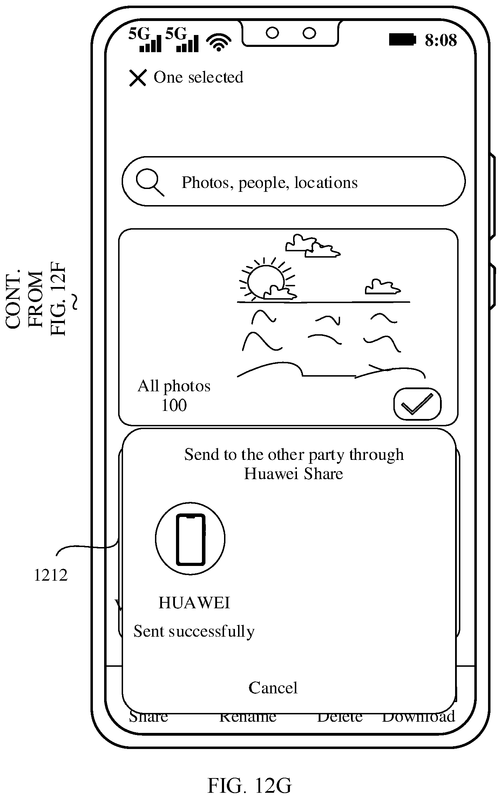

FIG. 12A to FIG. 12G are a schematic diagram of a Huawei Share scenario according to an embodiment of this application;

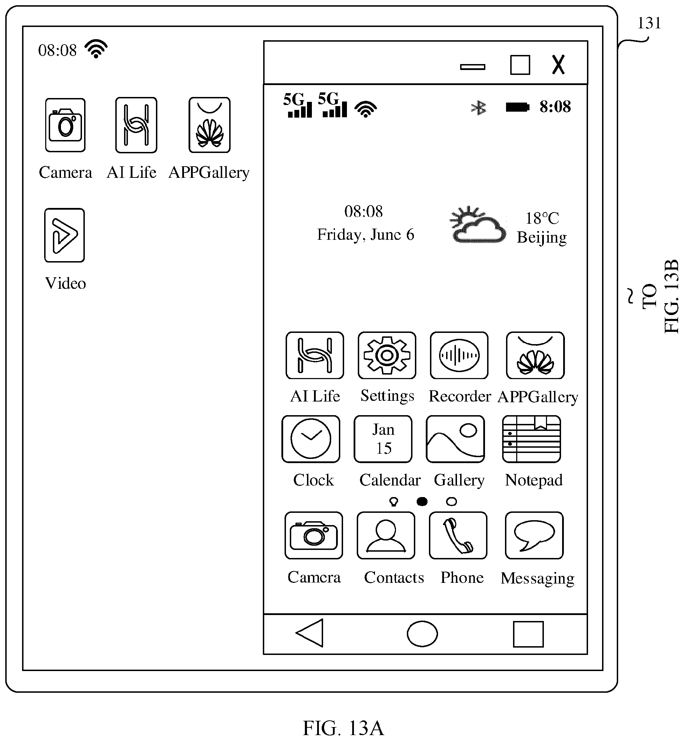

FIG. 13A to FIG. 13E are another schematic diagram of a Huawei Share scenario according to an embodiment of this application;

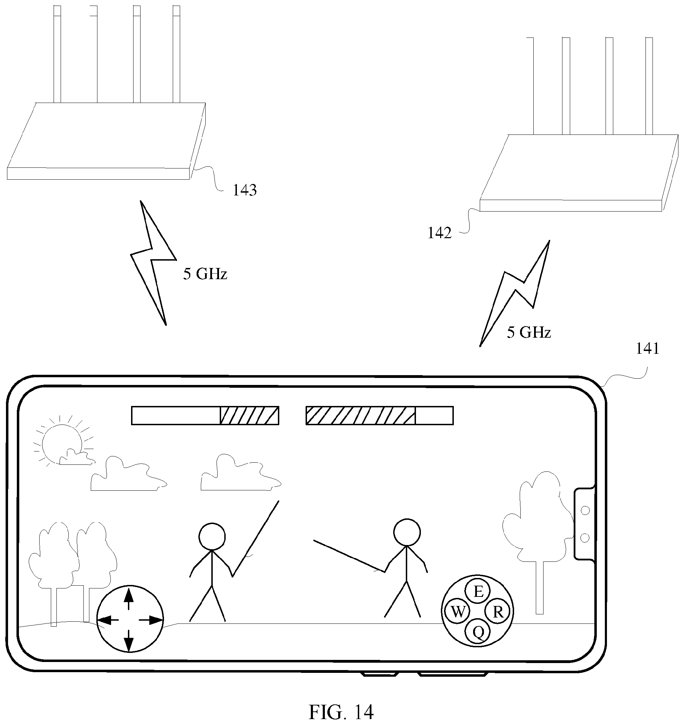

FIG. 14 is a schematic diagram of a scenario in which dual-5G band Wi-Fi is used for game service acceleration according to an embodiment of this application;

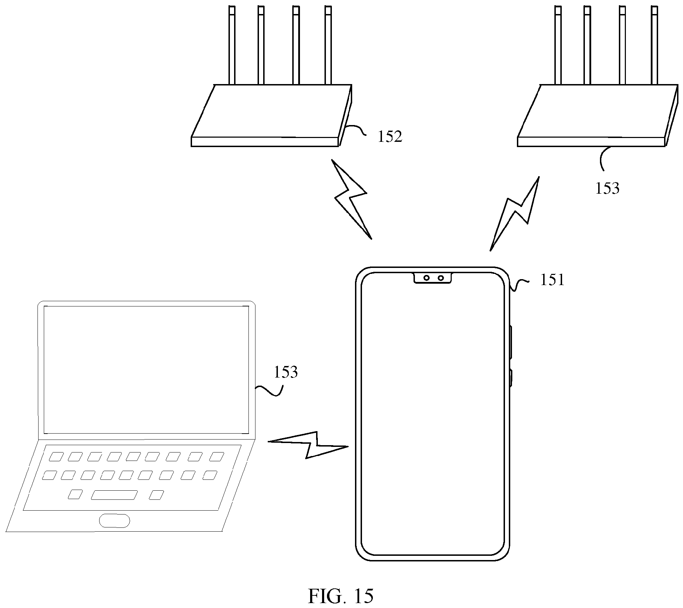

FIG. 15 is a schematic diagram of an intra-band inter-channel scenario according to an embodiment of this application;

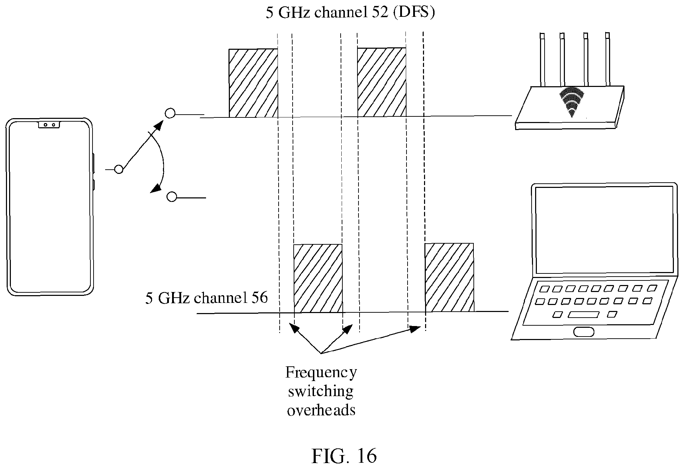

FIG. 16 is a schematic diagram of frequency switching overheads in an intra-band inter-channel scenario according to an embodiment of this application;

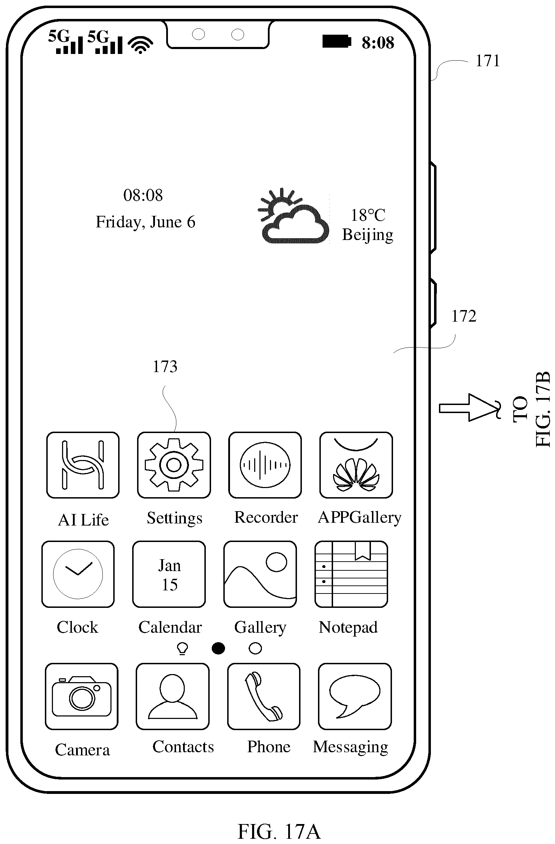

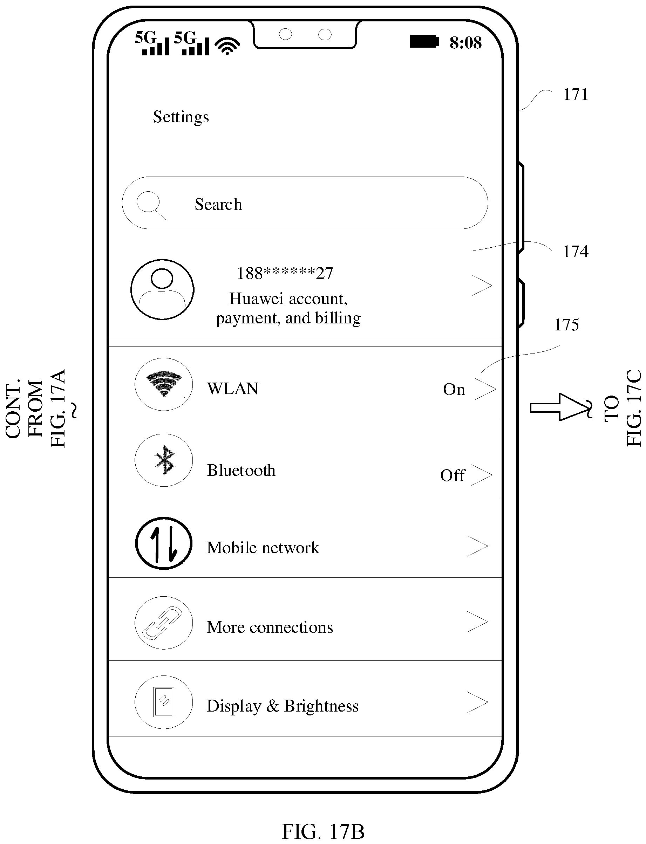

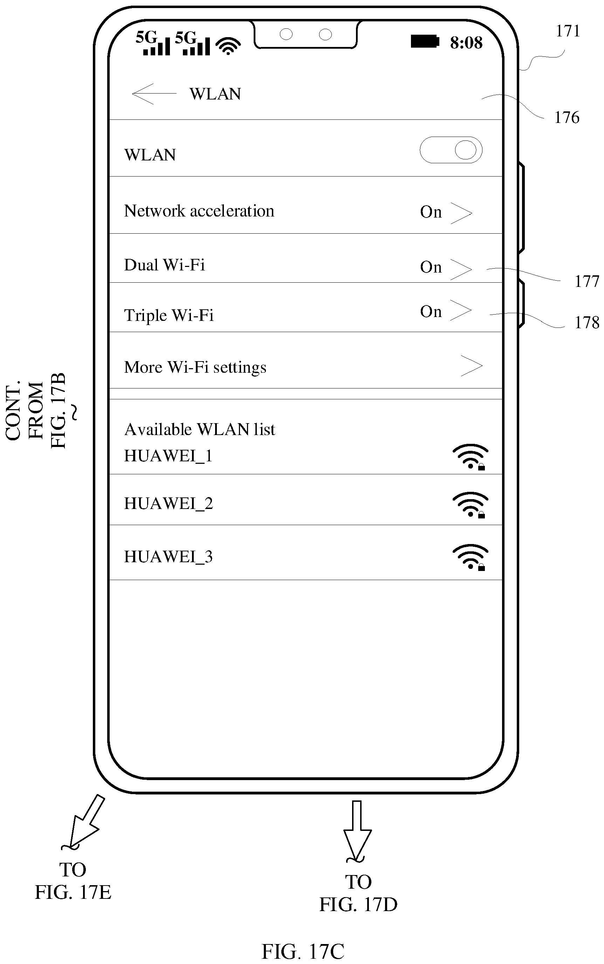

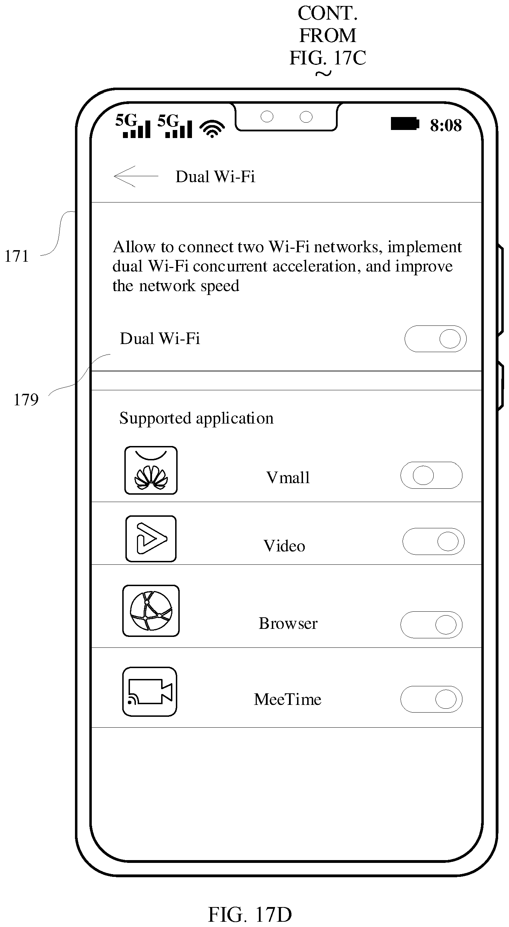

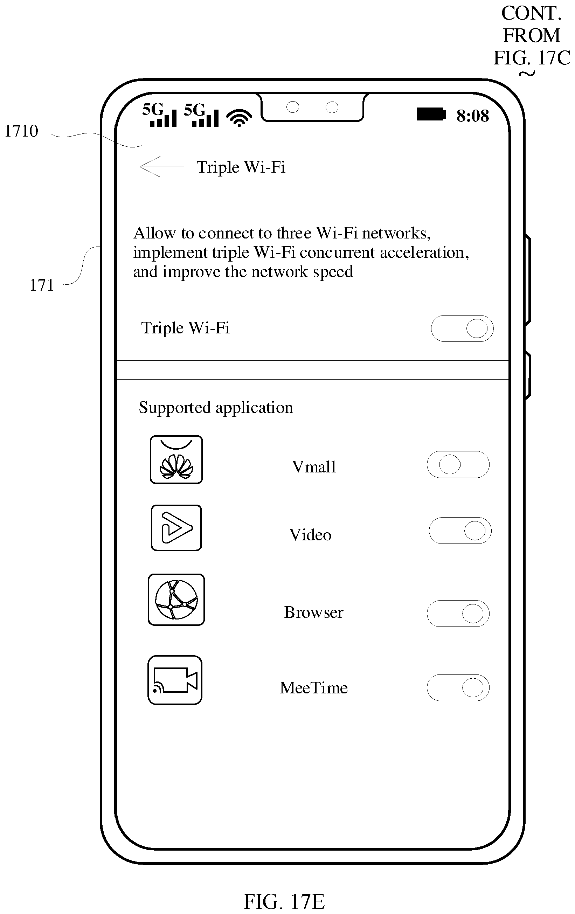

FIG. 17A to FIG. 17E are a schematic block diagram of a Wi-Fi setting interface according to an embodiment of this application;

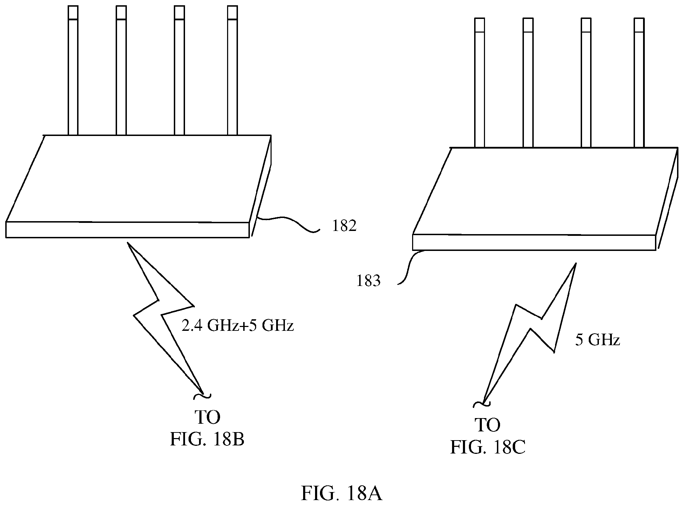

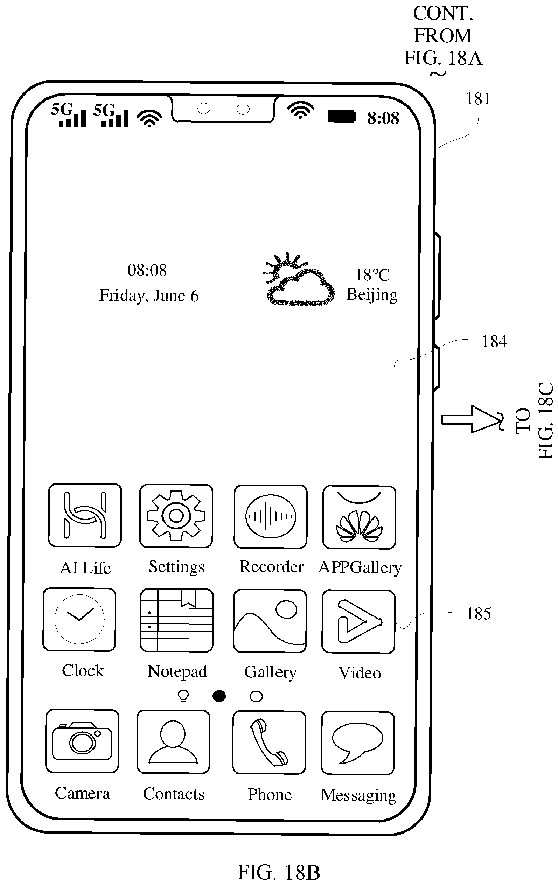

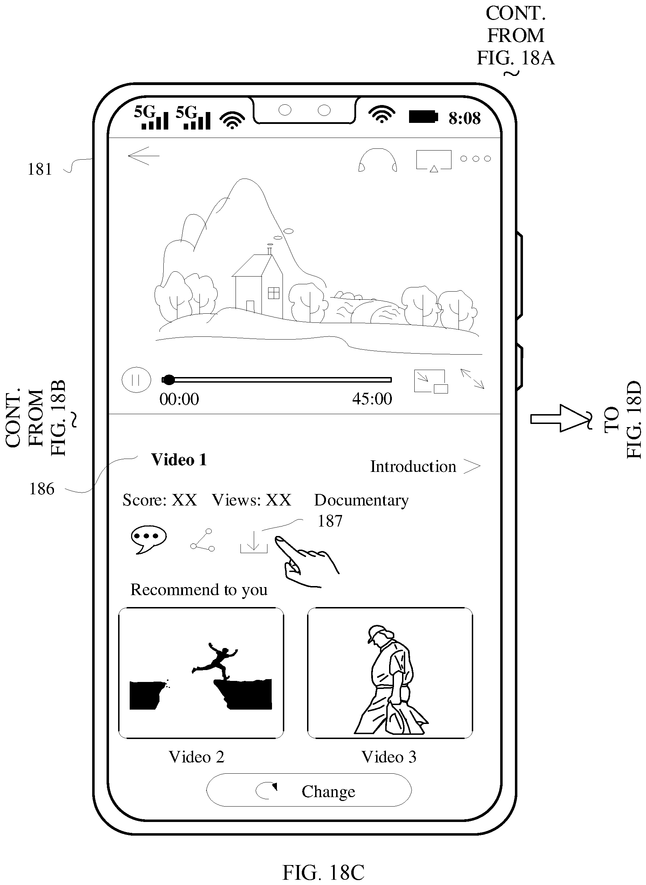

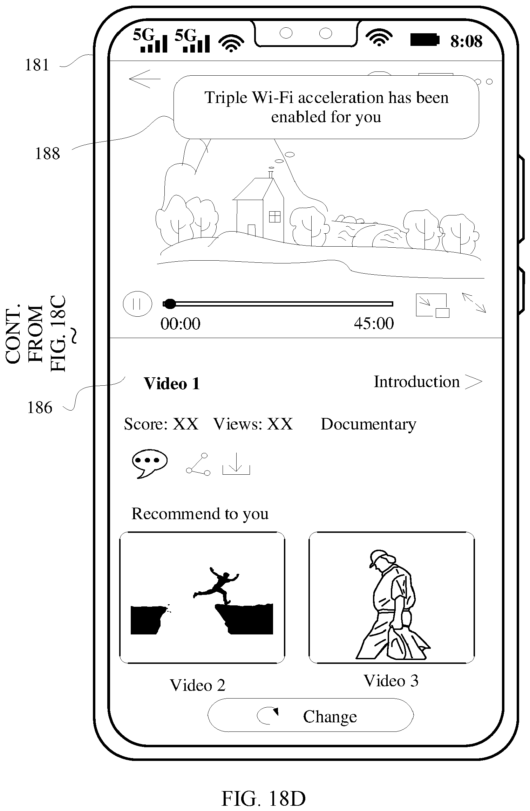

FIG. 18A to FIG. 18D are a schematic diagram of multi Wi-Fi network acceleration in a video download scenario according to an embodiment of this application;

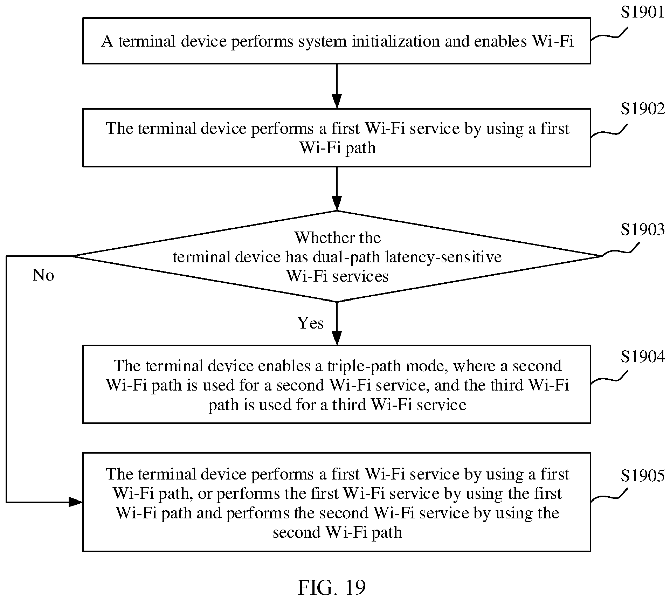

FIG. 19 is a schematic flowchart of processing a plurality of low-latency services according to an embodiment of this application;

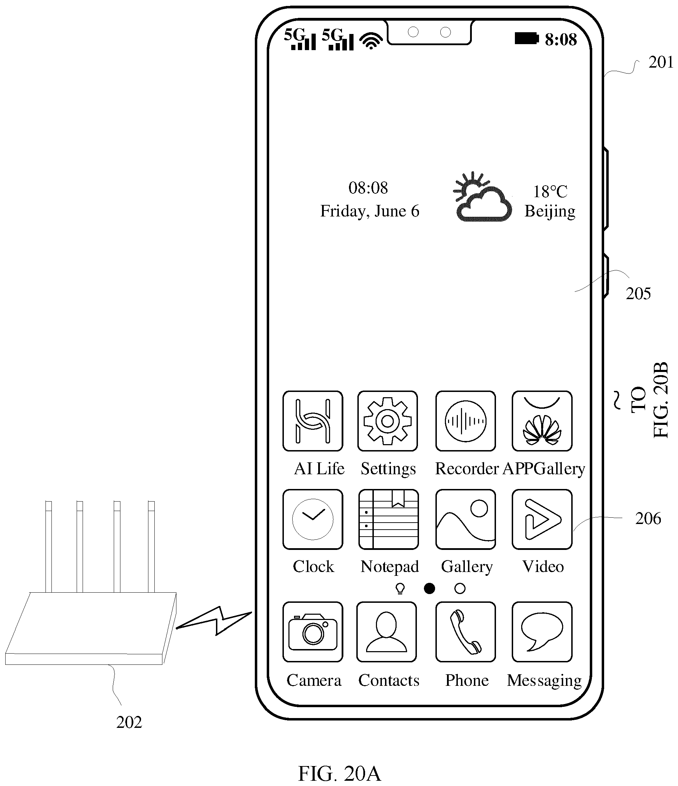

FIG. 20A to FIG. 20E are a schematic diagram of a dual-path projection scenario according to an embodiment of this application;

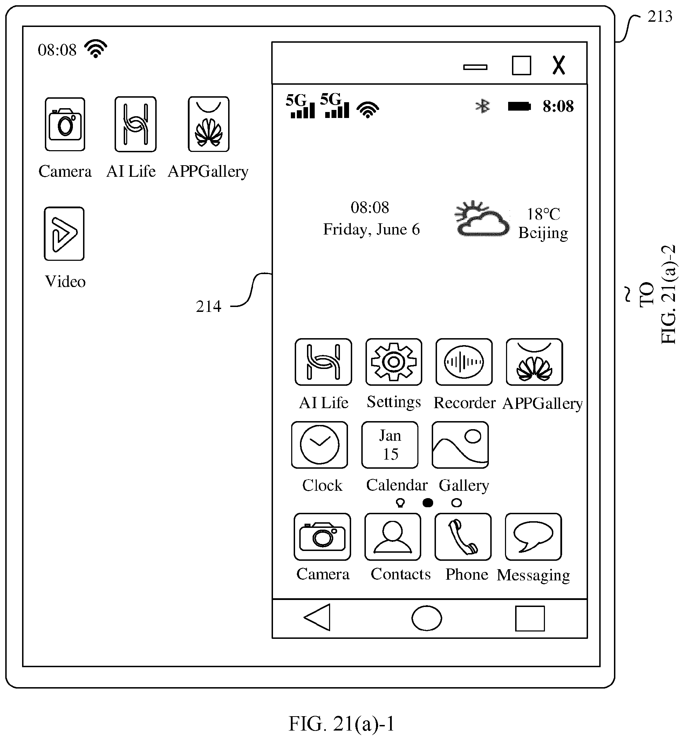

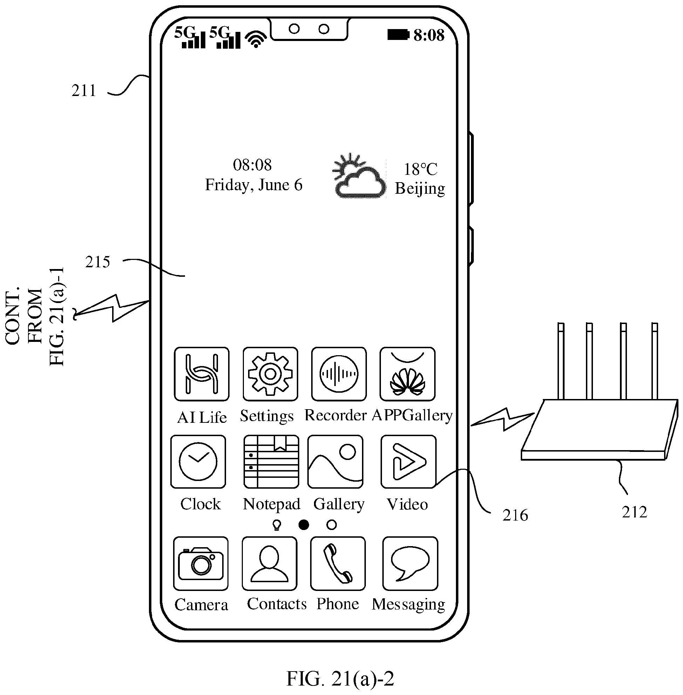

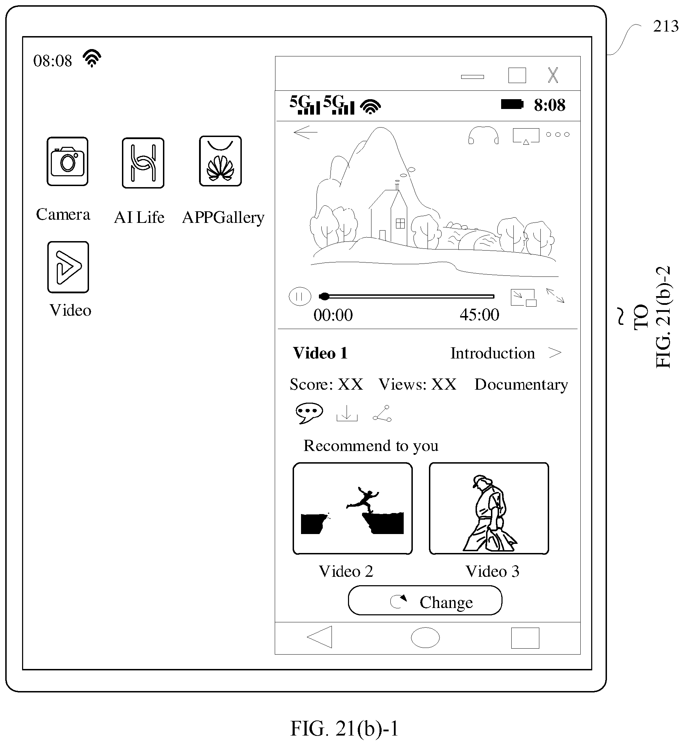

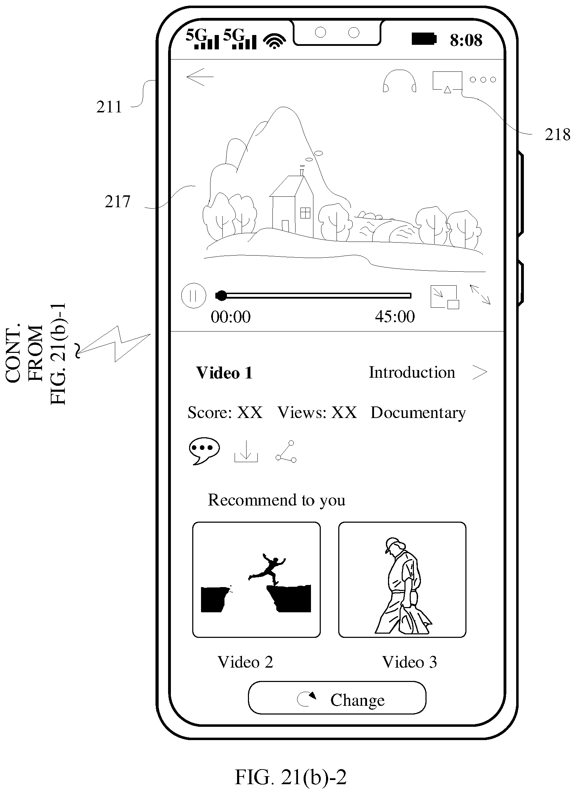

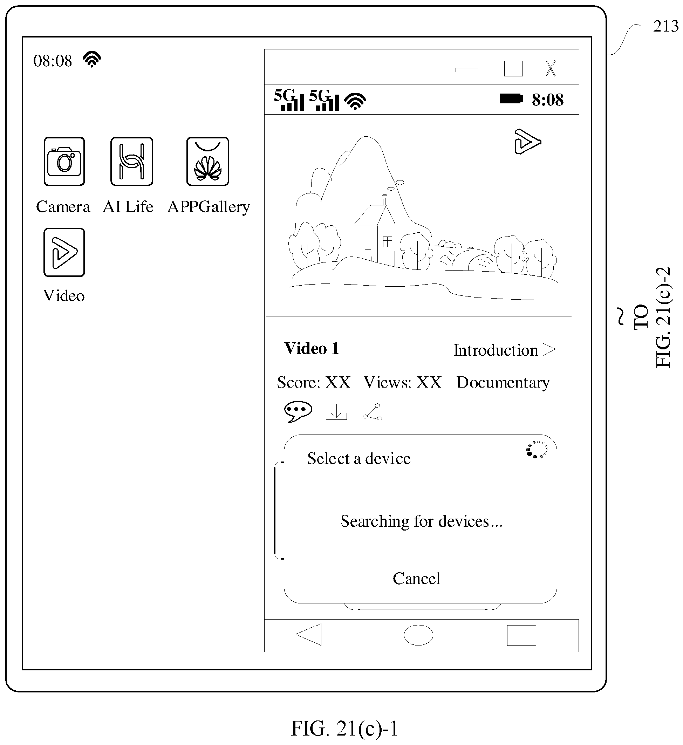

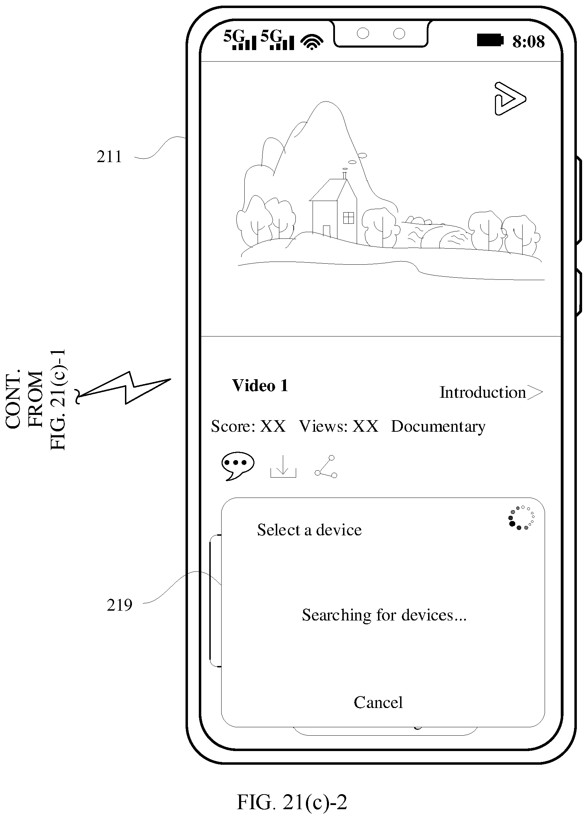

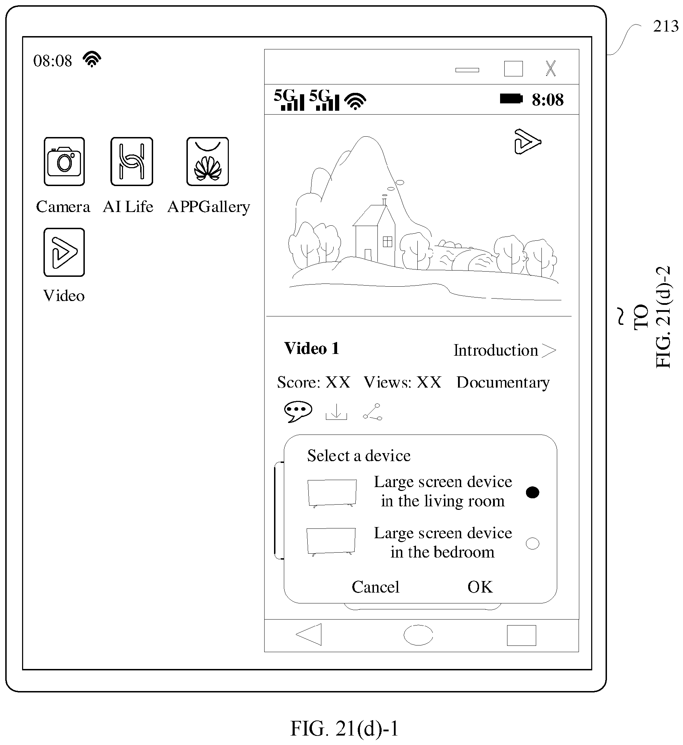

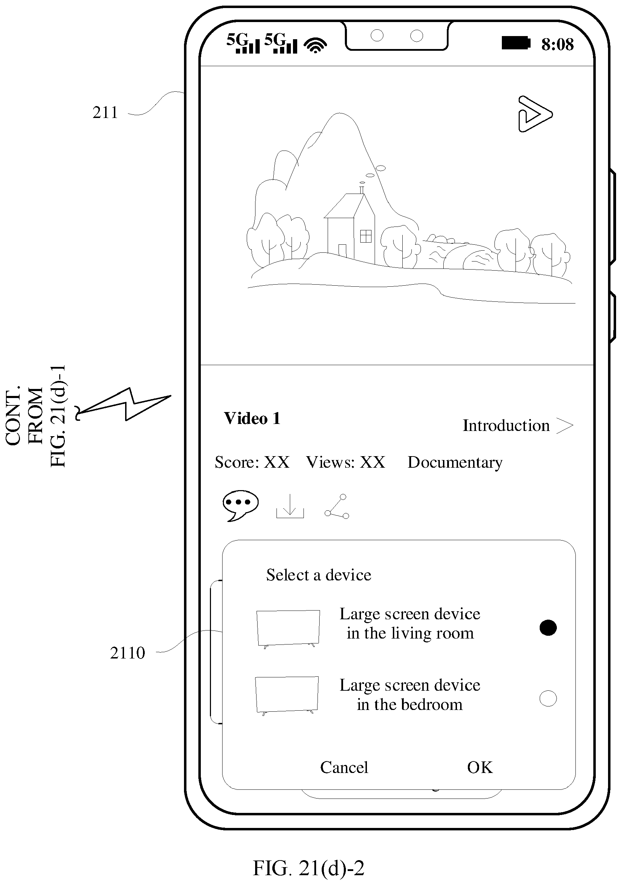

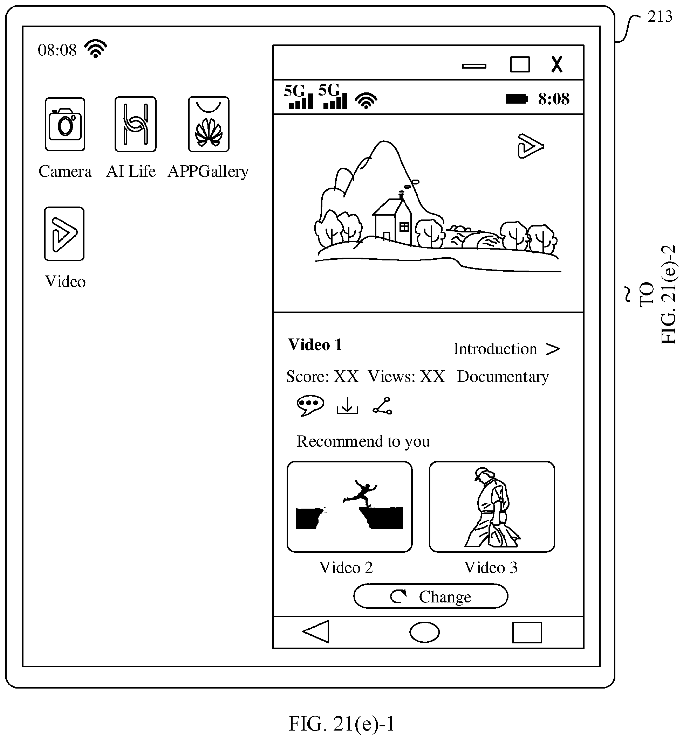

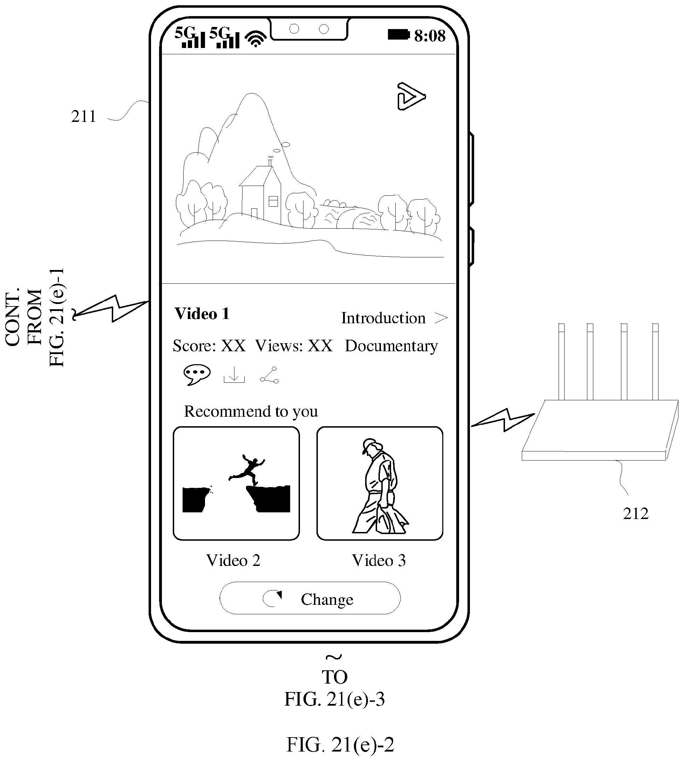

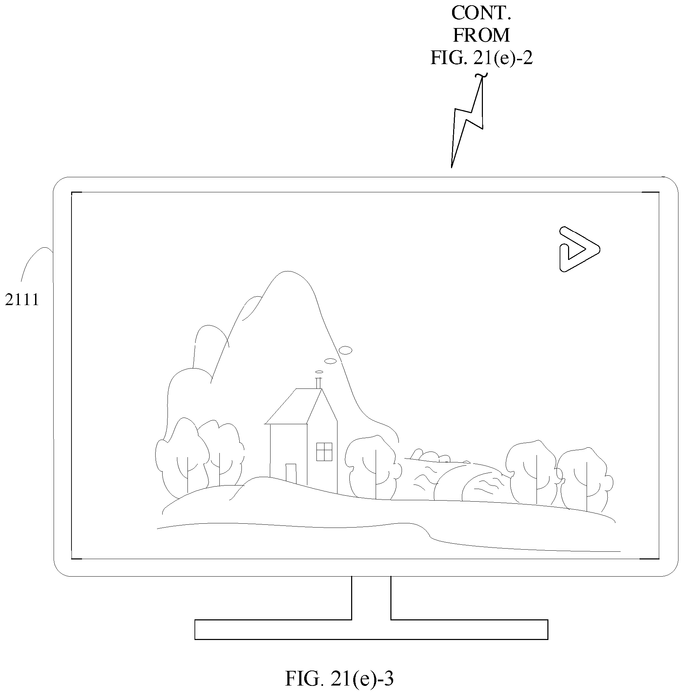

FIG. 21(a)-1 to FIG. 21(e)-3 are schematic diagrams of a scenario in which a multi-screen collaboration service and a projection service are concurrent according to an embodiment of this application;

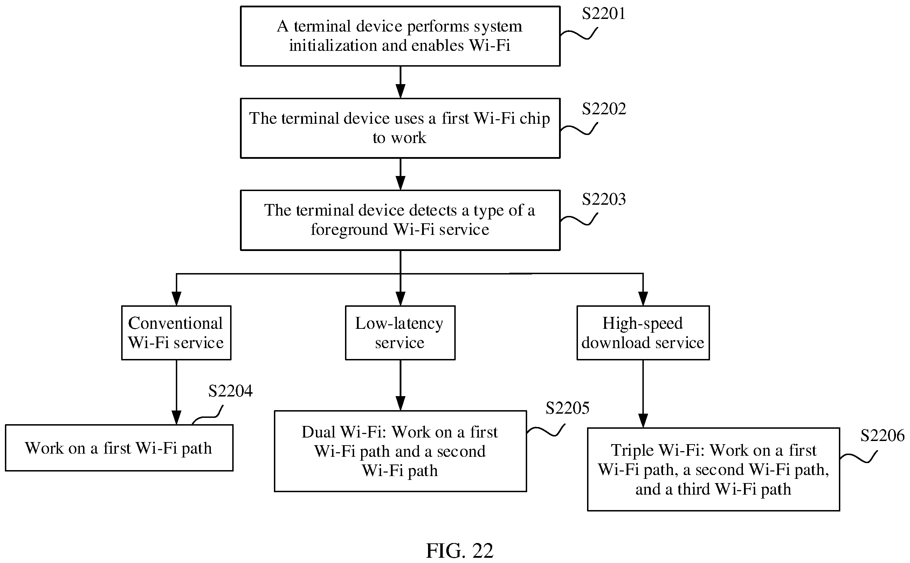

FIG. 22 is a schematic block diagram of a Wi-Fi path concurrency procedure according to an embodiment of this application;

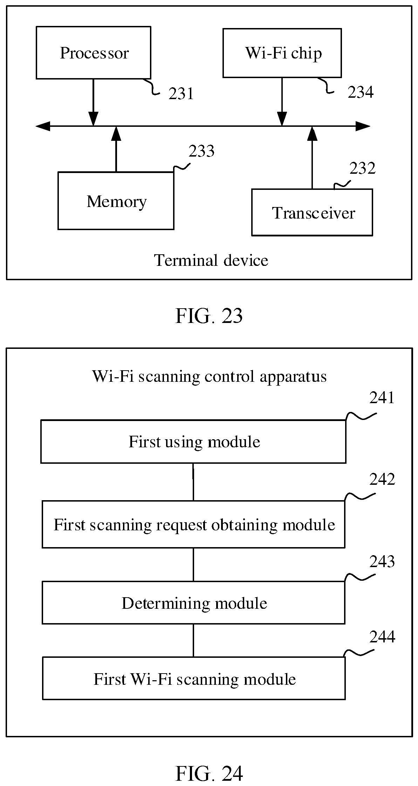

FIG. 23 is a schematic diagram of a structure of a terminal device according to an embodiment of this application; and
FIG. 24 is a schematic block diagram of a structure of a Wi-Fi scanning control apparatus according to an embodiment of this application.

### DESCRIPTION OF EMBODIMENTS

In the following description, to illustrate rather than limit, specific details such as a particular system structure and a technology are provided, to make a thorough understanding of embodiments of this application.

The following first describes related content that may be described in embodiments of this application.
(1) Wi-Fi access process: A wireless communication system includes a station (Station, STA) device and an access point (Access Point, AP) device. A working mode of a Wi-Fi module includes a STA mode and an AP mode. When the Wi-Fi module works in the STA mode, the Wi-Fi device is a STA device, and when the Wi-Fi module works in the AP mode, the Wi-Fi device is an AP device.

A process in which the STA device connects to a Wi-Fi network provided by the AP device usually includes three phases: scanning (Scanning), authentication (Authentication), and association (Association).

The STA device can obtain information about a nearby Wi-Fi hotspot through Wi-Fi scanning. According to different Wi-Fi scanning manners, Wi-Fi scanning may be further classified into active scanning and passive scanning.

The active scanning means that during scanning, the STA device actively sends a probe request (Probe Request) frame on a Wi-Fi channel and receives a probe response (Probe Response) frame sent by the AP device, to discover information about a nearby Wi-Fi hotspot. The probe response frame may include but is not limited to wireless network information such as a service set identifier (Service Set Identifier, SSID), a basic service set identifier (Basic Service Set Identifier, BSSID), and an encryption and authentication manner.

The passive scanning means that the STA device discovers information about a nearby Wi-Fi hotspot by listening to a Beacon (Beacon) frame periodically sent by the AP device. In other words, the AP device periodically broadcasts a Beacon frame on a Wi-Fi channel. The Beacon frame includes wireless network information such as an SSID, a BSSID, and an encryption and authentication manner. The STA device switches between Wi-Fi channels and listens to Beacon frames.

After obtaining the information about a nearby Wi-Fi hotspot through Wi-Fi scanning, the STA sends an authentication request to the AP based on the information. For example, a mobile phone obtains information about a nearby Wi-Fi hotspot through Wi-Fi scanning, and displays an SSID of the scanned Wi-Fi hotspot on a display. If a user needs to join a wireless network, the user may tap a corresponding SSID on the display. In response to the tap operation of the user, the mobile phone pops up a password input window. After entering information such as a password in the password input window, the user taps a connection button. In response to the operation performed by the user on the connection button, the mobile phone sends an authentication request frame to the AP device based on the information such as the password entered by the user.

After receiving an authentication request from the STA device, the AP device performs authentication based on information carried in the authentication request, obtains an authentication result, and returns the authentication result to the STA device.

After receiving the authentication result returned by the AP device, if authentication succeeds, the STA device sends an association request to the AP device. In response to the association request, the AP device sends an association response to the STA device, to notify the STA device that association succeeds. In this case, the STA device accesses the wireless network provided by the AP device.

(2) Wi-Fi direct (Wi-Fi Direct): The Wi-Fi direct is also referred to as Wi-Fi peer-to-point (Wi-Fi Peer to Peer, Wi-Fi P2P). AP2P network includes two devices: a group owner (Group Owner, GO) and a group client (Group Client, GC). The P2P network includes one GO node and at least one GC node. The GO node is similar to an AP device, and the GC node is similar to a STA device.

A process of establishing a Wi-Fi P2P connection between two P2P devices includes procedures such as P2P discovery, authentication (Authentication), and association (Association). Two P2P devices can discover each other and prepare to form a group (Group) through the P2P discovery procedure.

After the P2P discovery procedure starts, the P2P devices first enter a scanning (scan) phase. The scanning phase is similar to the foregoing wireless network scanning phase. Generally, the P2P device may send a probe request frame on each channel, to perform active scanning.

After the scanning phase is complete, the P2P devices enter a finding (Find) phase. In the finding phase, the P2P device switches between a listening (listen) state and a searching (search) state. In the listening state, the P2P device may listen to a probe request frame on a Wi-Fi channel, and reply with a probe response frame. In the searching state, the P2P device may send a probe request frame on a Wi-Fi channel.

After a nearby P2P device is discovered in the scanning phase and the finding phase, the P2P devices enter a group formation procedure, to form a P2P group. The group formation procedure includes two phases: GO negotiation and provisioning. The two P2P devices negotiate a device that is used as a GO node and a device that is used as a GC node through GO negotiation. After the GO node is determined, the two devices exchange information in the provisioning phase.

After the group formation procedure is completed, group create is performed to create a group including two P2P devices. Finally, the two P2P devices perform authentication (Authentication) and association (Association) to establish a P2P connection.

In a process of establishing a Wi-Fi P2P connection, Wi-Fi scanning is performed in both the scanning phase and the finding phase.

It should be noted that, for a Wi-Fi access process and a Wi-Fi P2P connection establishment process mentioned below, reference may be made to (1) and (2). Details are not described again.

(3) Wi-Fi channel and Wi-Fi operating band: Currently, relatively common operating bands are 2.4 GHz and 5 GHz. Therefore, 2.4 GHz and 5 GHz are used as an example for description in embodiments of this application. Certainly, the Wi-Fi operating band in embodiments of this application is not limited to 2.4 GHz and 5 GHz that are currently commonly used. For example, the Wi-Fi band in embodiments of this application may alternatively be 6 GHz in sixth generation Wi-Fi (Wi-Fi 6).

Each operating band has available Wi-Fi channels. For example, in China, there are 14 available Wi-Fi channels in the 2.4G band, which are a channel 1 to a channel 14. Available Wi-Fi channels in the 5G band include a channel 36, a channel 40, a channel 44, a channel 48, a channel 52, a channel 56, a channel 60, a channel 64, a channel 149, a channel 153, a channel 157, a channel 161, and a channel 165

A Wi-Fi device can work in both 2.4 GHz and 5 GHz bands. For example, if a Wi-Fi module of the Wi-Fi device supports dual band dual concurrent (Dual Band Dual Concurrent, DBDC), the Wi-Fi device may work in two bands at the same time. Two complete paths are integrated in the Wi-Fi device supporting DBDC, and include two complete baseband processors and two radio frequency front-ends.

A dual-band dual concurrent AP device may simultaneously send 2.4 GHz and 5 GHz network signals, that is, provide two Wi-Fi networks. One Wi-Fi network is in the 2.4G band, and the other Wi-Fi network is in the 5G band.

The STA device supporting DBDC may be connected to a 2.4G band Wi-Fi network and a 5G band Wi-Fi network at the same time. The two Wi-Fi networks may be provided by a same AP device, or may be provided by two AP devices. For example, a mobile phone supporting DBDC may be connected to both a 2.4G band Wi-Fi network and a 5G band Wi-Fi network of a wireless router A, or may be separately connected to the 2.4G band Wi-Fi network of the wireless router A and a 5G band Wi-Fi network of a wireless router B.

Similarly, a P2P device supporting DBDC may have both a 5G band P2P connection and a 2.4G band P2P connection.

The Wi-Fi device may alternatively work in only one band at a time, that is, can work only in the 2.4G band or the 5G band at a time. For example, a dual-band wireless router A works in both the 2.4G band and the 5G band, and provides a 2.4G band Wi-Fi network and a 5G band Wi-Fi network. A Wi-Fi module of the mobile phone can work in only one band. Therefore, the mobile phone can be connected to only the 2.4G band Wi-Fi network or the 5G band Wi-Fi network, but cannot connect to Wi-Fi networks in both bands at the same time.

After related content that may be described in embodiments of this application is briefly described, the following describes factors that affect performance of a Wi-Fi service.

Currently, a terminal device usually has only one conventional Wi-Fi chip, and the terminal device can provide only one concurrent Wi-Fi path. Because the terminal device can provide only one concurrent Wi-Fi path, when the terminal device runs a Wi-Fi service, if the terminal device further performs Wi-Fi scanning, Wi-Fi scanning affects performance of the currently running Wi-Fi service.

Specifically, the Wi-Fi service and Wi-Fi scanning use the same Wi-Fi path, and only Wi-Fi scanning or the Wi-Fi service can be performed on the Wi-Fi path at a time. When Wi-Fi scanning and the Wi-Fi service are concurrent, a working slot originally belonging to the Wi-Fi service may be used as a Wi-Fi scanning slot. That is, the Wi-Fi scanning slot may occupy the working slot originally belonging to the Wi-Fi service. This increases a latency of the Wi-Fi service, and affects service performance such as real-time performance of the Wi-Fi service.

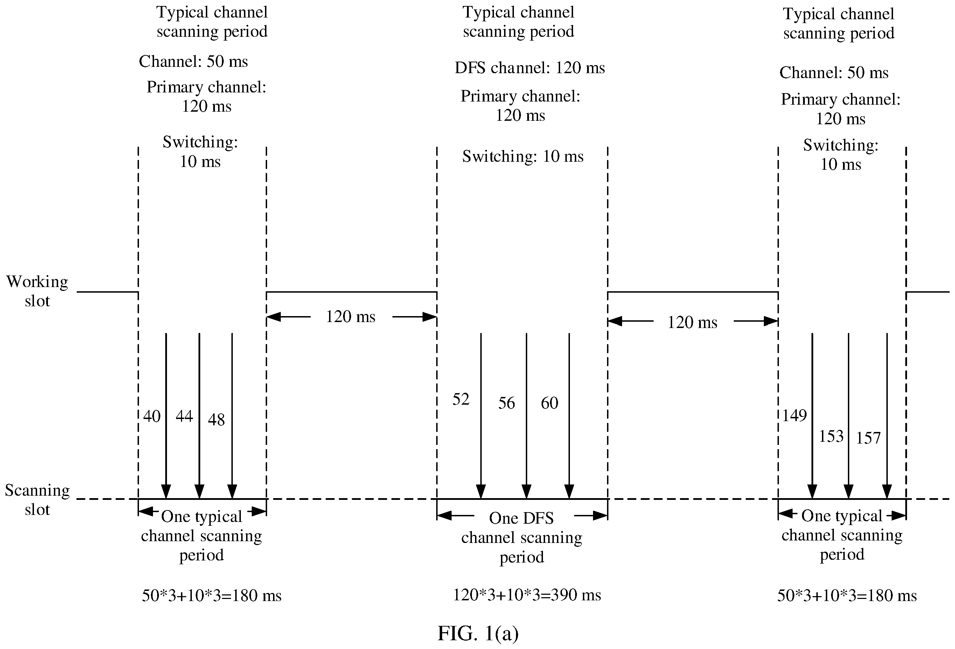

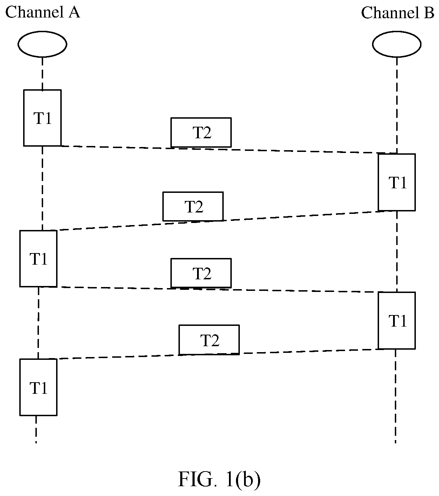

For example, the Wi-Fi service running on the terminal device is a projection service. That is, the terminal device has established a Wi-Fi P2P connection to a projection peer end, and performs the projection service by using the Wi-Fi P2P connection. In this case, the projection service is running, and the Wi-Fi path is in a working slot of the Wi-Fi service. After the terminal device obtains a Wi-Fi background scanning request, in response to the Wi-Fi scanning request, the terminal device periodically performs Wi-Fi background scanning (background_scan) by using the Wi-Fi path. That is, the Wi-Fi path periodically switches between a working slot and a Wi-Fi scanning slot. For details, refer to FIG. 1(a) and FIG. 1(b).

FIG. 1(a) is a schematic diagram of a Wi-Fi scanning slot and a Wi-Fi service working slot in a same Wi-Fi path according to an embodiment of this application. As shown in FIG. 1(a), the Wi-Fi path switches between the working slot and the scanning slot from left to right according to a time sequence. In the first working slot of the Wi-Fi service from left to right, the terminal device works on a primary channel (that is, a projection channel). That is, the terminal device performs the projection service by using the primary channel. After working on the primary channel for 120 ms, the terminal device enters the first Wi-Fi scanning slot. In the first Wi-Fi scanning slot, the terminal device scans a channel 40, a channel 44, and a channel 48, and scanning of each channel takes 50 ms. The terminal device first switches from the primary channel to the channel 40, and scans the channel 40; then switches from the channel 40 to the channel 44, and scans the channel 44; and then switches from the channel 44 to the channel 48, and scans the channel 48. It is assumed that time consumed for scanning the primary channel is 120 ms, and time consumed for channel switching is 10 ms. It may be determined that the first scanning slot is 180 ms. That is, a typical channel scanning time is 180 ms.

After scanning the channel 48, the terminal device switches from the channel 48 to the primary channel, enters the second Wi-Fi service working slot, and performs the projection service by using the primary channel. After working on the primary channel for 120 ms, the terminal device enters the second Wi-Fi scanning slot. In the second Wi-Fi scanning slot, the terminal device scans a DFS (Dynamic Frequency Selection) channel by using the Wi-Fi path. The DFS channel is a channel on which radar signals need to be proactively detected before being used. The terminal device first switches from the primary channel to a channel 52, then switches to a channel 56, then switches from the channel 56 to a channel 60, and performs DFS channel scanning on the channel 52, the channel 56, and the channel 60. Scanning of each DFS channel takes 120 ms. It can be learned that DFS channel scanning takes 390 ms.

After scanning the channel 60, the terminal device enters the third Wi-Fi service working slot, switches from the channel 60 to the primary channel, and performs the projection service on the primary channel. After working on the primary channel for 120 ms, the terminal device enters the third scanning slot. In the third Wi-Fi scanning slot, the terminal device first switches from the primary channel to a channel 149, scans the channel 149 and then switches to a channel 153, and scans the channel 153 and then switches to a channel 157. Same as the first Wi-Fi scanning slot, the third Wi-Fi scanning slot takes 180 ms.

After scanning the channel 147, the terminal device switches to the primary channel, and performs the projection service on the primary channel.

It can be learned from FIG. 1(a) that Wi-Fi background scanning needs to occupy a slot of a Wi-Fi path. As a result, projection data cannot be transmitted in a timely manner through the Wi-Fi path. Consequently, a case such as frame freezing or frame loss occurs in the projection service, and performance of the projection service is affected.

In addition, it may also be learned from FIG. 1(a) that the terminal device needs to perform channel switching when performing Wi-Fi scanning. Channel switching causes switching overheads, and affects real-time performance of the Wi-Fi service. Refer to a schematic diagram of a time-sharing model shown in FIG. 1(b). The terminal device switches between a channel A and a channel B, a switching time is T2, and T2=2 ms. That is, switching from the channel A to the channel B or switching from the channel B to the channel A takes 2 ms. An example of working time of the terminal device on the channel A or the channel B may be 25 ms, 50 ms, or 75 ms.

In addition to the background scanning shown in FIG. 1(a), a Wi-Fi scanning type may further include but is not limited to Wi-Fi scanning initiated by a third-party application, setting scanning, Wi-Fi scanning triggered by a user, and the like. In addition, a type of the Wi-Fi service currently running on the terminal device may be any service, and the Wi-Fi service may be a Wi-Fi service running in the foreground, or may be a Wi-Fi service running in the background. A manner of initiating Wi-Fi scanning and an objective of Wi-Fi scanning are not limited herein, and a type of a Wi-Fi service currently running on the terminal device is not limited herein.

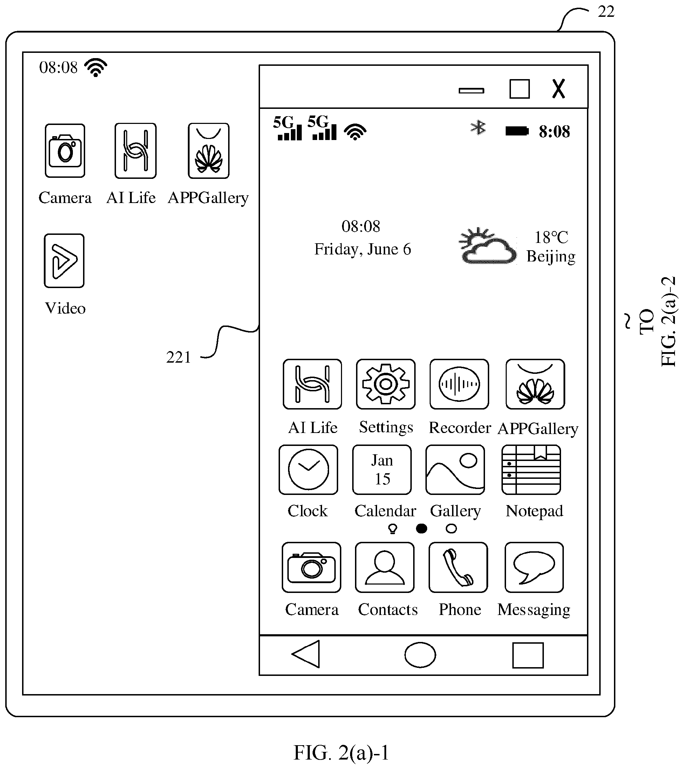

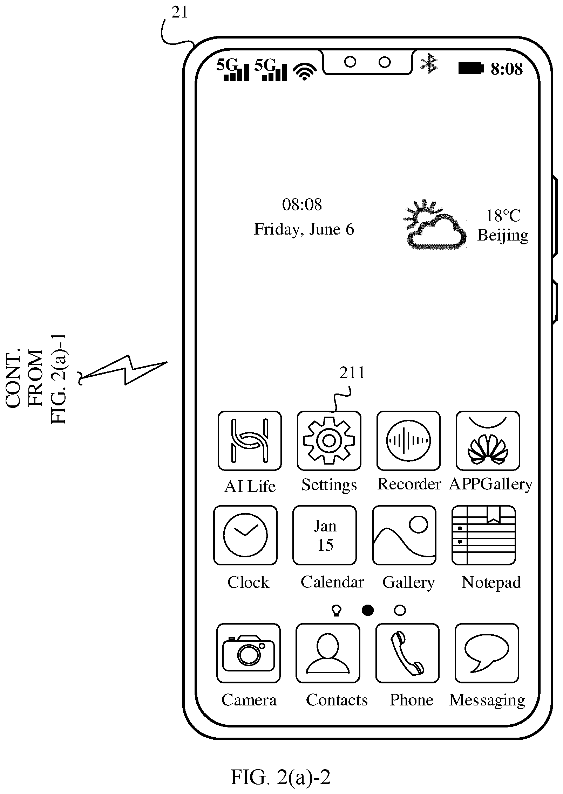

With reference to FIG. 2(a)-1 to FIG. 2(d)-2, the following describes several triggering manners of Wi-Fi scanning when a Wi-Fi service is running on the terminal device.

FIG. 2(a)-1 to FIG. 2(d)-2 are schematic diagrams of Wi-Fi scanning in a multi-screen collaboration scenario according to an embodiment of this application. As shown in FIG. 2(a)-1 and FIG. 2(a)-2, a mobile phone 21 and a large screen device 22 establish a Wi-Fi P2P connection, and implement a multi-screen collaboration function based on the Wi-Fi P2P connection. For a process in which the mobile phone 21 and the large screen device 22 establish the Wi-Fi P2P connection, refer to the foregoing description. Details are not described herein again.

In this case, the mobile phone 21 displays a home screen, and the home screen includes applications such as AI Life, Settings 211, Recorder, Application mall, Clock, Calendar, Gallery, and Notepad. The large screen device 22 may be a notebook computer, a tablet computer, or a smart screen. A multi-screen collaboration window 221 on the large screen device 22 synchronously displays the same content as a screen of the mobile phone.

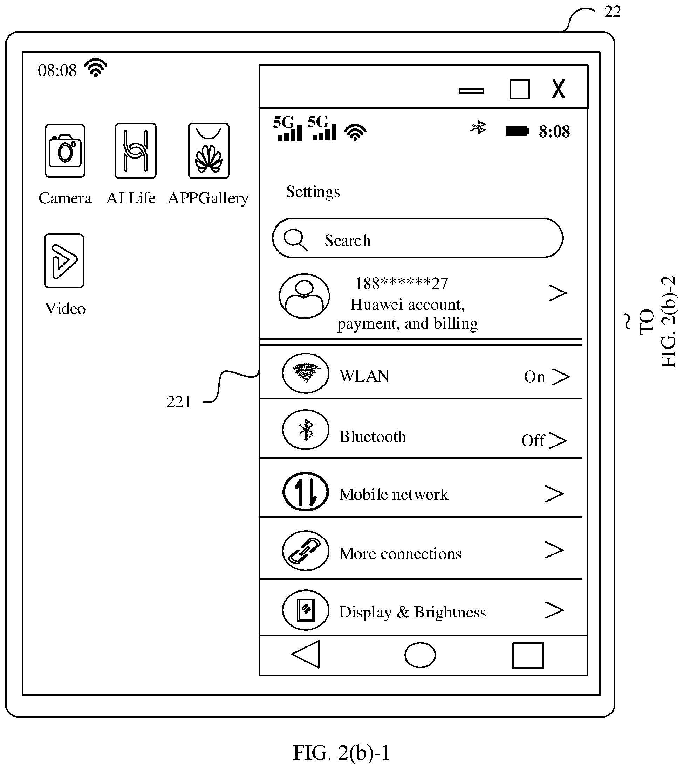

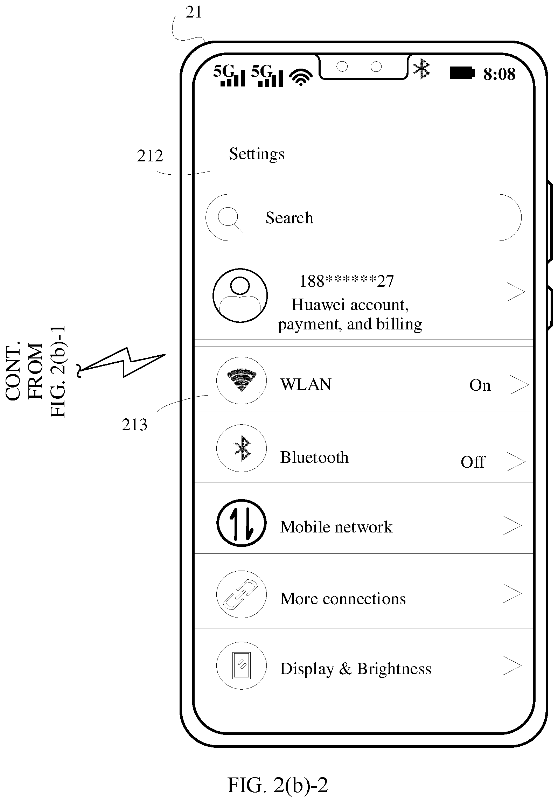

A user may tap the Settings 211, to enter a setting interface 212. As shown in FIG. 2(b)-1 and FIG. 2(b)-2, in response to the tap operation on the Settings 211, the mobile phone 21 displays the setting interface 212. The setting interface 212 includes setting items such as WLAN 213, Bluetooth, mobile network, more connections, and display and brightness. In this case, the multi-screen collaboration window 221 on the large screen device 22 changes as content displayed on the mobile phone 21 changes.

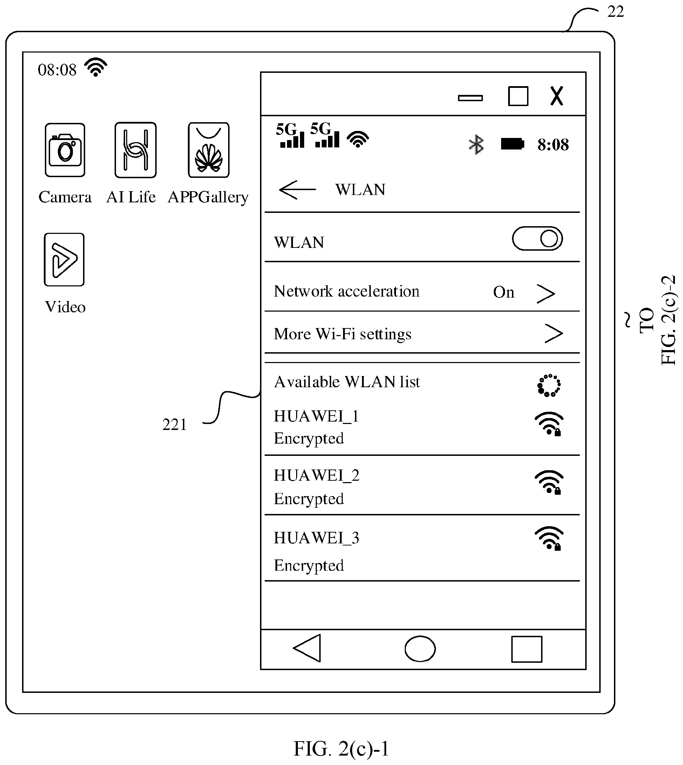

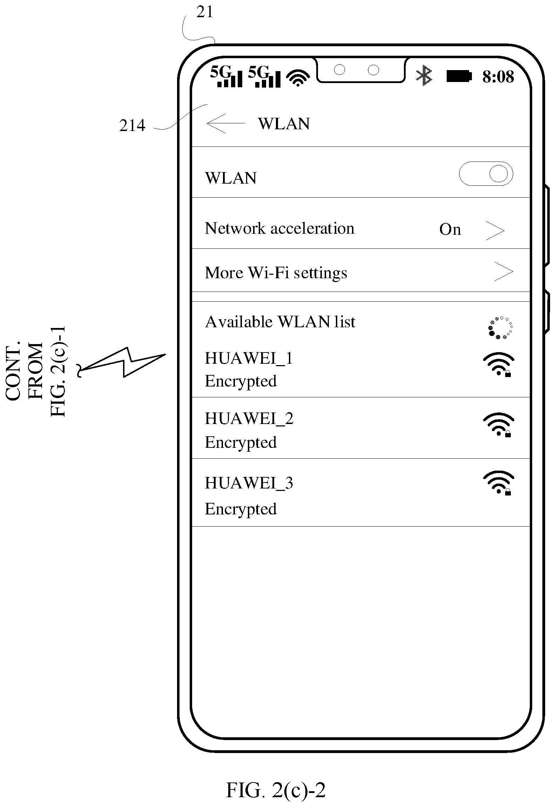

The user may tap the WLAN 213 in the setting interface 212 to enter a setting interface 214. As shown in FIG. 2(c)-1 and FIG. 2(c)-2, in response to the tap operation on the WLAN 213, the mobile phone 21 displays the setting interface 214. In addition, the multi-screen collaboration window 221 on the large screen device 22 also displays the setting interface.

After entering the setting interface, the mobile phone 21 initiates setting scanning at intervals of a preset time period, that is, performs Wi-Fi scanning by using a Wi-Fi path, to obtain nearby Wi-Fi hotspot information, and displays scanned Wi-Fi hotspot information in an available WLAN list. The Wi-Fi hotspot information in the available WLAN list is updated through periodic setting scanning.

The mobile phone 21 is integrated with only a single conventional Wi-Fi chip, and a currently running Wi-Fi service is a multi-screen collaboration service. That is, a Wi-Fi path is occupied by the multi-screen collaboration service. When the mobile phone 21 performs setting scanning, the Wi-Fi path needs to be occupied, so that multi-screen collaboration data cannot be transmitted to the large screen device 22 in a timely manner. This increases a latency of the multi-screen collaboration service, and affects performance of the multi-screen collaboration service.

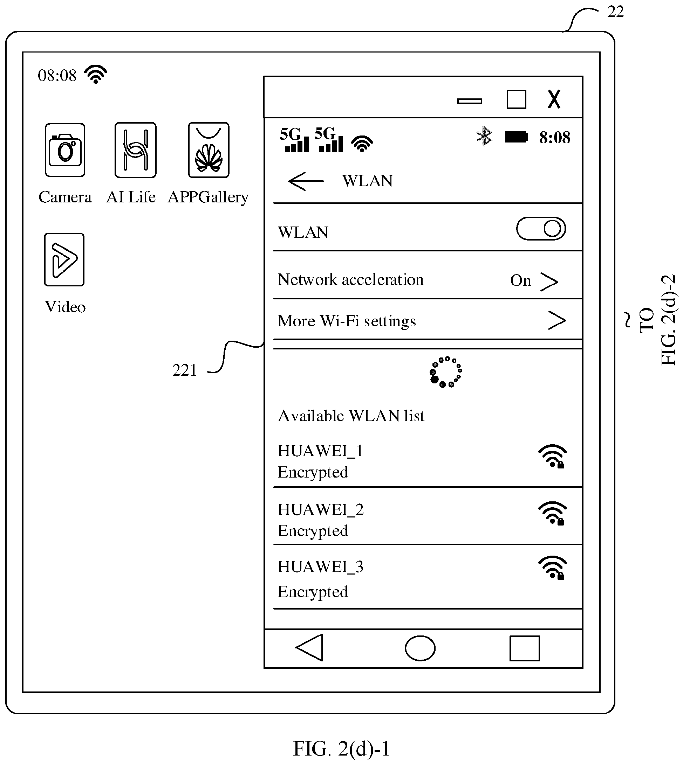

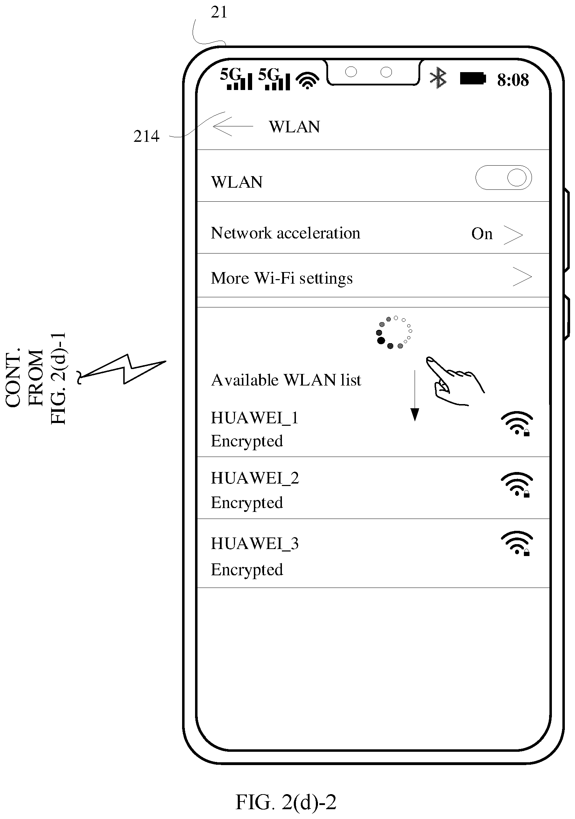

In addition to periodically triggering setting scanning by the mobile phone 21, the user may actively trigger Wi-Fi scanning. As shown in FIG. 2(d)-1 and FIG. 2(d)-2, the multi-screen collaboration service is performed between the mobile phone 21 and the large screen device 22. The user manually pulls down the available WLAN list on the setting interface 214 of the mobile phone 21, to manually update Wi-Fi hotspot information in the available WLAN list.

The mobile phone 21 obtains the pull-down operation performed by the user on the setting interface, performs Wi-Fi scanning by using the Wi-Fi path in response to the pull-down operation, and updates the available WLAN list based on the obtained Wi-Fi hotspot information. Manually triggered Wi-Fi scanning affects performance of the currently running multi-screen collaboration service.

In some other scenarios, the mobile phone 21 is connected to a Wi-Fi hotspot of a wireless router, and performs a game service by using the Wi-Fi hotspot. In this case, the Wi-Fi service running in the foreground of the mobile phone 21 is the game service. When the user uses a Wi-Fi hotspot to play a game, a third-party application running in the background triggers Wi-Fi scanning. Wi-Fi scanning occupies a Wi-Fi path, and this increases a latency of the game service in the foreground and affects performance of the game service in the foreground.

It can be learned from the foregoing that Wi-Fi scanning affects performance of a currently running Wi-Fi service. For example, impact evaluation of Wi-Fi scanning on performance of a Wi-Fi service may be shown in Table 1.

**Table 1**

| Scenario | Index | No Wi-Fi scanning | Wi-Fi scanning | Remark |
|---|---|---|---|---|
| Web page loading | Web page loading duration | 413 ms | 432 ms | The loading is slowed down by 19 ms |
| Downloading from the application market | Download time | 36.7s | 41.7s | The downloading is slowed down by 5s |
| Video call | Audio and video frame freezing | Slight frame freezing, clear sound, slight sound delay | The video freezes and the other party's voice cannot be heard | Audio cannot be received |
| Projection (5 GHz intra-band intra-channel) | Frame freezing/frame rate | 0 times/42 frame | 0 times/32 frame | Obvious frame loss |
| Projection (5 GHz intra-band inter-channel) | Frame freezing/frame rate | 1 time/36 frame | 3 times/35 frame | More freezes |

Wi-Fi scanning in Table 1 is background scanning of a single channel.

It can be learned from Table 1 that Wi-Fi scanning affects a web page loading service, a video call service, a projection service, a download service, and the like. For example, when a currently running Wi-Fi service is web page loading, Wi-Fi scanning slows down web page loading by 19 ms compared with that without Wi-Fi scanning. That is, Wi-Fi scanning increases a latency of the currently running web page loading service. Similarly, in an application market download scenario, a video call scenario, and a projection scenario, Wi-Fi scanning also increases a latency of a Wi-Fi service, and affects performance of the Wi-Fi service.

For the foregoing problem that Wi-Fi scanning affects performance of the currently running Wi-Fi service, embodiments of this application provide a Wi-Fi scanning control solution based on a plurality of Wi-Fi chips. In the Wi-Fi scanning control solution, the plurality of Wi-Fi chips work together, to reduce or even eliminate impact of Wi-Fi scanning on the currently running Wi-Fi service.

In embodiments of this application, at least two Wi-Fi chips are integrated into the terminal device, and at least two concurrent Wi-Fi paths can be provided. For ease of description, the following uses a terminal device integrated with two Wi-Fi chips as an example for description.

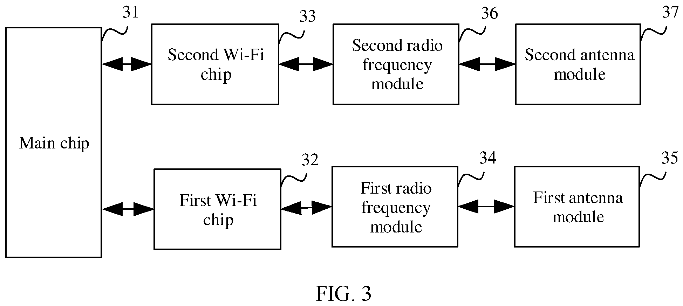

FIG. 3 is a schematic block diagram of an architecture of a terminal device with dual Wi-Fi chips according to an embodiment of this application. As shown in FIG. 3, the terminal device includes a main chip 31, a first Wi-Fi chip 32 connected to the main chip 31, a second Wi-Fi chip 33 connected to the main chip 31, a first radio frequency module 34 connected to the first Wi-Fi chip 32, a first antenna module 35 connected to the first radio frequency module 34, a second radio frequency module 36 connected to the second Wi-Fi chip 33, and a second antenna module 37 connected to the second radio frequency module 36.

The main chip 31 is usually a system on chip (System on Chip, SoC), and a plurality of modules are usually integrated into the SoC. For example, a plurality of modules such as a processor, a memory, and various interfaces for external communication are integrated into the main chip 31. The processor may include one or more processing units. For example, the processor on the main chip 31 may include an application processor (application processor, AP), a graphics processing unit (graphics processing unit, GPU), an image signal processor (image signal processor, ISP), a digital signal processor (digital signal processor, DSP), and a baseband processor (baseband, BB).

In specific application, a part or all of a Wi-Fi chip may be integrated into the SoC. For example, a baseband processor of the first Wi-Fi chip 32 is integrated into the SoC, but a radio frequency part is not integrated into the SoC. Certainly, the Wi-Fi chip may not be integrated into the SoC. For example, neither a baseband processor nor a radio frequency part of the second Wi-Fi chip is integrated into the SoC.

In other words, FIG. 3 shows that the terminal device in embodiments of this application includes two Wi-Fi chips, but integration locations of the two Wi-Fi chips are not limited. The integration locations of the Wi-Fi chips are not limited in embodiments of this application.

The interface module integrated into the main chip 31 may include one or more interfaces. For example, the interface module may include an inter-integrated circuit (inter-integrated circuit, I2C) interface, an improved inter-integrated circuit (Improved inter-integrated circuit, I3C) interface, a pulse code modulation (pulse code modulation, PCM) interface, a universal asynchronous receiver/transmitter (universal asynchronous receiver/transmitter, UART) interface, and a general-purpose input/output (general-purpose input/output, GPIO) interface.

The main chip 31 is configured to process data, instructions, and the like. For example, after obtaining a Wi-Fi scanning request triggered by an upper-layer application, in response to the Wi-Fi scanning request, the processor on the main chip 31 may detect whether a Wi-Fi service is running. If a Wi-Fi service is running, the processor may further determine a Wi-Fi path used by the currently running Wi-Fi service, further determines a Wi-Fi path currently in an idle state, and then performs Wi-Fi scanning by using the Wi-Fi path currently in the idle state. In this way, the Wi-Fi path used for Wi-Fi scanning and the Wi-Fi path used for the Wi-Fi service are two different paths, and the two Wi-Fi paths may be concurrent and do not affect each other, to reduce or even eliminate impact of Wi-Fi scanning on the currently running Wi-Fi service. The Wi-Fi path in the idle state is a Wi-Fi path without data receiving and sending services. That is, when a Wi-Fi path has no data receiving service or data sending service, it may be considered that the Wi-Fi path is in the idle state.

The first Wi-Fi chip 32, the first radio frequency module 34, and the first antenna module 35 are configured to receive and send a Wi-Fi signal. Generally, the first radio frequency module 34 includes but is not limited to a radio frequency circuit, a radio frequency chip, a radio frequency module, a radio frequency component, and the like. When sending Wi-Fi data, the first radio frequency module 34 may perform operations such as modulation, power amplification, and filtering on a baseband signal of the first Wi-Fi chip 32, to obtain a radio frequency signal in a specified band. The first antenna module 35 may transmit a signal transmitted by the first radio frequency module 34. When receiving Wi-Fi data, the first antenna module 35 may receive a Wi-Fi signal transmitted by an AP device or another Wi-Fi device. The first radio frequency module 34 performs operations such as filtering and demodulation on a signal transmitted by the first antenna module 35.

Similarly, for functions and processes of the second Wi-Fi chip 32, the second radio frequency module 36, and the second antenna module 37, refer to related content of the first Wi-Fi chip 31. Details are not described herein again.

In some embodiments, the first Wi-Fi chip 32 is a chip that can work in both a first band and a second band, and the second Wi-Fi chip 33 is also a chip that can work in both the first band and the second band. For example, the first band and the second band are respectively 2.4 GHz and 5 GHz. That is, both the first Wi-Fi chip 32 and the second Wi-Fi chip 33 may work in 2.4 GHz and 5 GHz at the same time. In this case, the first Wi-Fi chip 32 can provide two concurrent Wi-Fi paths: a 2.4 GHz Wi-Fi path and a 5 GHz Wi-Fi path. The second Wi-Fi chip 33 can provide two concurrent Wi-Fi paths: a 2.4 GHz Wi-Fi path and a 5 GHz Wi-Fi path. That is, the terminal device can provide four concurrent Wi-Fi paths.

In some other embodiments, one of the first Wi-Fi chip 32 and the second Wi-Fi chip 33 is a chip that can work in both the first band and the second band, and the other is a chip that can work in the first band or the second band. In this case, the terminal device can provide three concurrent Wi-Fi paths. For example, the first Wi-Fi chip 32 may work in 2.4 GHz and 5 GHz at the same time, and the second Wi-Fi chip 33 may work in 2.4 GHz or 5 GHz, but cannot work in two bands at the same time. In this case, the first Wi-Fi chip 32 can provide a 2.4 GHz Wi-Fi path and a 5 GHz Wi-Fi path, and the second Wi-Fi chip 33 can provide a 2.4 GHz or 5 GHz Wi-Fi path.

In some other embodiments, both the first Wi-Fi chip 32 and the second Wi-Fi chip 33 are chips that can work in the first band or the second band at the same time. That is, both the two chips can work in only one band. In this case, the terminal device can provide two concurrent Wi-Fi paths. For example, the first band and the second band are 2.4 GHz and 5 GHz respectively. The first Wi-Fi chip 32 can provide a 2.4 GHz or 5 GHz Wi-Fi path, and the second Wi-Fi chip 33 can provide a 2.4 GHz or 5 GHz Wi-Fi path.

It may be understood that the first radio frequency module 34 and the second radio frequency module 36 may perform adaptation based on types of the first Wi-Fi chip 32 and the second Wi-Fi chip 33. For example, when the first Wi-Fi chip 32 supports DBDC, the first radio frequency module 34 may include two RF front ends.

There may be one or more antennas included in the first antenna module 35 and the second antenna module 37. Specifically, the antenna module may include only one Wi-Fi-related antenna, and the Wi-Fi-related antenna is an antenna configured to receive and send Wi-Fi data. In this case, the antenna module may be referred to as Wi-Fi 1x1. Wi-Fi 1x1 (or referred to as single Wi-Fi) means that there is only one antenna related to a Wi-Fi connection. That is, an electronic device can complete data receiving and sending by using only a unique Wi-Fi channel.

The antenna module may also include two Wi-Fi-related antennas. In this case, the antenna module may be referred to as Wi-Fi 2x2 (or referred to as dual-path Wi-Fi). Compared with Wi-Fi 1x1, Wi-Fi 2x2 adds one more antenna for data receiving and sending. That is, two antennas are used to send or receive data at the same time. Coverage of Wi-Fi 2x2 is larger than that of Wi-Fi 1x1.

During specific application, the first Wi-Fi chip 32 may be Wi-Fi 1x1 or Wi-Fi 2x2. The second Wi-Fi chip 33 may be Wi-Fi 1x1 or Wi-Fi 2x2. Certainly, a quantity of antennas of the first Wi-Fi chip 32 and a quantity of antennas of the second Wi-Fi chip 33 may be random. This is not limited herein.

During specific application, the second Wi-Fi chip may be a chip that supports both a Wi-Fi function and a Bluetooth function.

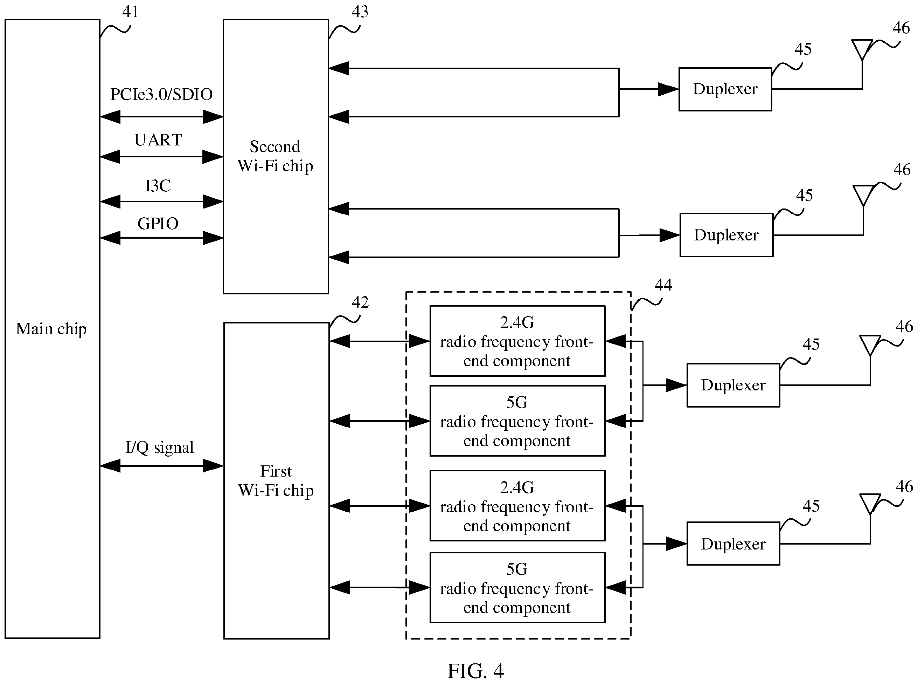

It should be noted that the types of the first Wi-Fi chip and the second Wi-Fi chip may be selected based on factors such as costs and performance. In some embodiments, to increase a quantity of concurrent Wi-Fi paths at reasonable costs, a chip that can simultaneously work in two bands is selected as the first Wi-Fi chip, and a chip that can simultaneously work in one band is selected as the second Wi-Fi chip. For example, FIG. 4 is a schematic block diagram of another architecture of a terminal device with dual Wi-Fi chips according to an embodiment of this application. The terminal device includes a main chip 41, a first Wi-Fi chip 42, a second Wi-Fi chip 43, a radio frequency front-end component module 44, a duplexer 45, and an antenna 46.

In this case, both the first Wi-Fi chip 42 and the second Wi-Fi chip 43 are Wi-Fi 2x2. Both the first Wi-Fi chip 42 and the second Wi-Fi chip 43 may include a baseband and RF. The first Wi-Fi chip 42 and the second Wi-Fi chip have different integration levels. The radio frequency front-end component 44 of the first Wi-Fi chip is not integrated in the chip, but a radio frequency front-end component of the second Wi-Fi chip is integrated in the second Wi-Fi chip.

The first Wi-Fi chip 42 is a chip that can work in both a first band and a second band, and the second Wi-Fi chip 43 is a chip that can work in the first band or the second band. In this case, the terminal device can provide three concurrent Wi-Fi paths.

An in-phase/quadrature (In-phase/Quadrature, I/Q) signal may be transmitted between the main chip 41 and the first Wi-Fi chip 42. A bus between the main chip 41 and the second Wi-Fi chip 43 includes but is not limited to PCIe 3.0 or secure digital input/output (Secure Digital Input and Output, SDIO), UART, 13C, GPIO, and the like.

It should be noted that, in addition to the main chip, the Wi-Fi chip, the radio frequency module, the antenna module, and the like, the terminal device with dual Wi-Fi chips in embodiments of this application may further include more components. For example, in some embodiments, the terminal device with dual Wi-Fi chips may further include one or more of an audio module, a speaker, a receiver, a microphone, a headset interface, a sensor module, a button, a motor, an indicator, a camera, a display, and a subscriber identification module (subscriber identification module, SIM) card interface.

It can be learned from the foregoing that the terminal device in embodiments of this application may include at least two Wi-Fi chips, and can provide at least two concurrent Wi-Fi paths.

Based on the plurality of concurrent Wi-Fi paths, after obtaining a Wi-Fi scanning request used to trigger Wi-Fi scanning, the terminal device may detect whether a Wi-Fi service is currently running, and if a Wi-Fi service is running, determine a Wi-Fi path used by the Wi-Fi service. Then, after determining a Wi-Fi path in an idle state, in response to the Wi-Fi scanning request, the terminal device performs Wi-Fi scanning by using the Wi-Fi path in the idle state. In this way, Wi-Fi scanning and the Wi-Fi service use different Wi-Fi paths, and Wi-Fi scanning does not occupy a slot of the Wi-Fi service, to reduce or even eliminate impact of Wi-Fi scanning on the currently running Wi-Fi service.

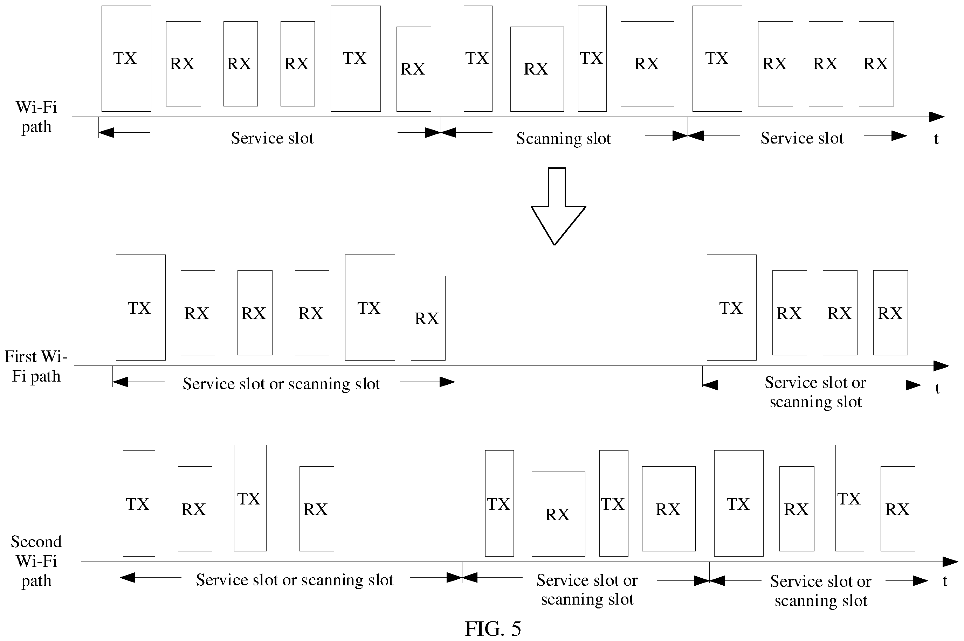

For example, refer to a schematic diagram of slots of a Wi-Fi path shown in FIG. 5. As shown in FIG. 5, in a single Wi-Fi chip solution, the terminal device has only one Wi-Fi path, and the Wi-Fi path is responsible for both a scanning slot and a service slot. In addition, the scanning slot and the service slot cannot be concurrent, and can only be alternate. In the service slot and the scanning slot, the Wi-Fi path transmits (transport, TX) data and receives (receive, RX) data.

In a dual Wi-Fi chip solution, the terminal device includes a first Wi-Fi path and a second Wi-Fi path, and the first Wi-Fi path and the second Wi-Fi path may be concurrent. When the first Wi-Fi path is in the service slot or the scanning slot, the second Wi-Fi path may be in the scanning slot or the service slot. In other words, when performing the Wi-Fi service by using the first Wi-Fi path, the terminal device may perform Wi-Fi scanning by using the second Wi-Fi path. Because the service slot and the scanning slot are located in two different Wi-Fi paths, Wi-Fi scanning has no impact on the Wi-Fi service.

Certainly, when the first Wi-Fi path is in the service slot, the second Wi-Fi path may also be in the service slot. That is, concurrency of two Wi-Fi services is implemented by using the first Wi-Fi path and the second Wi-Fi path, and the two Wi-Fi services do not affect each other.

If no Wi-Fi service is running on the terminal device, the terminal device may perform Wi-Fi scanning by using a default Wi-Fi path. The default Wi-Fi path is preset, and the default Wi-Fi path is one of the plurality of Wi-Fi paths. For example, two Wi-Fi chips are integrated into the terminal device, and are a first Wi-Fi chip and a second Wi-Fi chip respectively. The first Wi-Fi chip can provide two concurrent Wi-Fi paths, and the second Wi-Fi chip may simultaneously work on one Wi-Fi path. That is, the two Wi-Fi chips can provide three concurrent Wi-Fi paths. In this case, the Wi-Fi path of the first Wi-Fi chip may be set as the default Wi-Fi path, or the Wi-Fi path of the second Wi-Fi chip may be set as the default Wi-Fi path.

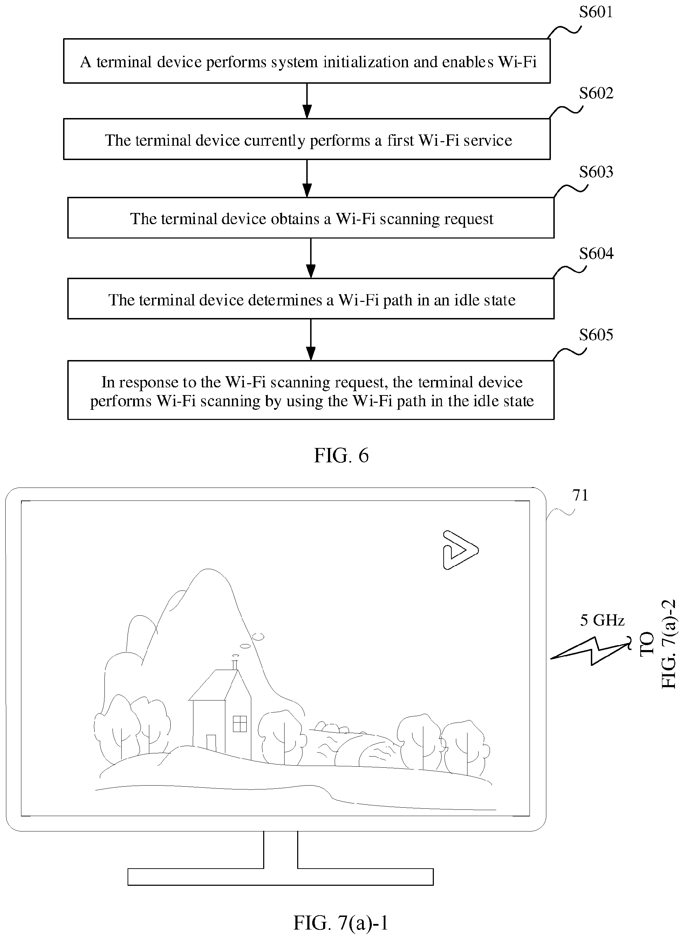

With reference to a schematic block diagram of a procedure of a Wi-Fi scanning control method shown in FIG. 6, the following describes an example of a Wi-Fi scanning control process in a dual Wi-Fi chip solution. As shown in FIG. 6, the procedure may include the following steps.

Step S601: A terminal device performs system initialization and enables Wi-Fi.

It should be noted that when the terminal device enables Wi-Fi, if a second Wi-Fi chip does not need to be used currently, the terminal device may first power on a first Wi-Fi chip, and use the first Wi-Fi chip to work by default. In other words, the second Wi-Fi chip is powered on as required.

Certainly, when Wi-Fi is enabled, the terminal device may alternatively power on the first Wi-Fi chip and the second Wi-Fi chip at the same time, and use the first Wi-Fi chip to work by default.

Step S602: The terminal device currently performs a first Wi-Fi service.

It should be noted that, the first Wi-Fi service is a Wi-Fi service running on the terminal device, and the Wi-Fi service may be a foreground service or a background service. In addition, the first Wi-Fi service may include one or more Wi-Fi services. That is, one or more Wi-Fi services may be currently running on the terminal device. For example, a mobile phone is connected to an AP device by using a 2.4 GHz Wi-Fi path of the first Wi-Fi chip, to perform an internet access service, and performs a projection service by using a 5 GHz Wi-Fi path of the first Wi-Fi chip. In this case, the first Wi-Fi service includes the internet access service and the projection service.

Step S603: The terminal device obtains a Wi-Fi scanning request.

It should be noted that the Wi-Fi scanning request may be triggered by a user. For example, in a projection scenario, the user manually taps a projection control to search for a nearby Wi-Fi device. In this case, after the mobile phone obtains a tap operation of the user on the projection control, a projection application triggers Wi-Fi scanning, and generates a Wi-Fi scanning request. Alternatively, the Wi-Fi scanning request may be autonomously triggered by an application. For example, a foreground Wi-Fi service of the terminal device is a game service, and a background application autonomously triggers Wi-Fi scanning to perform background scanning. Background scanning is Wi-Fi scanning initiated by a non-foreground application. A manner of triggering Wi-Fi scanning is not limited herein.

Step S604: The terminal device determines a Wi-Fi path in an idle state.

It may be understood that the terminal device may determine, by determining whether data is received or sent on a Wi-Fi path, whether the Wi-Fi path is in the idle state. When data is received or sent on the Wi-Fi path, the terminal device may determine that the Wi-Fi path is in a busy state. That is, a Wi-Fi service is currently performed on the Wi-Fi path. When no data is received or sent on the Wi-Fi path, the terminal device may determine that the Wi-Fi path is in the idle state.

Step S605: In response to the Wi-Fi scanning request, the terminal device performs Wi-Fi scanning by using the Wi-Fi path in the idle state.

In this embodiment of this application, the terminal device can provide at least two Wi-Fi paths. Therefore, there may be one or more Wi-Fi paths in the idle state.

The terminal device may perform Wi-Fi scanning by using the one or more Wi-Fi paths in the idle state. In other words, when only one Wi-Fi path in the idle state, the Wi-Fi path in the idle state is used to perform Wi-Fi scanning. When at least two Wi-Fi paths area in the idle state, one Wi-Fi path may be selected from the plurality of Wi-Fi paths in the idle state to perform Wi-Fi scanning, or the plurality of Wi-Fi paths may be selected to perform Wi-Fi scanning.

During specific application, after determining the Wi-Fi path in the idle state, the terminal device may select, from the Wi-Fi path in the idle state, a path used for Wi-Fi scanning, that is, determine a first target path from a second Wi-Fi path in the idle state. The Wi-Fi path in the idle state may include the first target path, or may be equivalent to the first target path. For example, if only one Wi-Fi path is in the idle state, the Wi-Fi path in the idle state may be used as the first target path. In this case, the first target path is equivalent to the Wi-Fi path in the idle state. For another example, a plurality of Wi-Fi paths are idle, and the plurality of Wi-Fi paths include the first target path.

For example, the mobile phone with dual Wi-Fi chips can provide three concurrent Wi-Fi paths: 2.4 GHz and 5 GHz Wi-Fi paths of the first Wi-Fi chip, and a 2.4 GHz or 5 GHz Wi-Fi path of the second Wi-Fi chip.

At a moment, the mobile phone is connected to the AP device by using the 2.4 GHz Wi-Fi path of the first Wi-Fi chip, to perform an internet access service, and performs a projection service by using the 5 GHz Wi-Fi path of the first Wi-Fi chip. That is, all Wi-Fi paths of the first Wi-Fi chip of the mobile phone are in the busy state. In this case, when a background application of the mobile phone triggers Wi-Fi background scanning, the mobile phone determines that the Wi-Fi path of the second Wi-Fi chip is in the idle state, and performs Wi-Fi scanning by using the 2.4 GHz or 5 GHz Wi-Fi path of the second Wi-Fi chip. Herein, the second Wi-Fi chip cannot provide concurrent Wi-Fi paths of two bands. Therefore, the mobile phone may first perform Wi-Fi scanning by using a Wi-Fi path of one band, and then perform Wi-Fi scanning by using a Wi-Fi path of the other band, to obtain a full-band Wi-Fi scanning result. For example, the mobile phone may first perform Wi-Fi scanning by using the 5 GHz Wi-Fi path, and then perform Wi-Fi scanning by using the 2.4 GHz Wi-Fi path.

For another example, the mobile phone with dual Wi-Fi chips can provide four concurrent Wi-Fi paths: 2.4 GHz and 5 GHz Wi-Fi paths of the first Wi-Fi chip, and 2.4 GHz and 5 GHz Wi-Fi paths of the second Wi-Fi chip.

At a moment, the mobile phone is connected to the AP device by using the 2.4 GHz Wi-Fi path of the first Wi-Fi chip, to perform an internet access service, and performs a projection service by using the 5 GHz Wi-Fi path of the second Wi-Fi chip.

In this case, when a background application of the mobile phone triggers Wi-Fi background scanning, the mobile phone determines that Wi-Fi paths in the idle state include the 5 GHz Wi-Fi path of the first Wi-Fi chip and the 2.4 GHz Wi-Fi path of the second Wi-Fi chip. The mobile phone may perform Wi-Fi scanning by using both the 5 GHz Wi-Fi path of the first Wi-Fi chip and the 2.4 GHz Wi-Fi path of the second Wi-Fi chip, to obtain a full-band scanning result. Certainly, the mobile phone may select only one Wi-Fi path to perform Wi-Fi scanning, for example, perform Wi-Fi scanning by using the 5 GHz Wi-Fi path of the first Wi-Fi chip.

At another moment, the mobile phone is connected to the AP device by using the 2.4 GHz Wi-Fi path of the first Wi-Fi chip, to perform an internet access service. That is, the first Wi-Fi service is an internet access service. In this case, the Wi-Fi paths in the idle state include the 5 GHz Wi-Fi path of the first Wi-Fi chip, and 2.4 GHz and 5 GHz Wi-Fi paths of the second Wi-Fi chip.

After obtaining the Wi-Fi scanning request, the mobile phone may select any Wi-Fi path in the idle state to perform Wi-Fi scanning, or may select Wi-Fi paths of two bands to perform Wi-Fi scanning. For example, the mobile phone selects the 5 GHz Wi-Fi path of the first Wi-Fi chip and the 2.4 GHz Wi-Fi path of the second Wi-Fi chip to perform Wi-Fi scanning, to obtain a full-band Wi-Fi scanning result. Certainly, the mobile phone may alternatively select the 2.4 GHz and 5 GHz Wi-Fi paths of the second Wi-Fi chip to perform Wi-Fi scanning, to obtain a full-band Wi-Fi scanning result.

In other words, if a plurality of Wi-Fi paths in the idle state include Wi-Fi paths of different bands, the terminal device may select one Wi-Fi path in each band, and then perform Wi-Fi scanning by using the Wi-Fi paths of the different bands, to obtain a full-band scanning result. For example, if the Wi-Fi path in the idle state includes two 2.4 GHz Wi-Fi paths and one 5 GHz Wi-Fi path, one 2.4 GHz Wi-Fi path and one 5 GHz Wi-Fi path are selected, and then the two selected Wi-Fi paths of different bands are used for Wi-Fi scanning. The two selected Wi-Fi paths of the two bands may belong to a same Wi-Fi chip, or may separately belong to two different Wi-Fi chips.

In some embodiments, only one Wi-Fi path may be in the idle state or a Wi-Fi path of only one band may be in the idle state. For example, at a moment, only the 2.4 GHz Wi-Fi path of the first Wi-Fi chip is in the idle state. In this case, to obtain a full-band scanning result, the terminal device may further detect a type of a Wi-Fi service running on a Wi-Fi path of a target band after determining that only one Wi-Fi path or a Wi-Fi path of only one band is in the idle state at a current moment. If the Wi-Fi service type on the Wi-Fi path of the target band includes a target service type, the terminal device may perform Wi-Fi scanning by using a Wi-Fi path currently in the idle state and a Wi-Fi path corresponding to the target service type, to obtain a full-band scanning result.

The target band is a band other than a band corresponding to the idle Wi-Fi path. For example, if a Wi-Fi path currently in the idle state is a 2.4 GHz path, that is, a band corresponding to the idle Wi-Fi path is 2.4 GHz. In this case, the target band is 5 GHz.

The target service type may be set as required. In some embodiments, the target service type may include a non-low-latency service, for example, a conventional Wi-Fi service.

For example, the terminal device can provide three concurrent Wi-Fi paths, the first Wi-Fi chip can provide two concurrent Wi-Fi paths of different bands, and the second Wi-Fi chip can work on one Wi-Fi path at a time. At a moment, the terminal device currently performs the internet access service by using the 5 GHz Wi-Fi path of the first Wi-Fi chip, and performs the projection service by using the 5 GHz Wi-Fi path of the second Wi-Fi chip. In this case, after obtaining the Wi-Fi scanning request, the terminal device determines that only the 2.4 GHz path of the first Wi-Fi chip is in the idle state, and further determines a Wi-Fi service type on a 5 GHz Wi-Fi path. In this case, a service type on the 5 GHz Wi-Fi path includes the projection service and the internet access service. The projection service is a low-latency service, and the internet access service is a non-low-latency service. In this case, it may be determined that a Wi-Fi path corresponding to the target service type (that is, the internet access service) is the 5 GHz path of the first Wi-Fi chip. Then, the terminal device performs Wi-Fi scanning by using the 2.4 GHz path and the 5 GHz path of the first Wi-Fi chip, to obtain a full-band scanning result.

It may be understood that performing Wi-Fi scanning by using the 5 GHz path of the first Wi-Fi chip affects performance of the internet access service.

It should be noted that, if the type of the Wi-Fi service running on the Wi-Fi path of the target band does not include the target service type, Wi-Fi scanning may be suspended, or only a Wi-Fi path in the idle state is used for scanning. For example, the terminal device currently performs the projection service by using the 5 GHz Wi-Fi path of the first Wi-Fi chip, and performs a projection service by using the 5 GHz Wi-Fi path of the second Wi-Fi chip, and only the 2.4 GHz path of the first Wi-Fi chip is in the idle state. In this case, all 5 GHz Wi-Fi paths are used for low-latency services, and there is no target service type. In this case, the Wi-Fi scanning request may not be responded to, or only the 2.4 GHz path of the first Wi-Fi chip is used for scanning.

It should be noted that some Wi-Fi scanning requests do not require full-band scanning, and only a specific band and a specific channel may be scanned. In this case, after obtaining the Wi-Fi scanning request, the terminal device may determine, based on information carried in the Wi-Fi scanning request, a band that needs to be scanned, and then determine whether there is a path of the band that needs to be scanned on the Wi-Fi paths currently in the idle state. If there is a path of the band that needs to be scanned, the terminal device performs Wi-Fi scanning by using a corresponding idle Wi-Fi path. For example, a Wi-Fi scanning request indicates to scan a 5 GHz band. After obtaining the Wi-Fi scanning request, the terminal device determines that the Wi-Fi path currently in the idle state includes the 5 GHz path of the second Wi-Fi chip and the 2.4 GHz path of the first Wi-Fi path. Because there is an idle 5 GHz Wi-Fi path in this case, the 5 GHz path of the second Wi-Fi chip is used for Wi-Fi scanning.

It can be learned that in this embodiment of this application, the terminal device based on dual Wi-Fi provides at least two concurrent Wi-Fi paths, and performs Wi-Fi scanning by using a Wi-Fi path in an idle state, so that Wi-Fi scanning does not occupy a slot of a Wi-Fi path corresponding to the first Wi-Fi service, to reduce or even avoid impact of Wi-Fi scanning on performance of the currently running Wi-Fi service.

In addition, compared with a solution in which Wi-Fi scanning is limited to avoid impact of Wi-Fi scanning on a currently running Wi-Fi service, that is, to avoid impact of Wi-Fi scanning on performance of a running Wi-Fi service, a common solution is to limit Wi-Fi scanning or limit an occurrence probability of Wi-Fi scanning, that is, when a Wi-Fi service is running in the foreground or a low-latency Wi-Fi service is running in the foreground, a background application is not allowed to perform Wi-Fi scanning, in this embodiment of this application, Wi-Fi scanning is performed by using the Wi-Fi path in the idle state, so that impact of Wi-Fi scanning on the currently running Wi-Fi service can be resolved, and normal running of the Wi-Fi scanning service can be further ensured.

Particularly, if the currently running Wi-Fi service is a latency-sensitive service, for example, a projection service and a multi-screen collaboration service, impact of Wi-Fi scanning on the Wi-Fi service is particularly obvious. In this embodiment of this application, Wi-Fi scanning is performed by using a Wi-Fi path in an idle state, so that impact of Wi-Fi scanning on a latency-sensitive service is minimized.

FIG. 2(a)-1 to FIG. 2(d)-2 are used as an example. The mobile phone 21 includes the first Wi-Fi chip and the second Wi-Fi chip, and the mobile phone 21 can provide at least three concurrent Wi-Fi paths. In this case, the mobile phone 21 performs a multi-screen collaboration service with the large screen device 22 through a Wi-Fi P2P connection. That is, a Wi-Fi service that is running on the mobile phone 21 is the multi-screen collaboration service. After the mobile phone 21 enters the setting interface 214, the mobile phone 21 initiates setting scanning. After obtaining setting scanning, the mobile phone 21 first detects whether data is received or sent on the first Wi-Fi path. In this case, because the mobile phone 21 performs the multi-screen collaboration service by using the 5G band path of the first Wi-Fi chip, data is received or sent on the first Wi-Fi path. The mobile phone 21 performs setting scanning by using the path of the second Wi-Fi chip.

In some embodiments, after obtaining the Wi-Fi scanning request, the terminal device may first determine whether the Wi-Fi scanning request is valid. If the Wi-Fi scanning request is invalid, Wi-Fi scanning is not allowed. If the Wi-Fi scanning request is valid, Wi-Fi scanning may be performed by using a Wi-Fi path in an idle state.

If Wi-Fi scanning is initiated by an unauthorized application, or the Wi-Fi scanning request is not authorized, it may be determined that the Wi-Fi scanning request is invalid. On the contrary, if the Wi-Fi scanning request is authorized or initiated by an authorized application, it may be determined that the Wi-Fi scanning request is valid.

It is detected whether the Wi-Fi scanning request is valid, so that malicious third-party application cannot initiate Wi-Fi scanning to obtain user privacy data.

In some embodiments, the terminal device may first further detect whether the currently running Wi-Fi service is a foreground service, that is, determine whether the currently running Wi-Fi service is a Wi-Fi service of a foreground application. If the service is the foreground Wi-Fi service, the idle Wi-Fi path is used for Wi-Fi scanning. On the contrary, if the service is not a foreground Wi-Fi service, a default Wi-Fi path is used for Wi-Fi scanning.

Generally, performance of the foreground Wi-Fi service directly affects user experience. For example, the foreground Wi-Fi service is the projection service. When frame freezing and frame loss are severe during projection, user experience is affected. In addition, the terminal device uses dual Wi-Fi chips, which increases power consumption of the device and reduces standby duration of the device. Based on this, an idle Wi-Fi path is used for scanning only when a current Wi-Fi service is a service of a foreground application, so that user experience and device power consumption are both considered.

In some embodiments, the terminal device may further determine whether an application of the currently running Wi-Fi service belongs to a target application set. If the application belongs to the target application set, Wi-Fi scanning is performed by using the Wi-Fi path in the idle state. If the application does not belong to the target application set, Wi-Fi scanning is performed by using a default Wi-Fi path. The default Wi-Fi path may be a path of the currently running Wi-Fi service.

The target application set may include one or more applications. For example, the target application set includes a projection application. That is, if the application of the currently running Wi-Fi service is the projection application, it is determined that the application belongs to the target application set. The target application set may be autonomously set by the terminal device. Generally, the terminal device may add a latency-sensitive service application (for example, the projection application) to the target application set by default. Alternatively, the target application set may be set by the user. For example, the user may add a call application (for example, MeeTime) to the target application set. In this way, when the terminal device currently performs a video call via Wi-Fi, the Wi-Fi path in the idle state is used for Wi-Fi scanning, to avoid call freezing caused by Wi-Fi scanning and impact on user experience.

In some embodiments, after the terminal device determines to perform Wi-Fi scanning by using the Wi-Fi path in the idle state, if the Wi-Fi path used by the first Wi-Fi service and the Wi-Fi path used for Wi-Fi scanning belong to different Wi-Fi chips, a communication interface may exist between the first Wi-Fi chip and the second Wi-Fi chip. The first Wi-Fi chip may transmit, to the second Wi-Fi chip through the communication interface, working status information of the Wi-Fi path used by the first Wi-Fi service.

The working status information of the Wi-Fi path used by the first Wi-Fi service includes but is not limited to information such as a frequency, a band, a bandwidth, and a channel of the Wi-Fi path.

When performing scanning by using the Wi-Fi path in the idle state, the second Wi-Fi chip may control, based on the working status information of the Wi-Fi path used by the first Wi-Fi service, a power, a channel, a band, and the like for Wi-Fi scanning, to avoid impact of Wi-Fi scanning on the first Wi-Fi service. For example, the Wi-Fi path used the first Wi-Fi service of the first Wi-Fi chip is a channel 36 working in the 5G band. During scanning, the second Wi-Fi chip reduces scanning power on a channel near the channel 36 in the 5G band.

It may be understood that the terminal with dual Wi-Fi chips provided in this embodiment of this application can provide at least two concurrent Wi-Fi paths. Therefore, the terminal device may have only one running Wi-Fi service, or may have a plurality of running Wi-Fi services.

When there are a plurality of running Wi-Fi services, and each Wi-Fi service occupies one Wi-Fi path, after obtaining the Wi-Fi scanning request, the terminal device may first determine a Wi-Fi path that is currently not occupied, that is, in the idle state, then determine, from the Wi-Fi path in the idle state, a Wi-Fi path used for Wi-Fi scanning, and finally perform Wi-Fi scanning by using the determined Wi-Fi path, to avoid impact of Wi-Fi scanning on performance of the currently running Wi-Fi services.

In this embodiment of this application, the terminal device based on dual Wi-Fi chips provides at least two concurrent Wi-Fi paths, to resolve impact of Wi-Fi scanning on the running Wi-Fi service, and optimize Wi-Fi service performance.

For example, the optimized Wi-Fi service may be shown in Table 2.

**Table 2**

| Service type | First Wi-Fi chip | Second Wi-Fi chip | Remark |
|---|---|---|---|
| Interference detection and background scanning | × | √ | The second Wi-Fi chip is used to perform low-power scanning |
| Proximity discovery or Wi-Fi-based OneHop | × | √ | Wi-Fi scanning related to an all-scenario service |
| HWDL discovery link | × | √ | |
| Multi-screen collaboration or projection | × | √ | Low-latency service |
| Conventional Wi-Fi service | √ | × | Video, news, live broadcast, shopping, social services |
| Huawei Share, Phone Clone | √ | √ | High-speed data transmission and download application |
| High-speed download service | √ | √ | Application market, application package, online disk, network speed test application, cloud disk, and offline cache of video applications |
| Game and live broadcast services | √ | √ | Multi-network collaboration or dual Wi-Fi |
| Intra-band inter-channel scenario | √ | √ | The mobile phone with dual Wi-Fi chips builds dual 5 GHz Wi-Fi in an enterprise network environment |

In Table 2, "×" indicates that the chip is not used, and "√" indicates that the chip is used.

The following describes the service types in Table 2 separately by using examples.
(1) Interference detection and background scanning: For interference detection and background scanning, if the first Wi-Fi chip of the terminal device has a running Wi-Fi service, the first Wi-Fi chip is not used to perform Wi-Fi scanning, but the second Wi-Fi chip is used to perform Wi-Fi scanning.

For example, refer to a schematic diagram of an interference detection scenario shown in FIG. 7(a)-1 to FIG. 7(a)-5. As shown in FIG. 7(a)-1 to FIG. 7(a)-5, a Wi-Fi P2P connection has been established between a large screen device 71 and a mobile phone 72, and the mobile phone 72 projects a video 1 onto the large screen device 71 through the Wi-Fi P2P connection. During specific application, a user may select a large screen device in a living room on a video play interface 721 of the mobile phone 72, to project the video 1 onto the large screen device 71. In this case, a Wi-Fi service running on the mobile phone 72 is a projection service, and a Wi-Fi path used by the projection service is a 5G band path of a first Wi-Fi chip. The mobile phone 72 includes the first Wi-Fi chip and a second Wi-Fi chip, and can provide three concurrent Wi-Fi paths. In addition, the mobile phone 72 is further connected to a wireless router.

After the mobile phone 72 projects the video 1 onto the large screen device 71, the user further needs to trigger Wi-Fi interference detection. A process in which the user triggers Wi-Fi interference detection includes: After projection succeeds, the user returns, from the video play interface 721 to a home screen 722 of the mobile phone 72 through a return operation. The home screen 722 includes applications such as AI Life 723, Settings, APPGallery, and Video. Then, the user taps the AI Life 723, and in response to the tap operation on the AI Life 723, the mobile phone 72 displays an AI Life interface 724. The interface 724 displays windows of devices such as a Huawei router, a Huawei headset, a Huawei watch, and a Huawei tablet, and each window displays a connection status of each device. In this case, because the mobile phone 72 is connected to the Huawei router, "Connected" is displayed in a window 725 of the Huawei router. Then, the user taps the window 725, and in response to the tap operation on the window 725, the mobile phone 72 displays an interface 726 of the Huawei router. A Wi-Fi interference detection button 727 is displayed in the interface 726. The user taps the Wi-Fi interference detection button 727, and in response to the tap operation on the Wi-Fi interference detection button 727, the mobile phone 72 initiates Wi-Fi interference detection.

It may be understood that during operation by the user, the projection service between the mobile phone 72 and the large screen device 71 is not interrupted.

After obtaining the tap operation on the Wi-Fi interference detection button 727, the AI Life of the mobile phone 72 initiates a Wi-Fi scanning request to a main chip of the mobile phone 72, to invoke a Wi-Fi chip to perform Wi-Fi scanning. After obtaining the Wi-Fi scanning request, the mobile phone 72 may first detect whether data is received or sent on a first Wi-Fi path. In this case, the projection service is currently performed between the mobile phone 72 and the large screen device 71 by using the 5 GHz path of the first Wi-Fi chip. Therefore, data is received or sent on the first Wi-Fi path.

After determining that data is received or sent on the first Wi-Fi path, the mobile phone 72 performs low-power Wi-Fi interference detection scanning by using a Wi-Fi path of the second Wi-Fi chip. The mobile phone 72 may learn quality of a channel between the mobile phone 72 and the wireless router through Wi-Fi interference detection.

For another example, the mobile phone includes the first Wi-Fi chip and the second Wi-Fi chip, and can provide at least three concurrent Wi-Fi paths. In this case, the mobile phone has accessed a Wi-Fi network of the wireless router, and the user is playing a game via the Wi-Fi network. That is, the Wi-Fi service running on the mobile phone is a game service, and the game service is performed by using a path of the first Wi-Fi chip. At a moment, a background application triggers Wi-Fi scanning to perform background scanning.

After obtaining Wi-Fi scanning, the mobile phone detects that data is received or sent on the first Wi-Fi path, and performs low-power background scanning by using a Wi-Fi path of the second Wi-Fi chip.

For another example, refer to a schematic block diagram of a Wi-Fi scanning procedure shown in FIG. 7(b). The Wi-Fi scanning procedure may include the following steps.

Step S701: A terminal device performs system initialization and enables Wi-Fi.

Step S702: The terminal device obtains a Wi-Fi scanning request.

Step S703: The terminal device detects whether data is sent and/or received on a first Wi-Fi path. The first Wi-Fi path is a path of a first Wi-Fi chip. If yes, step S704 is to be performed, or if no, step S705 is to be performed.

It may be understood that, when data is sent or received on the first Wi-Fi path, or data is both sent and received on the first Wi-Fi path, it indicates that the terminal device currently performs a Wi-Fi service or Wi-Fi scanning by using the first Wi-Fi path. In this case, to prevent Wi-Fi scanning from affecting a currently running service of the first Wi-Fi path, a second Wi-Fi path is used to perform Wi-Fi scanning.

Step S704: The terminal device performs Wi-Fi scanning by using the second Wi-Fi path.

It should be noted that, the second Wi-Fi path is usually a Wi-Fi path in an idle state. That is, usually, Wi-Fi scanning is performed by using the Wi-Fi path in the idle state, to avoid affecting a running service on a Wi-Fi path.

In some embodiments, the second Wi-Fi path is a Wi-Fi path of a second Wi-Fi chip. That is, the first Wi-Fi path and the second Wi-Fi path usually belong to different Wi-Fi chips. In this case, even if the first Wi-Fi chip still has a Wi-Fi path in the idle state, a path of the second Wi-Fi chip is still used for scanning.

For example, when the terminal device with dual Wi-Fi chips can provide three concurrent Wi-Fi paths, the first Wi-Fi chip can provide two concurrent Wi-Fi paths: a 2.4G band path and a 5G band path. The second Wi-Fi chip can provide one concurrent Wi-Fi path, and the path is a 2.4 GHz or 5 GHz path.

At a moment, data is received or sent on the 5G band path of the first Wi-Fi chip, no data is received or sent on the 2.4G band path of the first Wi-Fi chip, and no data is received and sent on the Wi-Fi path of the second Wi-Fi chip, either. In other words, the Wi-Fi path in the idle state includes the 2.4G band path of the first Wi-Fi chip and the path of the second Wi-Fi chip. In this case, the path of the second Wi-Fi chip is selected as the second Wi-Fi path. That is, Wi-Fi scanning is performed by using the path of the second Wi-Fi chip.

In some other embodiments, when the first Wi-Fi chip has a Wi-Fi path in an idle state, the Wi-Fi path of the first Wi-Fi chip may also be used to perform Wi-Fi scanning.

For example, when the terminal device with dual Wi-Fi chips can provide three concurrent Wi-Fi paths, the first Wi-Fi chip can provide two concurrent Wi-Fi paths. At a moment, data is received or sent on the 5G band path of the first Wi-Fi chip, no data is received or sent on the 2.4G band path of the first Wi-Fi chip, and no data is received and sent on the Wi-Fi path of the second Wi-Fi chip, either. After obtaining the Wi-Fi scanning request, the terminal device may perform Wi-Fi scanning by using the 2.4G band path of the first Wi-Fi chip.

During specific application, when the terminal device with dual Wi-Fi chips can provide two concurrent Wi-Fi paths, the first Wi-Fi path is a 2.4G band path or a 5G band path of the first Wi-Fi chip, and the second Wi-Fi path is a 2.4G band path or a 5G band path of the second Wi-Fi chip.

In other words, when data is received or sent on the path of the first Wi-Fi chip, the Wi-Fi path in the idle state is the path of the second Wi-Fi chip, and the path of the second Wi-Fi chip is used to perform Wi-Fi scanning.

When the terminal device with dual Wi-Fi chips can provide three concurrent Wi-Fi paths, it is assumed that the first Wi-Fi chip can provide two concurrent Wi-Fi paths: a 2.4G band path and a 5G band path, the second Wi-Fi chip can provide one concurrent Wi-Fi path, and the path is a 2.4 GHz or 5 GHz path. In this case, the first Wi-Fi path may include a 2.4G band path and/or a 5G band path of the first Wi-Fi chip, and the second Wi-Fi path is the path of the second Wi-Fi chip.

In other words, when data is received or sent on the 2.4G band path of the first Wi-Fi chip, or data is received or sent on the 5G band path, or data is received and sent on both the 2.4G band path and the 5G band path, the path of the second Wi-Fi chip is used to perform Wi-Fi scanning.

When the terminal device with dual Wi-Fi chips can provide four concurrent Wi-Fi paths, the first Wi-Fi chip and the second Wi-Fi chip each can provide two concurrent paths: a 2.4G band path and a 5G band path. In this case, the first Wi-Fi path may include the 2.4G band path and/or the 5G band path of the first Wi-Fi chip.

In other words, when data is received or sent on the 2.4G band path of the first Wi-Fi chip, or data is received or sent on the 5G band path, or data is received and sent on both the 2.4G band path and the 5G band path, the path of the second Wi-Fi chip is used to perform Wi-Fi scanning. In this case, the path of the second Wi-Fi chip may be the 2.4G band path, may be the 5G band path, or may include the 2.4G band path and the 5G band path.

Step S705: The terminal device performs Wi-Fi scanning by using the first Wi-Fi path.

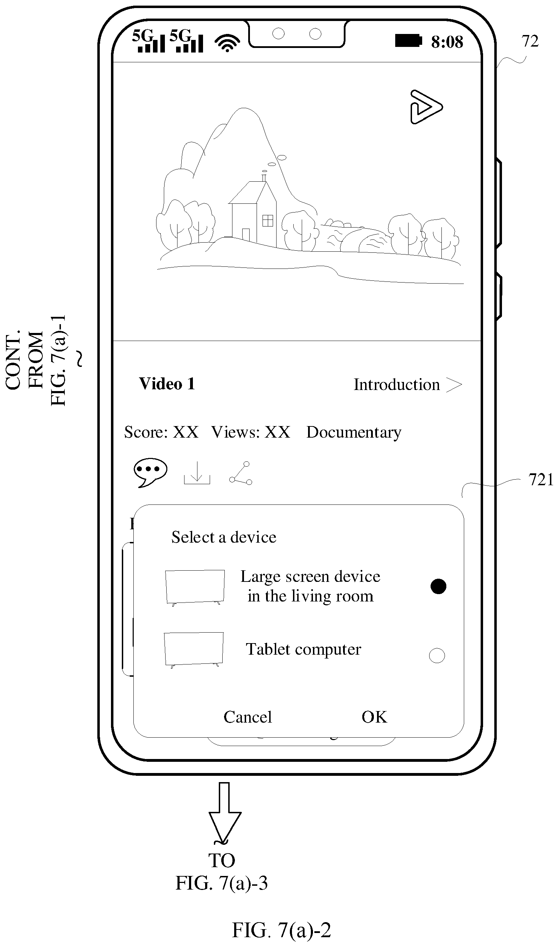

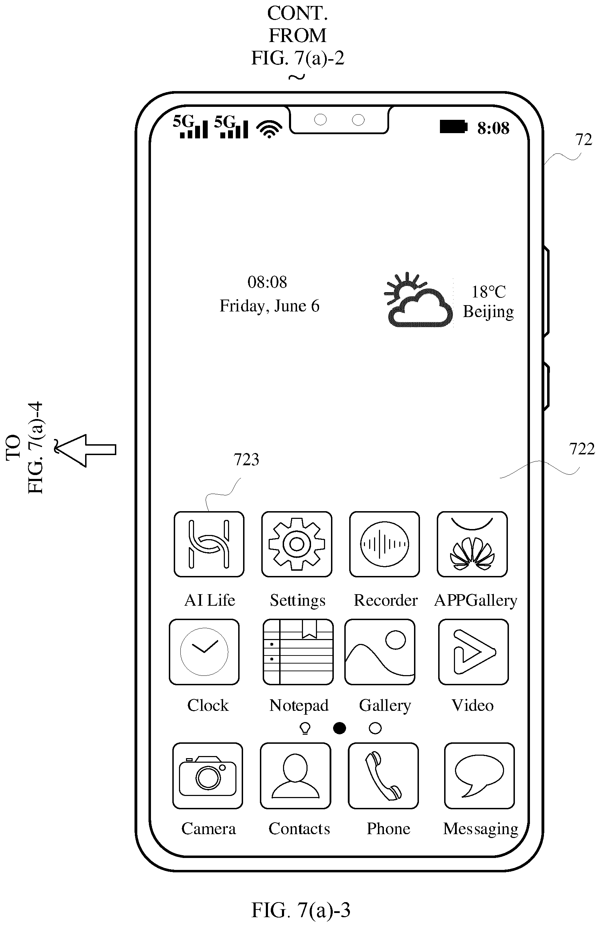

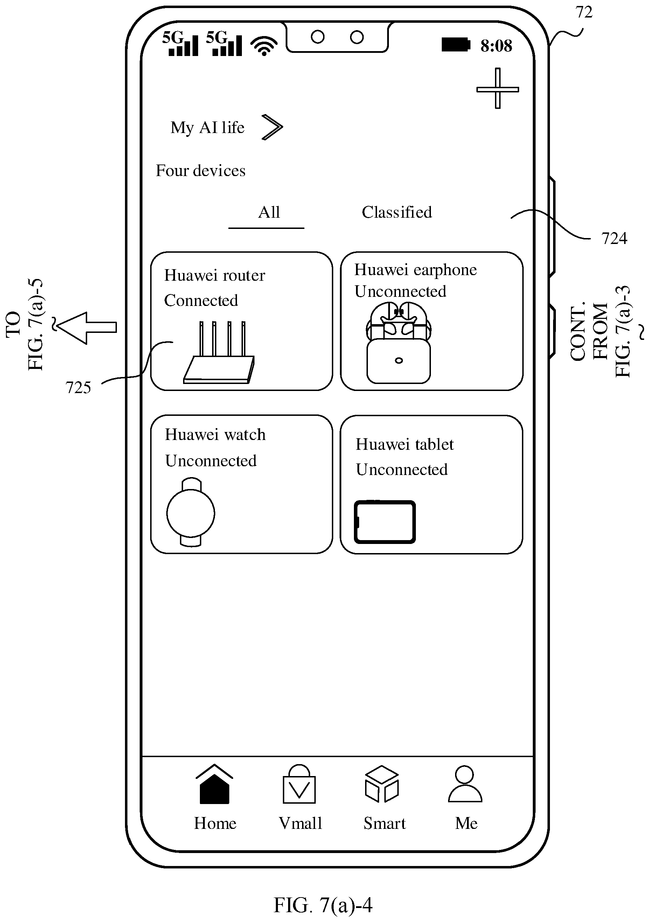

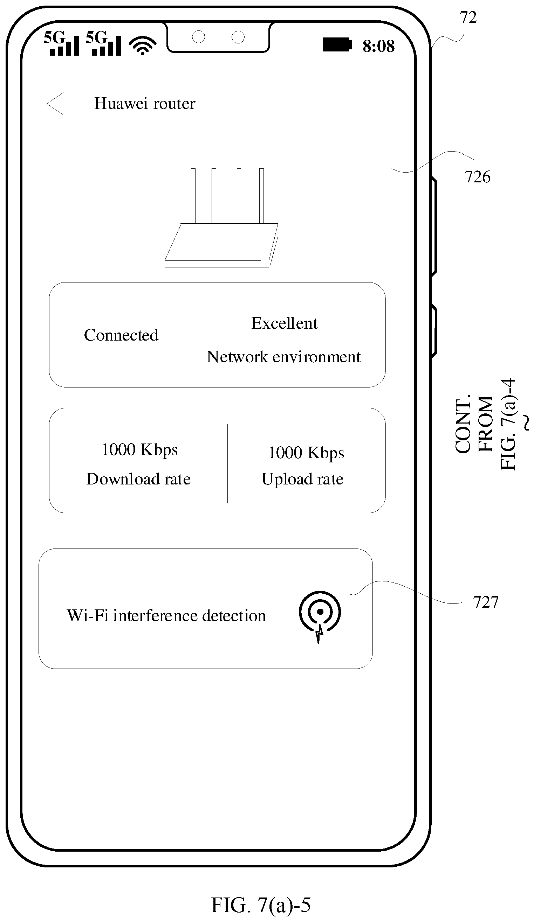

A Wi-Fi scanning type in FIG. 7(a)-1 to FIG. 7(b) may be Wi-Fi background scanning.

It can be learned from the foregoing that, in scenarios such as interference detection and background scanning, when a Wi-Fi service is running on the terminal device, the second Wi-Fi path in the idle state is used to perform Wi-Fi scanning, to avoid impact of Wi-Fi scanning on the Wi-Fi service.

(2) Proximity discovery or Wi-Fi-based OneHop: If the first Wi-Fi chip of the terminal device has a running Wi-Fi service, the first Wi-Fi chip is not used to perform Wi-Fi scanning, but the second Wi-Fi chip is used to perform Wi-Fi scanning.

For example, refer to a schematic block diagram of a procedure of a proximity discovery scenario shown in FIG. 8. The procedure may include the following steps.

Step S801: The terminal device performs a first Wi-Fi service by using a path of the first Wi-Fi chip.

It should be noted that the first Wi-Fi service may be any type of service. For example, the first Wi-Fi service is a conventional Wi-Fi service, or may be a projection service.

Step S802: The terminal device obtains a Wi-Fi scanning request.

The Wi-Fi scanning request may be triggered by an upper-layer application, and is used to discover a specific nearby internet of things device.

Step S803: If the terminal device detects that data is received or sent on a first Wi-Fi path, the terminal device performs Wi-Fi scanning by using a second Wi-Fi path.

It should be noted that the first Wi-Fi path is a path of the first Wi-Fi chip, the second Wi-Fi path is a path of the second Wi-Fi chip, and the second Wi-Fi path is a path in an idle state.

Step S804: The terminal device obtains a scanning result. The scanning result may include at least one of the following: an SSID, a BSSID, and a signal received power (Power, PWR). The PWR may represent a signal strength.

It should be noted that a Wi-Fi module of an internet of things device for which network configuration is not performed works in an AP mode. In this case, the internet of things device broadcasts a packet to the outside. The terminal device obtains, through Wi-Fi scanning, the packet sent by the internet of things device.

Step S805: The terminal device performs device identification based on the Wi-Fi scanning result.

Step S806: The terminal device measures a distance to the internet of things device through Wi-Fi scanning.

Specifically, the terminal device identifies the internet of things device based on the Wi-Fi result. After identifying the internet of things device, the terminal device may perform periodic Wi-Fi scanning by using the second Wi-Fi path, to measure the distance between the terminal device and the internet of things device.

In some embodiments, in a ranging scanning process, the terminal device may adjust a scanning frequency based on the distance. When the distance between the terminal device and the internet of things device is less than a specific threshold, the Wi-Fi scanning frequency is increased, to improve distance calculation accuracy.

For example, refer to a schematic diagram of a scenario of dynamically adjusting a Wi-Fi scanning frequency shown in FIG. 9 and a schematic block diagram of a ranging scanning procedure shown in FIG. 10.

As shown in FIG. 9, the terminal device is a mobile phone 91, and the internet of things device is a soy milk maker 92. The soy milk maker for which network configuration is not performed works in the AP mode. After identifying the soy milk maker based on a Wi-Fi scanning result of a second Wi-Fi path, the mobile phone 91 enters ranging scanning. As shown in FIG. 10, in a ranging scanning process, the mobile phone 91 periodically performs Wi-Fi scanning by using the second Wi-Fi path, and calculates a distance R1 between the mobile phone 91 and the soy milk maker 92 based on each Wi-Fi scanning result. In this case, a Wi-Fi scanning frequency of the mobile phone 91 is a first scanning frequency.

In the ranging scanning process, the mobile phone 91 gradually approaches the soy milk maker 92, and the distance R1 between the mobile phone 91 and the soy milk maker 92 gradually decreases. When the distance R1 is greater than 50 cm, the mobile phone 91 still performs periodic scanning at the first scanning frequency, that is, the scanning frequency remains unchanged, and Wi-Fi scanning is performed according to a fixed periodicity.

When the distance R1 is greater than 30 cm and less than or equal to 50 cm, the mobile phone 91 performs periodic Wi-Fi scanning at a second scanning frequency. The second scanning frequency is greater than the first scanning frequency. In this case, when determining that the distance R1 is greater than 30 cm and less than or equal to 50 cm, the mobile phone 91 immediately performs Wi-Fi scanning once to obtain a Wi-Fi scanning result, calculates a distance R2 based on the current Wi-Fi scanning result, and triggers periodic Wi-Fi scanning at the second scanning frequency. In other words, when the distance R1 is greater than 30 cm and less than or equal to 50 cm, the mobile phone 91 does not perform Wi-Fi scanning according to the original fixed periodicity, but increases the Wi-Fi scanning frequency to perform Wi-Fi scanning at an increased Wi-Fi scanning frequency. When R1 is less than or equal to 30 cm, reporting is performed. Reporting indicates that a bottom-layer service reports information such as an SSID and a BSSID obtained through Wi-Fi scanning to a connection service.

When the distance R2 is greater than 30 cm and is less than or equal to 50 cm, the mobile phone 91 may return to the step of performing periodic scanning at the second scanning frequency, and determine, based on the second scanning frequency, whether Wi-Fi scanning is performed at a current moment. When R2 is less than or equal to 30 cm, reporting is performed. When R2 is greater than 50 cm, the mobile phone 91 still performs Wi-Fi scanning at the first scanning frequency. Wi-Fi scanning is performed by using the second Wi-Fi path in the idle state. In this case, the preset threshold is 30 cm, that is, when the distance between the mobile phone 91 and the soy milk maker 92 is less than 30 cm, the connection service in the mobile phone 91 obtains the information such as the SSID and the BSSID that are of the soy milk maker 92 and that are reported from the bottom layer, and establishes a Wi-Fi connection to the soy milk maker 92.

It should be noted that, after identifying the soy milk maker 92, the mobile phone 91 performs Wi-Fi scanning at the first scanning frequency, and before identifying the soy milk maker 92, the mobile phone 91 performs scanning at a Wi-Fi scanning frequency in a common scenario. The Wi-Fi scanning frequency in the common scenario may be less than the first scanning frequency.

In addition, after identifying the soy milk maker 92 based on the Wi-Fi scanning result, the mobile phone 91 performs scanning at the first scanning frequency, and calculates a distance between the mobile phone 91 and the soy milk maker 92 based on a current Wi-Fi scanning result. If the distance is less than or equal to 30 cm, reporting may be directly performed.

Step S807: When the distance is less than or equal to the preset threshold, the terminal device establishes a connection to the internet of things device.

During specific application, after establishing the Wi-Fi connection to the internet of things device, the terminal device may send locally stored Wi-Fi network information to the internet of things device, so that the internet of things device connects to a corresponding Wi-Fi network based on the Wi-Fi network information, and the terminal device configures a network for the internet of things device through proximity discovery.

For example, refer to a schematic diagram of network configuration in the proximity discovery scenario shown in FIG. 11A to FIG. 11D. As shown in FIG. 11A to FIG. 11D, a mobile phone 112 is connected to a wireless router 111, and the mobile phone 112 currently performs a first Wi-Fi service by using the wireless router 111. The first Wi-Fi service is of any type. For example, the first Wi-Fi service is a news, shopping, or a social service in the conventional Wi-Fi service. It is assumed that in this case, the mobile phone 112 currently plays network music in the background via a Wi-Fi network.

Based on FIG. 9 and FIG. 10, the mobile phone 112 gradually approaches the soy milk maker. When a distance between the mobile phone 112 and the soy milk maker is less than a preset distance 30 cm, a bottom-layer service of the mobile phone 112 reports related information such as the SSID and the BSSID of the soy milk maker to a connection service, and the connection service of the mobile phone 112 triggers a connection action based on the related information of the soy milk maker, to pop up a window 113. Related information such as a picture and a name of the soy milk maker is displayed in the window 113. If the user needs to configure a network for the soy milk maker, the user may tap a connection option in the window 113. In response to the tap operation on the connection option in the window 113, the mobile phone 112 displays a window 114. Network setting information and the like are displayed in the window 114, and the network setting information is usually Wi-Fi network information of the wireless router 111. If the user wants to connect the soy milk maker to the wireless router 111, the user may tap a connection option in the window 114. In response to the tap operation on the connection option in the window 114, the mobile phone 112 displays a window 115. A network configuration progress and corresponding prompt words are displayed in the window 115. In addition, the mobile phone 112 sends the network setting information to the soy milk maker through the established Wi-Fi connection. Then, the mobile phone 112 displays corresponding prompt information in a window based on the network configuration progress of the soy milk maker. For example, the mobile phone 112 displays a window 116, to prompt the user that the soy milk maker is being connected to a network.

After receiving the network setting information sent the mobile phone 112, the soy milk maker actively connects to a Wi-Fi network of the wireless router 11 based on the network setting information. After the soy milk maker is connected to the wireless router, a Wi-Fi module of the soy milk maker switches to a STA mode.

It can be learned from the foregoing that in the proximity discovery scenario, if the first Wi-Fi service runs on the terminal device, the terminal device performs proximity discovery scanning by using the second Wi-Fi path in the idle state, to avoid impact of proximity discovery scanning on performance of the first Wi-Fi service.

It should be noted that, in the proximity discovery scenario, an example in which proximity discovery triggers a connection action is used for description. In another embodiment, proximity discovery may further trigger another action, and the action triggered by proximity discovery is not limited herein.

An implementation principle of Wi-Fi-based OneHop is similar to a principle of proximity discovery, and both are obtaining information such as a Wi-Fi signal strength based on a Wi-Fi scanning result, and then calculating a distance between two devices based on information such as the Wi-Fi signal strength. When the distance between the two devices is less than or equal to a preset threshold, a corresponding action is triggered.

In a Wi-Fi-based OneHop scenario, if the first Wi-Fi service runs on the terminal device, the terminal device performs Wi-Fi scanning by using the second Wi-Fi path in the idle state, to obtain a Wi-Fi scanning result, and calculates a distance between the terminal device and another device based on the Wi-Fi scanning result.

(3) Multi-screen collaboration or projection: When the terminal device obtains a Wi-Fi scanning request for performing a multi-screen collaboration service or a projection service by the user, if data is received or sent on a path of the first Wi-Fi chip, that is, a running Wi-Fi service exists, the terminal device performs Wi-Fi scanning by using a path in the idle state of the second Wi-Fi chip, to establish a Wi-Fi P2P connection to a peer device, and then transmits multi-screen collaboration data or projection data through the Wi-Fi P2P connection.

In a multi-screen collaboration or projection scenario, if a Wi-Fi service is running on the terminal device, the terminal device performs Wi-Fi scanning for the multi-screen collaboration service or the projection service by using the path in the idle state of the second Wi-Fi chip, to avoid impact of Wi-Fi scanning on performance of the currently running Wi-Fi service, and prevent performance deterioration of a newly added Wi-Fi service (such as the projection service).

(4) Conventional Wi-Fi service: Generally, the first Wi-Fi chip is used by default to perform a conventional Wi-Fi service. For example, the conventional Wi-Fi service includes a video service, a news service, a live broadcast service, a shopping service, and a social service. However, if a Wi-Fi service is already performed on a path of the first Wi-Fi chip, a path of the second Wi-Fi chip may also be used for scanning for the conventional Wi-Fi service.

(5) Huawei Share and Phone Clone: For a high-speed transmission application, a download application, and the like, the terminal device may establish a plurality of Wi-Fi connections based on a plurality of concurrent Wi-Fi paths, to improve a data transmission speed or a download speed, to optimize performance of a Wi-Fi service.

For example, in a Huawei Share or Phone Clone scenario, both a transmitter end and a receiver end are terminals with dual Wi-Fi chips, and both can support a plurality of concurrent Wi-Fi paths. Based on two concurrent 5G band Wi-Fi paths, two Wi-Fi P2P connections may be established between the transmitter end and the receiver end. The transmitter end transmits data to the receiver end through two concurrent Wi-Fi P2P connections, to improve a data transmission rate.

Certainly, the terminal device may also concurrently perform a plurality of Wi-Fi services based on the two concurrent 5G band Wi-Fi paths.

For example, refer to a schematic diagram of a Huawei Share scenario shown in FIG. 12A to FIG. 12G. As shown in FIG. 12A to FIG. 12G, a multi-screen collaboration service is implemented between a large screen device 121 and a mobile phone 122. The multi-screen collaboration service is implemented between the large screen device 121 and the mobile phone 122 through a Wi-Fi P2P connection. The mobile phone 122 is a terminal with dual Wi-Fi chips, and can support a plurality of concurrent Wi-Fi paths.

In this case, the mobile phone 122 performs the multi-screen collaboration service by using a 5G band Wi-Fi path of a first Wi-Fi chip.

When performing the multi-screen collaboration service, the mobile phone 122 may perform a Huawei Share service by using a 5G band Wi-Fi path of a second Wi-Fi chip.

In this case, a user needs to transmit a photo in the mobile phone 122 to another mobile phone through Huawei Share. First, the user may tap Gallery 124 on a home screen 123 of the mobile phone 122, to enter an album screen. In response to the tap operation on the Gallery 124, the mobile phone 122 displays an album interface 125. The camera interface 125 includes a window 126 of all photos, a video window 127, and a camera photo window 128. The user may touch and hold the window 126 to select all photos. In response to the touch and hold operation on the window 126, the mobile phone 122 selects all photos. The user selects all the photos, and may tap a share button 129. In response to the tap operation on the analysis button 129, the mobile phone pops up a window 1210. The user may tap the window 1210 to trigger Huawei Share. In response to a touch operation or a tap operation on the window 1210, the mobile phone 122 enables a Huawei Share function, detects that data is received or sent on the path of the first Wi-Fi chip at a current moment, and establishes a Wi-Fi P2P connection to the peer device through the 5G band path of the second Wi-Fi chip. After the Wi-Fi P2P connection is established, the mobile phone 122 may transmit a photo to the peer device through the Wi-Fi P2P connection. After transmission is completed, the mobile phone 122 may display a window 1212, to prompt the user that transmission succeeds.

Through Huawei Share scanning, the mobile phone 122 may obtain a nearby device that has enabled a Huawei Share function. After the nearby device that has enabled the Huawei Share function is scanned, a window 1211 is displayed, and the nearby device that has enabled the Huawei Share function is displayed in the window 1211.

In Huawei Share scanning, the mobile phone 122 may perform Bluetooth scanning, and establish the Wi-Fi P2P connection to the peer device based on a Bluetooth scanning result by using the 5G band path of the second Wi-Fi chip. Certainly, the mobile phone 122 may also perform Wi-Fi scanning. In this case, after obtaining Wi-Fi scanning triggered the user, the mobile phone 122 may first detect whether data is received or sent on the path of the first Wi-Fi chip. Because the mobile phone 122 and the large screen device 121 currently perform the multi-screen collaboration service by using the path of the first Wi-Fi chip, the mobile phone 122 performs Wi-Fi scanning by using a path in the idle state of the second Wi-Fi chip, to establish a Wi-Fi P2P connection.

It should be noted that in a Huawei Share process, the multi-screen collaboration service between the mobile phone 122 and the large screen device 121 is not interrupted. In a process in which the user operates the mobile phone 122 to implement the Huawei Share service, an interface of the mobile phone 122 changes, and content displayed in a multi-screen collaboration window of the large screen device 121 also changes accordingly. FIG. 12A to FIG. 12G do not show an interface change process in the multi-screen collaboration window of the large screen device 121.

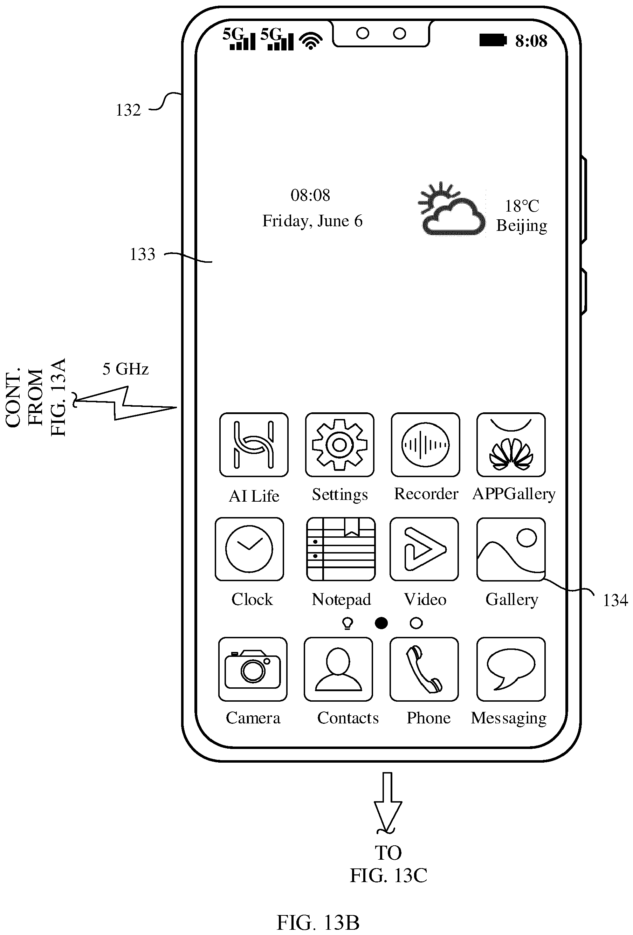

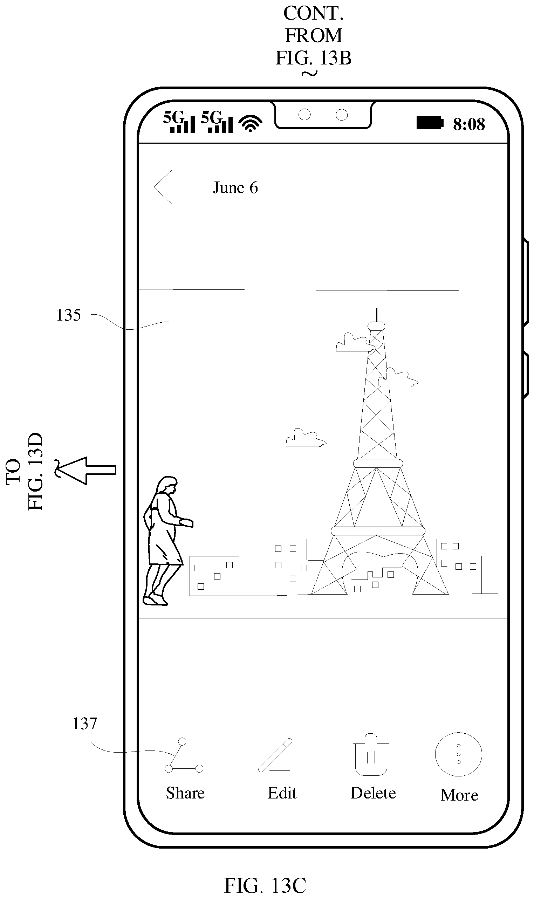

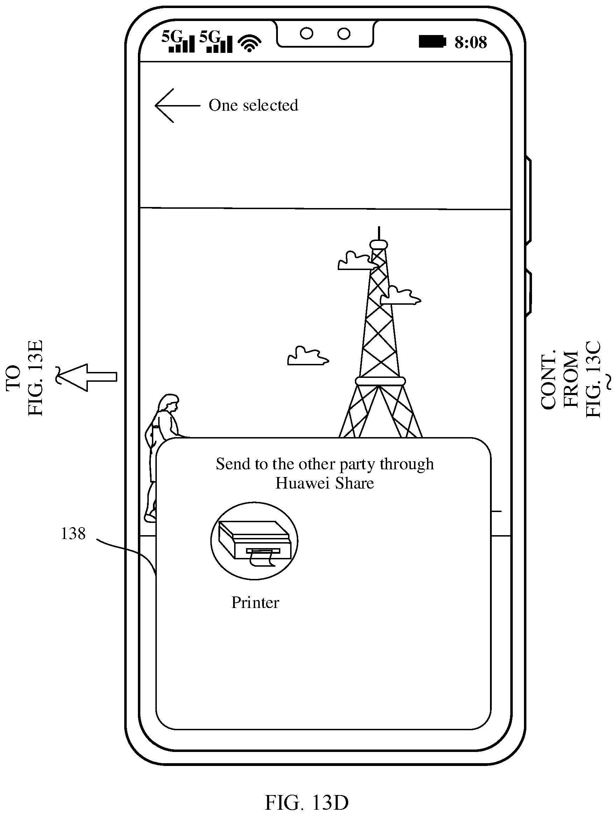

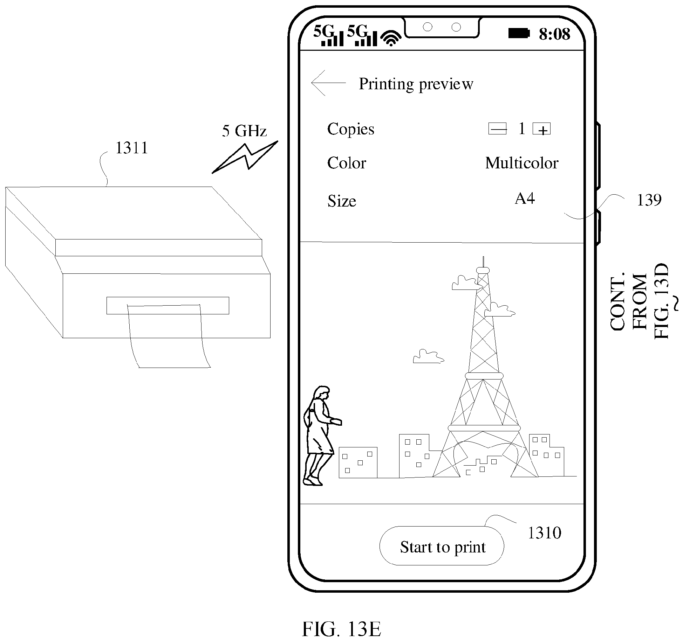

For another example, refer to another schematic diagram of a Huawei Share scenario shown in FIG. 13Ato FIG. 13E. As shown in FIG. 13Ato FIG. 13E, a multi-screen collaboration service is implemented between a large screen device 131 and a mobile phone 132. The multi-screen collaboration service is implemented between the large screen device 131 and the mobile phone 132 through a Wi-Fi P2P connection. The mobile phone 132 is a terminal with dual Wi-Fi chips, and can support a plurality of concurrent Wi-Fi paths.

In this case, the mobile phone 132 performs the multi-screen collaboration service by using a 5G band Wi-Fi path of a first Wi-Fi chip.

When performing the multi-screen collaboration service, the mobile phone 132 may perform a Huawei Share service by using a 5G band Wi-Fi path of a second Wi-Fi chip.

Auser taps Gallery 134 on a home screen 133 of the mobile phone 132, and in response to the tap operation on the Gallery 134, the mobile phone displays an album interface. After the user taps one picture in an album, the mobile phone displays a picture interface 135. The user taps a share button 137 on the picture interface 135. In response to the tap operation on the share button, the mobile phone detects, through Huawei Share scanning, a nearby device that has enabled a Huawei Share function, and displays a window 138. The window 138 displays a found device. The user taps a device icon in the window 138, and in response to the tap operation, the mobile phone 132 displays a print preview interface 139. The user taps a print start button 1310 on the print preview interface 139. In response to the tap operation on the print start button 1310, the mobile phone sends the picture to a printer 1311 through a Wi-Fi P2P connection. After receiving the picture, the printer 1311 automatically prints the picture.

The mobile phone 132 establishes a Wi-Fi P2P connection to the printer 1311 by using the 5G band path of the second Wi-Fi chip.

Similar to FIG. 12A to FIG. 12G, during Huawei Share scanning, if Wi-Fi scanning needs to be used, because the path of the first Wi-Fi chip is used for the multi-screen collaboration service, the path of the second Wi-Fi chip is used to perform the Wi-Fi scanning to establish the Wi-Fi P2P connection.

In a Huawei Share process, the multi-screen collaboration service between the mobile phone 132 and the large screen device 131 is not interrupted. FIG. 13A to FIG. 13E do not show an interface change process in a multi-screen collaboration window of the large screen device 131.

(6) High-speed download service: In a high-speed download scenario, the terminal device may use a plurality of concurrent Wi-Fi paths of dual Wi-Fi chips to implement dual Wi-Fi, triple Wi-Fi, or quad Wi-Fi, to implement network acceleration and improve a download rate.

(7) Game and live broadcast services: In a game or live broadcast scenario, the terminal device may use a plurality of concurrent Wi-Fi paths of dual Wi-Fi chips to implement dual Wi-Fi, triple Wi-Fi, or quad Wi-Fi, to implement network acceleration and reduce a latency.

For example, refer to a schematic diagram of a scenario in which dual-5G band Wi-Fi is used for game service acceleration shown in FIG. 14. As shown in FIG. 14, the mobile phone 141 is separately connected to a 5G band hotspot of a wireless AP device 143 and a 5G band hotspot of a wireless AP device 142, and performs a game service by using the two 5G band hotspots. That is, the mobile phone 141 may offload game data to the two 5G band hotspots, to implement dual-5G Wi-Fi acceleration, to reduce a latency of the game service and improve user experience.

Alternatively, the mobile phone 141 is connected to the 5G band hotspot of the wireless AP device 142, is further connected to a 2.4G band hotspot of the AP device 142, and is connected to the 5G band hotspot of the AP device 143, to implement triple Wi-Fi acceleration.

Alternatively, the mobile phone 141 is connected to the 5G band hotspot of the wireless AP device 142, and is further connected to the 2.4G band hotspot of the AP device 142, and is connected to a 2.4G band hotspot and the 5G band hotspot of the AP device 143, to implement quad Wi-Fi acceleration. (8) Intra-band inter-channel scenario: The terminal device uses a plurality of concurrent Wi-Fi paths, to eliminate band switching overheads in the intra-band inter-channel scenario.

Intra-band inter-channel means that two Wi-Fi connections of the terminal device work on different channels in a same band. For example, refer to a schematic diagram of an intra-band inter-channel scenario shown in FIG. 15. As shown in FIG. 15, the scenario includes two wireless AP devices: a wireless AP device 152 and a wireless AP device 153. The wireless AP device 152 works on a 5 GHz channel 56, and the wireless AP device 152 works on a 5 GHz channel 52.

It may be understood that in a multi-AP networking scenario, a roaming phenomenon may occur on the terminal device.

At a start moment, a mobile phone 151 is connected to a 5G band hotspot of the wireless AP device 152, and the wireless AP device 152 works on the channel 56. In addition, a P2P connection is established between the mobile phone 151 and a notebook computer 153, and work on the channel 56. In other words, both an internet access channel and a P2P channel of the mobile phone 151 are the 5 GHz channel 56.

A user moves with the mobile phone 151 and the notebook computer 153. When the mobile phone 151 is out of signal coverage of the wireless AP device 152 and enters coverage of the wireless AP device 153, the mobile phone 151 disconnects from the wireless AP device 152 and establishes a Wi-Fi connection to the wireless AP device 153.

After the mobile phone 151 establishes the connection to the wireless AP device 153, because the wireless AP device 153 works on the channel 52, the internet access channel of the mobile phone 151 changes from the channel 56 to the channel 52. In this case, a connection between the mobile phone 151 and the notebook computer 153 is still on the channel 56. That is, the internet access channel and the P2P channel of the mobile phone 151 are different 5G channels. In a service processing process, the mobile phone 151 needs to frequently switch a channel.

Frequent channel switching of the mobile phone 151 in the service processing process causes frequency switching overheads, and affects a service latency and throughput. Refer to a schematic diagram of frequency switching overheads in an intra-band inter-channel scenario shown in FIG. 16. As shown in FIG. 16, a P2P channel of a mobile phone is a channel 56, a network access channel is a channel 52, and a shadow part represents a channel working slot. Switching overheads are required for the mobile phone to switch from the channel 52 to the channel 56, and switching overheads are also required for the mobile phone to switch from the channel 56 to the channel 52.

A terminal with a single Wi-Fi chip has only one 5G band path and can use only one path of the same band at a time. The intra-band inter-channel scenario occurs in both a multi-AP networking scenario or a single-AP networking scenario.

However, in this embodiment of this application, the dual Wi-Fi chips can provide two concurrent intra-band Wi-Fi paths, for example, two concurrent 2.4 GHz Wi-Fi paths or two concurrent 5 GHz Wi-Fi paths. Based on two concurrent intra-band Wi-Fi paths, problems such as latency and throughput degradation caused by the intra-band inter-channel scenario are resolved.

For example, for the intra-band inter-channel scenarios corresponding to FIG. 15 and FIG. 16, the mobile phone 151 is a terminal with dual Wi-Fi chips. The mobile phone 151 may be connected to the 5G band hotspot of the wireless AP device 152 through a 5G band path of a first Wi-Fi chip, and establish a P2P connection to the notebook computer 153 through a 5G band path of a second Wi-Fi chip.

At a start moment, both the internet access channel and the P2P channel of the mobile phone 151 are the channel 56. After the devices are moved, an access device of the mobile phone 151 changes from the wireless AP device 152 to the wireless AP device 153, and the internet access channel changes from the channel 56 to the channel 52. As result, the internet access channel of the mobile phone 151 is different from the P2P channel.

Although the channels are different, because different concurrent Wi-Fi paths of the two Wi-Fi chips are used, after channel switching is completed, the mobile phone 151 does not need to perform channel switching in a service processing process, that is, does not need to perform switching between a plurality of channels during service processing. Therefore, frequency switching overheads are not introduced.

In addition, when the mobile phone 151 accesses the wireless AP device 153, a Wi-Fi service currently running on the mobile phone 151 is multi-screen collaboration between the mobile phone and the notebook computer. When obtaining Wi-Fi scanning used to access the wireless AP device 153, the mobile phone 151 detects that data is received or sent on a first Wi-Fi path, and performs Wi-Fi scanning by using a second Wi-Fi path. The second Wi-Fi path is a Wi-Fi path originally connected between the mobile phone 151 and the wireless AP device 153. In this way, even Wi-Fi scanning in a Wi-Fi roaming process does not affect performance of the currently running multi-screen collaboration service.

In other words, based on two concurrent intra-band Wi-Fi paths provided by the terminal with dual Wi-Fi chips, channel switching is not required in a service processing process in the intra-band inter-channel scenario, and a latency and a throughput are not degraded.

It should be noted the service types in Table 2 and chip usage in each service type are merely examples.

Some descriptions of dual Wi-Fi, triple Wi-Fi, and quad Wi-Fi mentioned above are provided.

Multi Wi-Fi may be constructed based on a plurality of concurrent Wi-Fi paths, to improve a network response speed of a Wi-Fi service and improve user experience.

Dual Wi-Fi may be implemented based on two concurrent Wi-Fi paths. Dual Wi-Fi means that a terminal device can be connected to two Wi-Fi hotspots and use the two Wi-Fi hotspots to perform Wi-Fi services. The two Wi-Fi hotspots may belong to a same AP device, or may belong to two different AP devices.

When the two Wi-Fi hotspots belong to two different AP devices, and the two Wi-Fi hotspots are in a same band, the terminal device may be connected to a Wi-Fi hotspot of a first band of an AP device 1 by using a path of a first band of a first Wi-Fi chip, and connected to a Wi-Fi hotspot of the first band of an AP device 2 by using a path of the first band of a second Wi-Fi chip.

In this case, the first band may be a 2.4G band, or may be a 5G band. When the first band is the 2.4G band, the terminal device is connected to two 2.4G band Wi-Fi hotspots. When the first band is the 5G band, the terminal device is connected to two 5G band Wi-Fi hotspots.

When the two Wi-Fi hotspots belong to a same AP device, the terminal device may be connected to a hotspot of the first band of the AP device by using a path of the first band of the first Wi-Fi chip, and connected to a hotspot of the second band of the AP device by using a path of the second band of the second Wi-Fi chip or a path of the second band of the first Wi-Fi chip.

In this case, if the first band is the 2.4G band, the second band is the 5G band; or if the first band is the 5G band, the second band is the 2.4G band.

Similarly, triple Wi-Fi may be implemented based on three concurrent Wi-Fi paths. In a triple Wi-Fi scenario, a 2.4G band path of one Wi-Fi chip is connected to a 2.4G band hotspot, a 5G band path is connected to a 5G band hotspot, and another Wi-Fi chip is connected to a 2.4G band hotspot or a 5G band hotspot.

Quad Wi-Fi may be implemented based on four concurrent Wi-Fi paths. In a quad Wi-Fi scenario, two Wi-Fi chips are connected to each of the 2.4G band hotspot and the 5G band hotspot, and are connected to four Wi-Fi hotspots in total.

In a multi Wi-Fi scenario, the terminal device may allocate Wi-Fi service data to a plurality of Wi-Fi paths for transmission, to improve a data transmission rate.

During specific application, the terminal device may intelligently enable dual Wi-Fi, triple Wi-Fi, or quad Wi-Fi based on a current Wi-Fi service, to perform network acceleration. For example, when it is detected that a current foreground Wi-Fi service is a high-speed download service, triple Wi-Fi network acceleration is intelligently enabled to improve a data download rate.

The terminal device may also provide a control switch, so that the user manually enables or disables multi Wi-Fi acceleration. For example, refer to a schematic block diagram of a Wi-Fi setting interface shown in FIG. 17A to FIG. 17E. As shown in FIG. 17A to FIG. 17E, a home screen 172 of a mobile phone 171 includes applications such as AI Life, Settings 173, APPGallery, and Gallery. A user may tap the Settings 173 to enter a setting interface. In response to the tap operation on the Settings 173, the mobile phone 171 displays a setting interface 174. The setting interface 174 includes a WLAN setting item 175, a Bluetooth setting item, a mobile network setting, and the like. After the user taps the WLAN setting item 175, in response to the tap operation on the WLAN setting item 175, the mobile phone 171 displays a WLAN setting interface 176. The WLAN setting interface 176 includes a dual Wi-Fi option 177 and a triple Wi-Fi option 178.

After the user taps the dual Wi-Fi option 177, in response to the tap operation, the mobile phone displays an interface 179. The interface 179 includes a dual Wi-Fi switch and a supported application, and the user may select a supported application according to a requirement.

After the user taps the triple Wi-Fi option 178, in response to the tap operation, the mobile phone displays an interface 1710. The interface 1710 includes a triple Wi-Fi switch and a supported application, and the user may select a supported application according to a requirement.

After multi Wi-Fi is enabled on the terminal device, the user can manually connect the terminal device to a plurality of hotspots. After the terminal device is connected to a plurality of hotspots, network acceleration may be provided for a Wi-Fi service.

For example, refer to a schematic diagram of multi Wi-Fi network acceleration in a video download scenario shown in FIG. 18A to FIG. 18D. As shown in FIG. 18A to FIG. 18D, a mobile phone 181 is separately connected to a wireless AP device 182 and a wireless AP device 183. The mobile phone 181 is connected to a 2.4 GHz hotspot and a 5 GHz hotspot of the wireless AP device 182, and the mobile phone 181 is connected to a 5 GHz hotspot of the wireless AP device 183. In this case, two Wi-Fi icons are displayed on a status bar of the mobile phone 181, and two Wi-Fi icons of the wireless AP device 182 are displayed in combination.

After the mobile phone 181 is connected to the three Wi-Fi hotspots, a user may tap Video 185 on a home screen 184 of the mobile phone 181, to enter a homepage of the Video 185. Then, the user taps "Video 1", and the mobile phone 181 displays a play interface 186 of the video 1. The play interface 186 includes a download button 187. After the user taps the download button 187, in response to the tap operation, the mobile phone adds the "Video 1" to a download queue, and downloads the video via a Wi-Fi network. In this case, because the video application is set to an application that supports triple Wi-Fi acceleration in the triple Wi-Fi setting interface in FIG. 17A to FIG. 17E, the mobile phone 181 downloads the "Video 1" through three Wi-Fi paths, and displays prompt information 188 on the play interface 186.

Certainly, the mobile phone 181 may also automatically detect a current Wi-Fi service. When detecting that the Wi-Fi service is a video cache service, because video cache is a high-speed download service, the mobile phone 181 uses triple Wi-Fi to accelerate the video cache service.

In this embodiment of this application, the terminal device based on dual Wi-Fi chips can provide at least two concurrent Wi-Fi paths, and may perform Wi-Fi scanning through a Wi-Fi path in an idle state, so that Wi-Fi scanning does not affect a currently running Wi-Fi service. In some embodiments, multi Wi-Fi concurrent acceleration may also be implemented based on the at least two concurrent Wi-Fi paths, to improve a network response speed. In some embodiments, based on the at least two concurrent Wi-Fi paths, at least two Wi-Fi services may be concurrent, and a plurality of low-latency Wi-Fi services may be concurrent.

Refer to a schematic flowchart of processing a plurality of low-latency services shown in FIG. 19. The procedure may include the following steps.

Step S1901: A terminal device performs system initialization and enables Wi-Fi.

Step S1902: The terminal device performs a first Wi-Fi service by using a first Wi-Fi path.

It should be noted that the terminal device is, for example, a terminal with dual Wi-Fi chips, and can provide at least three concurrent Wi-Fi paths.

The first Wi-Fi path is a path of a first Wi-Fi chip, and may be a 2.4 GHz path, or may be a 5 GHz path. The first Wi-Fi service may be of any type, and the first Wi-Fi service may be an internet access service, for example, news browsing by using Wi-Fi, or may be a latency-sensitive service, for example, a projection service or a multi-screen collaboration service.

Step S1903: The terminal device detects whether there are dual-path latency-sensitive Wi-Fi services. If yes, step S1904 is to be performed, or if no, step S1905 is to be performed.

It should be noted that the dual-path latency-sensitive Wi-Fi services are two low-latency Wi-Fi services, and the low-latency Wi-Fi service is, for example, a projection service, a multi-screen collaboration service, a game service, and a video live broadcast service.

In addition to the first Wi-Fi service, if there are two other low-latency Wi-Fi services, the terminal device determines that there are dual-path latency-sensitive Wi-Fi services; otherwise, if there are no two low-latency Wi-Fi services, the terminal device determines that there are no dual-path latency-sensitive Wi-Fi services.

For example, the terminal device currently performs the first Wi-Fi service by using the first Wi-Fi path, and the first Wi-Fi service is an internet access service. In this case, the user triggers a projection service, and the projection service is a low-latency Wi-Fi service. Because there is only one low-latency Wi-Fi service, it is determined that there are no dual-path latency-sensitive Wi-Fi services. In this case, the first Wi-Fi path is continuously used to perform the internet access service, and the second Wi-Fi path is started to be used to perform the projection service. The second Wi-Fi path is usually a 5 GHz path of a second Wi-Fi chip.

After triggering one projection service, the user triggers another projection service. In this case, because there are two low-latency Wi-Fi services, the user determines that there are dual-path latency-sensitive Wi-Fi services and enables a triple-path mode.

Step S1904: The terminal device enables the triple-path mode, where the second Wi-Fi path is used to perform a second Wi-Fi service, and a third Wi-Fi path is used to perform a third Wi-Fi service.

It should be noted that, generally, the second Wi-Fi path may be a path of the first Wi-Fi chip, and the third Wi-Fi path may be a path of the second Wi-Fi chip. For example, the first Wi-Fi path is a 2.4 GHz path of the first Wi-Fi chip, the second Wi-Fi path is a 5 GHz path of the first Wi-Fi chip, and the third Wi-Fi path is a 5 GHz path of the second Wi-Fi chip.

Certainly, both the second Wi-Fi path and the third Wi-Fi path may be paths of the second Wi-Fi chip. For example, the first Wi-Fi path is a 2.4 GHz or 5 GHz path of the first Wi-Fi chip, the second Wi-Fi path is a 2.4 GHz path of the second Wi-Fi chip, and the third Wi-Fi path is a 5 GHz path of the second Wi-Fi chip.

It should be noted that, in another scenario, even if there are no dual-path latency-sensitive Wi-Fi services, the triple-path mode may also be enabled. That is, three Wi-Fi paths are used to concurrently perform three Wi-Fi services, and the three Wi-Fi services may be of any service types.

Step S1905: The terminal device performs the first Wi-Fi service by using the first Wi-Fi path, or performs the first Wi-Fi service by using the first Wi-Fi path, and performs the second Wi-Fi service by using the second Wi-Fi path.

It should be noted that the first Wi-Fi service is a latency-insensitive service, for example, the first Wi-Fi service is an internet access service. In addition, the first Wi-Fi service occupies a 5 GHz path. In this case, when there are dual-path latency-sensitive Wi-Fi services, the first Wi-Fi service may be allocated to a 2.4 GHz path, and two 5 GHz paths are used to perform the dual-path latency-sensitive Wi-Fi services, to ensure low latencies of the dual-path latency-sensitive Wi-Fi services.

For example, the first Wi-Fi service is an internet access service, and the internet access service uses a 5 GHz path of the first Wi-Fi chip. After the user triggers dual-path projection services, the terminal device detects that the 5 GHz path of the first Wi-Fi chip is occupied, allocates the internet access service to the 2.4 GHz path of the first Wi-Fi chip, and then performs the dual-path projection services by using the 5 GHz path of the first Wi-Fi chip and the 5 GHz path of the second Wi-Fi chip, to ensure a latency requirement of the projection service.

If the terminal device can provide only two concurrent 5G band Wi-Fi paths, the terminal device can provide three concurrent Wi-Fi dual-paths. At a moment, the terminal device performs a non-low-latency service by using a 5G band Wi-Fi path, for example, performs a conventional internet access service by using a 5G band Wi-Fi path. In addition, the terminal device further performs a first path of latency-sensitive Wi-Fi service (for example, a projection service) by using another 5G band Wi-Fi path. In this case, after obtaining a Wi-Fi scanning request used to trigger a second path of latency-sensitive Wi-Fi service, the terminal device detects that a service occupying the 5G band Wi-Fi path is not a latency-sensitive Wi-Fi service, may first switch the non-low-latency service from the 5G band path to a 2.4G band path in an idle state, and perform the non-low-latency service by using the 2.4G band path in the idle state. In this way, the 5G band path originally occupied by the non-low-latency service is released, and is in the idle state. In this case, a Wi-Fi path in the idle state includes the released 5G band path.

In response to the Wi-Fi scanning request, the terminal device may perform Wi-Fi scanning by using only the released 5G band path, and perform, based on a Wi-Fi scanning result, the second path of latency-sensitive Wi-Fi service by using the released 5G band path.

Certainly, if the terminal device needs to obtain a full-band scanning result, because the Wi-Fi path in the idle state has a path of only one band, the terminal device may detect a Wi-Fi service type on the occupied 2.4G band Wi-Fi path. If the Wi-Fi service type is a non-low-latency service, the terminal device may perform scanning by using the 2.4G band path corresponding to the non-low-latency service and the released 5G band path, to obtain scanning results of the 2.4G band and the 5G band, and perform the second path of latency-sensitive Wi-Fi service by using the released 5G band path based on the scanning results.

It may be understood that, Wi-Fi scanning affects performance of the non-low-latency service that is currently performed on the 2.4G band path.

In the foregoing description, the terminal device first switches the non-low-latency service that occupies the 5G band path to the 2.4G band path, and then performs Wi-Fi scanning. However, in some other embodiments, after obtaining the Wi-Fi scanning request used to trigger the second path of latency-sensitive Wi-Fi service, the terminal device may also determine that the Wi-Fi path currently in the idle state includes the 2.4G band path, perform Wi-Fi scanning by using the 2.4G band path to obtain a scanning result in the 2.4 band, then switch a non-low-latency service occupying the 5G band path to the 2.4G band path, and perform the non-low-latency service by using the 2.4G band path in the idle state. Then, the terminal device performs Wi-Fi scanning by using the released 5G band path, to obtain a scanning result in the 5G band. Finally, the terminal device performs the second path of latency-sensitive Wi-Fi service by using the released 5G band path based on the scanning results of the 2.4G band and the 5G band.

It should be noted that the second path of latency-sensitive Wi-Fi service may be usually a projection service, that is, dual-path projection services are concurrent. For example, the first path of latency-sensitive Wi-Fi service is a first projection service, and the second path of latency-sensitive Wi-Fi service is a second projection service. At a moment, the terminal device that can provide three concurrent Wi-Fi paths currently performs an internet access service by using the 5G band path of the first Wi-Fi chip, and performs the first projection service by using the 5G band path of the second Wi-Fi chip. After obtaining the Wi-Fi scanning request used to trigger the second projection service, the terminal device may switch the internet access service to the 2.4G band path of the first Wi-Fi chip, release the 5G band path of the first Wi-Fi chip, and then perform Wi-Fi scanning by using the 5G band path of the first Wi-Fi chip and the 2.4G band path of the first Wi-Fi chip, to obtain Wi-Fi scanning results, establish a Wi-Fi P2P connection by using the 5G band path of the first Wi-Fi chip based on the Wi-Fi scanning result, and finally perform the second projection service based on the established Wi-Fi P2P connection. The following provides an example for description with reference to a specific scenario.

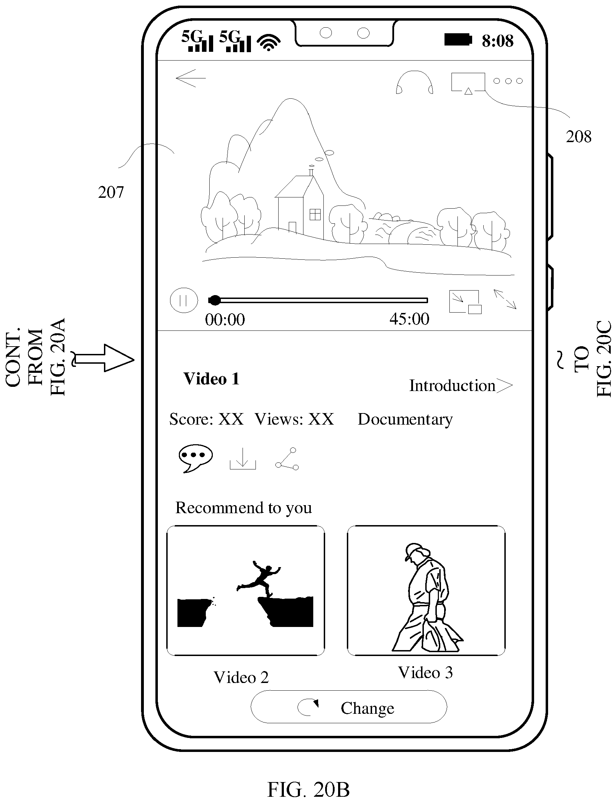

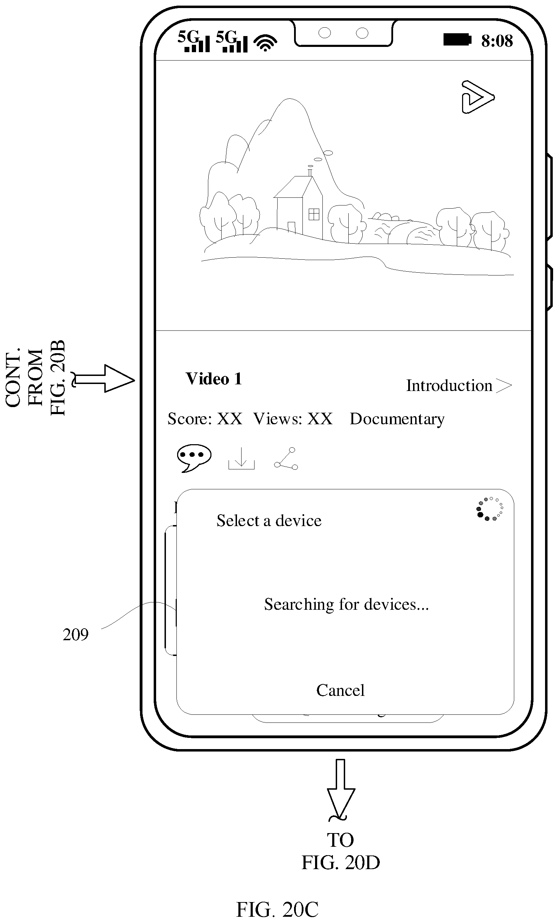

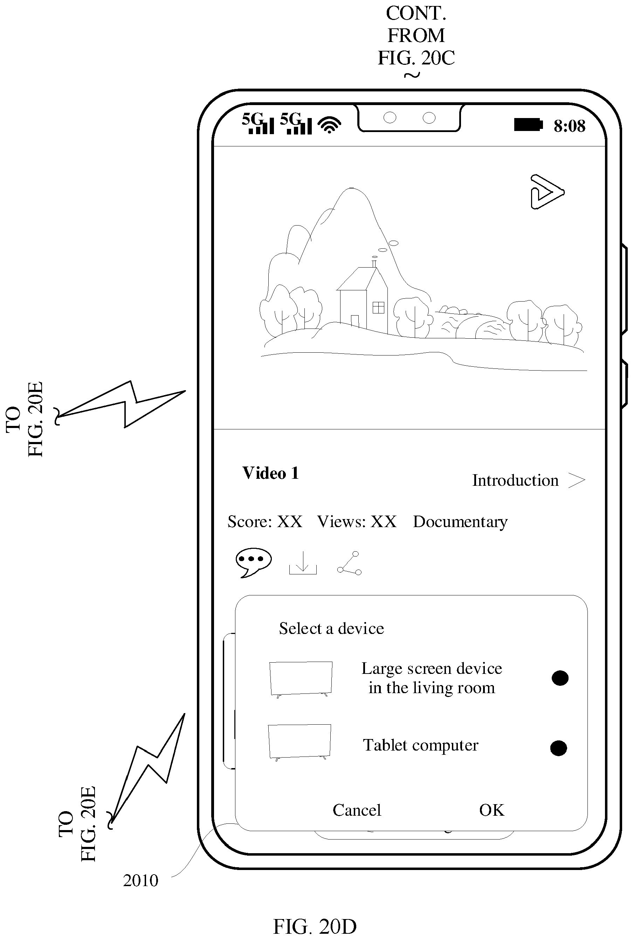

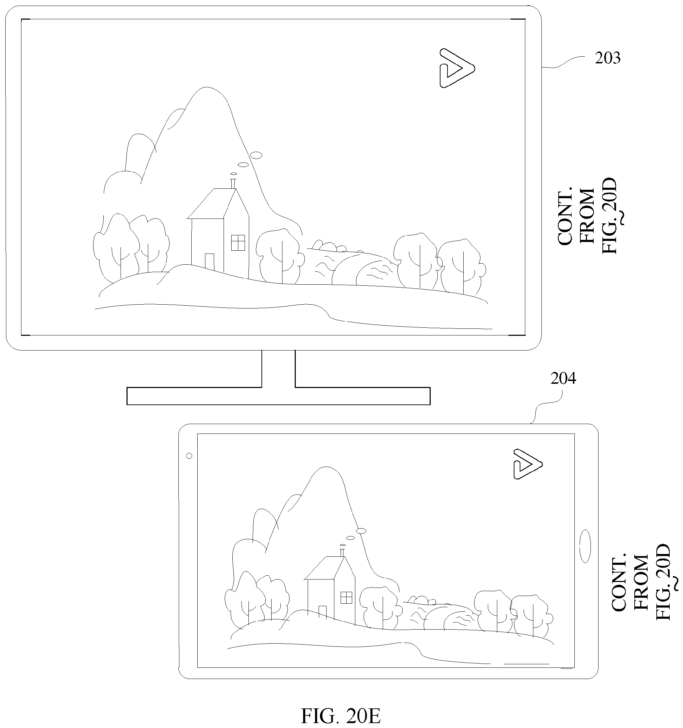

For example, FIG. 20Ato FIG. 20E show a schematic diagram of a dual-path projection scenario. As shown in FIG. 20A to FIG. 20E, a mobile phone 201 is connected to a wireless router 202, and a user needs to project a "Video 1" onto both a large screen device 203 and a tablet computer 204.

A home screen 205 of the mobile phone 201 includes applications such as AI Life, Settings, APPGallery, and Video 206. After the user taps the Video 206, in response to the tap operation, the mobile phone 201 displays an interface of the Video 206. The user finds "Video 1" on the interface of the Video 206, and enters a play interface 207 of the "Video 1". The play interface 207 includes a projection button 208. In this case, the mobile phone 201 plays a video via a Wi-Fi network. That is, a first Wi-Fi service is a video play service. It is assumed that the mobile phone 201 is connected to the wireless router 202 through a 2.4 GHz path of a first Wi-Fi chip, to perform the video play service.

After the user taps the projection button 208, in response to the tap operation, the mobile phone 201 triggers a Wi-Fi scanning request, and pops up a window 209 to prompt the user that a nearby Wi-Fi device is currently being searched for. In a process of searching for a nearby device, the mobile phone 201 may first detect whether data is received or sent on a first Wi-Fi path. Because the mobile phone 201 currently uses the path of the first Wi-Fi chip to play a video, it is determined that data is received and sent on the first Wi-Fi path, and the mobile phone performs Wi-Fi scanning by using a Wi-Fi path in an idle state to obtain information about a nearby Wi-Fi device, so that Wi-Fi scanning does not affect the current video play service.

After obtaining information about a nearby device through Wi-Fi scanning, the mobile phone 201 displays a window 2010, and a device onto which projection can be performed is displayed in the window 2010. If the user needs to simultaneously perform projection onto the large screen device 203 and the tablet computer 204, the user selects "Large screen device in the living room" and "Tablet computer" in the window 2010, and then taps an OK option in the window 2010. In response to the tap operation on the OK option, the mobile phone 201 initiates dual-path projection services. In this case, the mobile phone 201 detects that there are dual-path latency-sensitive Wi-Fi services, and enables a triple-path mode, that is, uses a 5 GHz path of the first Wi-Fi chip as a first projection path, and uses a 5 GHz path of a second Wi-Fi chip as a second projection path.

The mobile phone 201 establishes a P2P connection to the large screen device 203 through the first projection path, and transmits projection data to the large screen device 203 through the P2P connection, to project the "Video 1" onto the large screen device 203. The mobile phone 201 establishes a P2P connection to the tablet computer 204 through the second projection path, and transmits projection data to the tablet computer 204 through the P2P connection, to project the "Video 1" onto the tablet computer 204.

After the dual-path projection process, the mobile phone 201 may still perform the internet access service by using the 2.4 GHz path of the first Wi-Fi chip.

It can be learned from the foregoing that the terminal with dual Wi-Fi chips provides the plurality of concurrent Wi-Fi paths, the terminal device is connected to a wireless router while dual-path Wi-Fi projection is implemented. In addition, the two projection paths and an internet access path are independent of each other and can be concurrent, so that when the terminal device is connected to the wireless router, smooth dual-path projection without frame freezing can be ensured.

It should be noted that FIG. 20A to FIG. 20E show a scenario in which projection is simultaneously initiated and content of the two paths of projection is the same. However, in another embodiment, two paths of projection may be initiated successively, and content of the two paths of projection may be different. For example, the mobile phone 201 may first initiate the first projection service, and then initiate the second projection service.

For another example, refer to schematic diagrams of a scenario in which a multi-screen collaboration service and a projection service are concurrent shown in FIG. 21(a)-1 to FIG. 21(e)-3. As shown in FIG. 21(a)-1 and FIG. 21(a)-2, a mobile phone 211 accesses a wireless router 212, that is, the mobile phone 211 is connected to a Wi-Fi hotspot of the wireless router 212. In addition, the mobile phone 211 and a large screen device 213 perform a multi-screen collaboration service. A home screen 215 of the mobile phone 211 includes applications such as AI Life, Settings, Video 216, and Gallery. A multi-screen collaboration window 214 is displayed on the large screen device 213, and content displayed on the multi-screen collaboration window 214 is the same as content displayed on an interface of the mobile phone 211, and changes with content displayed on the mobile phone 211.

During specific application, the mobile phone 211 may access a Wi-Fi hotspot of the wireless router 212 by using a 2.4 GHz path of a first Wi-Fi chip, then establish a P2P connection to the large screen device 213 by using a 5 GHz path of a second Wi-Fi chip in a manner such as "OneHop", and transmit multi-screen collaboration data based on the P2P connection, to implement the multi-screen collaboration service.

It may be understood that, after the mobile phone 211 accesses the Wi-Fi hotspot of the wireless router 212, when triggering Wi-Fi scanning used to establish the P2P connection, the mobile phone 211 may first determine whether a Wi-Fi service is currently running, determine a Wi-Fi path used by the Wi-Fi service, then determine a Wi-Fi path in an idle state based on usage of the Wi-Fi path, then perform Wi-Fi scanning by using the Wi-Fi path in the idle state, and establish the P2P connection to the large screen device 213. Therefore, the currently running Wi-Fi service is not affected by Wi-Fi scanning.

As shown in FIG. 21(b)-1 and FIG. 21(b)-2, after the user taps the Video 216 on the home screen 215 of the mobile phone 211, in response to the tap operation, the mobile phone 211 displays an interface of the Video 216. The user finds "Video 1" on the interface of the Video 216, and enters a play interface 217 of the "Video 1". The play interface 217 includes a projection button 218. The user may tap the projection button 218 to initiate Wi-Fi scanning. In response to the tap operation on the projection button 218, the mobile phone 211 invokes a Wi-Fi module to perform Wi-Fi scanning, and pops up a window 219.

As shown in FIG. 21(c)-1 and FIG. 21(c)-2, prompt information indicating that a device is being searched for is displayed in the window 219. When searching a nearby device, the mobile phone 211 may first determine whether a Wi-Fi service is currently running. In this case, the mobile phone 211 currently performs an internet access service by using the 2.4 GHz path of the first Wi-Fi chip, and performs the multi-screen collaboration service by using the 5 GHz 5G path of the first Wi-Fi chip, that is, a Wi-Fi service is currently running, and the Wi-Fi path in the idle state is a path of the second Wi-Fi chip. The mobile phone 211 performs Wi-Fi scanning by using the 5 GHz path of the second Wi-Fi chip. In this way, Wi-Fi scanning of the projection service does not affect the currently running multi-screen collaboration service and the internet access service.

As shown in FIG. 21(d)-1 and FIG. 21(d)-2, after obtaining information about a nearby device, the mobile phone 211 displays a window 2110, and a nearby device onto which project can be performed is displayed in the window 2110. After selecting "Large screen device in the living room", the user may tap an OK option, to determine that projection onto the "Large screen device in the living room" is performed. In response to the tap operation on the OK option, the mobile phone 211 performs a P2P connection procedure by using the 5 GHz path of the second Wi-Fi chip, and establishes a P2P connection to a large screen device 2111. After the P2P connection is established, the mobile phone 211 transmits projection data to the large screen device 2111 by using the 5 GHz path of the second Wi-Fi chip, to project the "Video 1" onto the large screen device 2111.

It may be understood that after obtaining the Wi-Fi scanning request used for the projection service, the mobile phone 211 may determine that there are dual-path latency-sensitive Wi-Fi services currently, and enable the three-path mode.

As shown in FIG. 21(e)-1 to FIG. 21(e)-3, after the mobile phone 211 performs projection onto the large screen device 2111, Wi-Fi services that are running on the mobile phone 211 include the internet access service, the multi-screen collaboration service, and the projection service. The mobile phone 211 performs the internet access service by using the 2.4 GHz path of the first Wi-Fi chip, performs the multi-screen collaboration service by using the 5 GHz path of the first Wi-Fi chip, and performs the projection service by using the 5 GHz path of the second Wi-Fi chip. That is, concurrency of three Wi-Fi services is implemented, and the three Wi-Fi services are independent of each other and do not affect each other.

In this embodiment of this application, the terminal device with the dual Wi-Fi chips may intelligently enable one or more Wi-Fi paths based on a foreground Wi-Fi service type, to meet priorities of different Wi-Fi services.

For example, the terminal with dual Wi-Fi chips can provide three concurrent Wi-Fi paths: the 2.4 GHz path and the 5 GHz path of the first Wi-Fi chip, and the 2.4 GHz path or the 5 GHz path of the second Wi-Fi chip.

Refer to a schematic block diagram of a Wi-Fi path concurrency procedure shown in FIG. 22. As shown in FIG. 22, the procedure may include the following steps.

Step S2201: A terminal device performs system initialization and enables Wi-Fi.

Step S2202: The terminal device works on a first Wi-Fi chip.

It should be noted that, that the terminal device works on the first Wi-Fi chip means that the terminal device uses the first Wi-Fi chip to work by default. For example, if no Wi-Fi service is running on the terminal device, and a user triggers a Wi-Fi service at a moment, the terminal device uses, by default, the first Wi-Fi chip to perform the Wi-Fi service triggered by the user.

Step S2203: The terminal device detects a foreground Wi-Fi service type. If the foreground Wi-Fi service type is a conventional Wi-Fi service, step S2204 is to be performed. If the foreground Wi-Fi service type is a low-latency service, step S2205 is to be performed. If the foreground Wi-Fi service type is a high-speed download service, step S2206 is to be performed.

It should be noted that the foreground Wi-Fi service type is a Wi-Fi service type of a foreground application. For example, the Wi-Fi service type may be classified as: a conventional Wi-Fi service, a low-latency service, and a high-speed download service. The conventional Wi-Fi service may include, for example, video, news, news, and social services. The low-latency service may include, for example, multi-screen collaboration, projection, gaming, and live broadcasting services. The high-speed download service may include, for example, a video cache, an application market, an online disk, and a cloud disk.

For example, a correspondence between a service type and a Wi-Fi path is shown in Table 3 below.

**Table 3**

| Service type | First Wi-Fi path | Second Wi-Fi path | Third Wi-Fi path | Remark |
|---|---|---|---|---|
| Conventional Wi-Fi service | √ | / | / | |
| Low-latency service | √ (Conventional Wi-Fi service) | √ (Game or live broadcast service) | √ (Projection service) | Game, live broadcast, and projection services |
| High-speed download service | √ | √ | √ | Huawei Share, Phone Clone, APPGallery, Online Disk, Cloud Disk, Video Cache, and the like |

In Table 3, "√" indicates that the Wi-Fi path is used, and "/" indicates that the Wi-Fi path is not used.

In Table 3, when the current Wi-Fi service is a conventional Wi-Fi service and only the conventional Wi-Fi service exists, the terminal device performs the conventional Wi-Fi service by using only the first Wi-Fi path.

When the foreground Wi-Fi service is a low-latency service, and there is a conventional Wi-Fi service and another low-latency service in the background, the terminal device performs the conventional Wi-Fi service by using the first Wi-Fi path, enables the second Wi-Fi path, and allocates the foreground low-latency service to the second Wi-Fi path, that is, performs the foreground low-latency service by using the second Wi-Fi path. If there is still one a low-latency service in the background, a third Wi-Fi path is enabled, and the third Wi-Fi path is used to perform the low-latency service.

When the foreground service type is a high-speed download service, three Wi-Fi paths are simultaneously used to perform the Wi-Fi service. If another Wi-Fi service is running in the background and the another Wi-Fi service occupies a Wi-Fi path, the occupied Wi-Fi path is released, and the released Wi-Fi path is used to perform the foreground high-speed download Wi-Fi service.

Step S2204: The terminal device works on the first Wi-Fi path.

In this case, if only a conventional Wi-Fi service runs on the terminal device, the first Wi-Fi path is used to perform the conventional Wi-Fi service.

Step S2205: The terminal device works on the first Wi-Fi path and the second Wi-Fi path.

In this case, the first Wi-Fi path of the terminal device is currently used to perform a conventional Wi-Fi service. If the foreground Wi-Fi service is a low-latency service, the second Wi-Fi path is enabled, and the second Wi-Fi path is used to perform the foreground low-latency service. Certainly, if there is another low-latency service in addition to the foreground low-latency service, the third Wi-Fi path is enabled, and the third Wi-Fi path is used to perform the another low-latency service.

Step S2206: The terminal device works on the first Wi-Fi path, the second Wi-Fi path, and the third Wi-Fi path.

During specific application, the terminal device may be separately connected to three different Wi-Fi hotspots through three Wi-Fi paths. To be specific, the terminal device is connected to a first Wi-Fi hotspot through the first Wi-Fi path, is connected to a second Wi-Fi hotspot through the second Wi-Fi path, and is connected to a third Wi-Fi hotspot through the third Wi-Fi path. For example, as shown in FIG. 18A to FIG. 18D, when the mobile phone 181 detects that the foreground Wi-Fi service type is video caching, the mobile phone 181 is connected to the 2.4 GHz hotspot and the 5 GHz hotspot of the wireless router 182 through the first Wi-Fi path and the second Wi-Fi path respectively, is connected to the 5 GHz hotspot of the wireless router 183 through the third Wi-Fi path, and simultaneously uses the three Wi-Fi paths to perform network concurrency acceleration, to improve a video caching rate.

It can be learned from the foregoing that in this embodiment of this application, based on the at least two concurrent Wi-Fi paths provided by the terminal with dual Wi-Fi chips, impact of Wi-Fi scanning on a running Wi-Fi service can be resolved, concurrency of a plurality of Wi-Fi services can be implemented, and the plurality of concurrent Wi-Fi services do not affect each other.

In a process of a plurality of concurrent Wi-Fi services, Wi-Fi scanning of the concurrent services can also be prevented from affecting a currently running Wi-Fi service.

For example, after obtaining a first Wi-Fi scanning request, the terminal device detects that no Wi-Fi service is currently running, and then uses a Wi-Fi path in an idle state to perform Wi-Fi scanning, to obtain a first Wi-Fi scanning result, and performs the first Wi-Fi service by using the first Wi-Fi path based on a first Wi-Fi scanning result. That is, the terminal device currently performs the first Wi-Fi service by using the first Wi-Fi path.

During scanning by using the Wi-Fi path in the idle state, Wi-Fi scanning may be performed by using a plurality of paths of different bands, to obtain a full-band and full-channel scanning result, and one of the Wi-Fi paths is used to perform a Wi-Fi service based on the scanning result. In other words, during Wi-Fi scanning, the terminal device may perform scanning by using a plurality of Wi-Fi paths of two different bands, to obtain a required scanning result. When performing a Wi-Fi service based on the Wi-Fi scanning result, the terminal device may perform the Wi-Fi service by using one of the Wi-Fi paths in the idle state.

The terminal device herein can provide three concurrent Wi-Fi paths, the first Wi-Fi chip can provide concurrent 2.4 GHz and 5 GHz paths, and the second Wi-Fi chip can provide a concurrent 2.4 GHz or 5 GHz path. The first Wi-Fi path is set as a path of the first Wi-Fi chip by default.

Subsequently, the terminal device obtains a second Wi-Fi scanning request, in response to the second Wi-Fi scanning request, detects whether a Wi-Fi service is currently running, and determines a Wi-Fi path used by the Wi-Fi service. In this case, the terminal device detects that the first Wi-Fi service exists, and the first Wi-Fi service is using the first Wi-Fi path. Based on this, the terminal device may determine that the Wi-Fi path currently in the idle state is one of the path of the second Wi-Fi chip and the path of the first Wi-Fi chip. The terminal device responds to the second Wi-Fi scanning request by using a Wi-Fi path in the idle state, and obtains a second Wi-Fi scanning result, to perform the second Wi-Fi service by using a remaining path of the first Wi-Fi chip.

Then, the terminal device obtains a third Wi-Fi scanning request, and the terminal device detects that currently running Wi-Fi services are the first Wi-Fi service and the second Wi-Fi service, and that a Wi-Fi path that is currently in an idle state is a path of the second Wi-Fi chip. The terminal device performs Wi-Fi scanning by using the path of the second Wi-Fi chip, to perform the third Wi-Fi service.

In this way, the terminal device implements concurrency of the first Wi-Fi service, the second Wi-Fi service, and the third Wi-Fi service based on the three concurrent Wi-Fi, and in a process of concurrent services, Wi-Fi scanning does not affect a running Wi-Fi service.

Wi-Fi scanning may be performed to establish a connection and perform a service based on the established connection. For example, a mobile phone performs Wi-Fi scanning to obtain information about a nearby Wi-Fi hotspot, and performs a Wi-Fi access process based on the information about the Wi-Fi hotspot, to connect to a wireless router and perform an internet access service. For another example, the mobile phone performs P2P scanning to obtain information about a nearby P2P device, establishes a P2P connection based on the information about the P2P device, and then performs a service such as multi-screen collaboration or projection based on the P2P connection.

Wi-Fi scanning may also be performed to obtain a scanning result and an analysis result is obtained through analysis of the scanning result, for example, in Wi-Fi interference detection and background scanning scenarios.

FIG. 23 is a schematic diagram of a structure of a terminal device according to an embodiment of this application. The terminal device includes a processor 231, a transceiver 232, a memory 233, and a Wi-Fi chip 234. The processor 231 includes one or more processing cores. The processor 231 runs a software program and a module, to execute various functional applications and perform information processing. The transceiver 232 may be implemented as a communication component, and the communication component may be a baseband chip. The transceiver 232, the memory 233, and the Wi-Fi chip 234 may be connected to the processor 231 through the bus. The memory 233 may be configured to store at least one program instruction, and the processor 231 is configured to execute the at least one program instruction, to implement the technical solutions in the foregoing embodiments. Implementation principles and technical effects thereof are similar to those of the foregoing method embodiments. Details are not described herein again.

In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). The memory is any other medium that can be used to carry or store expected program code in a form of instructions or a data structure and that can be accessed by a computer, but is not limited thereto.

In this embodiment of this application, the terminal device includes at least two Wi-Fi chips, and a type and a model of a Wi-Fi chip may be set based on an actual requirement.

Alternatively, the memory in this embodiment of this application may be a circuit or any other apparatus that can implement a storage function, and is configured to store program instructions and/or data.

All or a part of the method provided in the embodiments of this application may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on the computer, the procedures or functions according to embodiments of this application are all or partially generated. The computer may be a general-purpose computer, a dedicated computer, a computer network, a network device, user equipment, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, an SSD), or the like.

FIG. 24 is a schematic block diagram of a structure of a Wi-Fi scanning control apparatus according to an embodiment of this application. The Wi-Fi scanning control apparatus may implement the foregoing embodiments, for example, some or all of the technical solutions of the method embodiments, by using software, hardware, or a combination thereof. In other words, the Wi-Fi scanning control apparatus has a function of implementing the Wi-Fi scanning control method in the foregoing embodiments. The function may be implemented by hardware, or may be implemented by hardware executing corresponding software. The hardware or software includes one or more modules corresponding to the foregoing function, and the module may be software and/or hardware.

The apparatus includes at least two Wi-Fi chips, and can provide at least two concurrent Wi-Fi paths. The apparatus may include a first using module 241, a first scanning request obtaining module 242, a determining module 243, and a first Wi-Fi scanning module 244.

The first using module 241 is configured to perform a first Wi-Fi service by using a first Wi-Fi path. For example, a 5G band path of the first Wi-Fi chip is used to perform a first projection service, and a 2.4G band path of the first Wi-Fi chip is used to perform an internet access service. In this case, the first Wi-Fi path includes the 2.4G band path and the 5G band path of the first Wi-Fi chip, and the first Wi-Fi service includes the first projection service and the internet access service. Certainly, the first Wi-Fi service may also include only one service, and the first Wi-Fi path may also include one path. The first Wi-Fi service may be of any type.

The first scanning request obtaining module 242 is configured to obtain a Wi-Fi scanning request. The Wi-Fi scanning request may be any scanning request, and may be a request used to trigger proximity discovery scanning, or may be a background scanning request, or may be a request used to establish a Wi-Fi P2P connection to perform a projection service. The Wi-Fi scanning request may be triggered by an upper-layer application, and may be specifically actively triggered by an application, or may be triggered by a user.

The determining module 243 is configured to determine a first target path from a second Wi-Fi path in an idle state, where the at least two Wi-Fi paths include the first Wi-Fi path and the second Wi-Fi path. For example, if the second Wi-Fi path includes three Wi-Fi paths, two paths of different bands may be determined as the first target path.

The first Wi-Fi scanning module 244 is configured to: in response to the Wi-Fi scanning request, perform Wi-Fi scanning by using the first target path.

In some possible implementations, the first target path includes a Wi-Fi path of a first band and a Wi-Fi path of a second band.

In some possible implementations, if the second Wi-Fi path includes a Wi-Fi path of only one band, the apparatus may further include: a first service type determining module, configured to determine whether a Wi-Fi service of a preset type exists on a Wi-Fi path of a target band in the first Wi-Fi path, where the first Wi-Fi service includes at least two Wi-Fi services, and the first Wi-Fi path includes at least two Wi-Fi path;
a first path determining module, configured to: if the Wi-Fi service of the preset type exists on the Wi-Fi path of the target band, determine a Wi-Fi path corresponding to the Wi-Fi service of the preset type as a second target path; and
a second Wi-Fi scanning module, configured to: in response to the Wi-Fi scanning request, perform Wi-Fi scanning by using the second target path and a third target path, where the target band is different from a band of the second Wi-Fi path, and the second Wi-Fi path includes the third target path.

In some possible implementations, the Wi-Fi service of the preset type includes a non-low-latency service.

In some possible implementations, the apparatus may further include: a foreground service determining module, configured to determine whether the first Wi-Fi service is a foreground Wi-Fi service; a second service type determining module, configured to: if the first Wi-Fi service is a foreground Wi-Fi service, determine a service type of the first Wi-Fi service; and a second path determining module, configured to determine the first Wi-Fi path based on the service type.

When the service type is a first type, the first Wi-Fi path includes one Wi-Fi path; and when the service type is a second type, the first Wi-Fi path includes at least two Wi-Fi paths.

In some possible implementations, the first type includes a low latency type, and the second type includes a high-speed download type.

In some possible implementations, when the terminal device can provide at least three concurrent Wi-Fi paths, the first using module is specifically configured to: perform a first projection service by using a fourth target path, and perform a second Wi-Fi service by using a fifth target path. The first Wi-Fi service includes the first projection service and the second Wi-Fi service, the first Wi-Fi path includes the fourth target path and the fifth target path, and the second Wi-Fi service is a non-low-latency service.

The apparatus may further include: a first scanning result obtaining module, configured to obtain a first Wi-Fi scanning result; and a second using module, configured to perform a second projection service by using a sixth target path based on the first Wi-Fi scanning result. The second Wi-Fi path includes the sixth target path.

In some possible implementations, the apparatus may further include: a band determining module, configured to determine whether a band of the fifth target path is a 5G band; and a path switching module, configured to: if it is determined that the band of the fifth target path is a 5G band, switch the second Wi-Fi service from the fifth target path to a seventh target path in an idle state, to perform the second Wi-Fi service by using the seventh target path. The seventh target path is a 2.4G band Wi-Fi path, the first target path includes the fifth target path, and the fifth target path is used as the sixth target path.

In some possible implementations, the first Wi-Fi scanning module is specifically configured to: obtain a second Wi-Fi scanning result; after a target device is identified based on the second Wi-Fi scanning result, perform scanning at a first scanning frequency by using the first target path, to obtain first Wi-Fi information broadcast by the target device; determine a first distance to the target device based on the first Wi-Fi information; and when the first distance is less than or equal to a first preset threshold, perform scanning at a second scanning frequency by using the first target path, and obtain second Wi-Fi information of the target device. The second scanning frequency is higher than the first scanning frequency.

In some possible implementations, the apparatus may further include: a distance determining module, configured to determine a second distance to the target device based on the second Wi-Fi information; and a triggering module, configured to: when the second distance is less than or equal to a second preset threshold, pop up a window, and display information about the target device in the window. The second preset threshold is less than the first preset threshold.

An embodiment of this application further provides a computer-readable storage medium. The computer-readable storage medium stores a computer program. When the computer program is executed by a processor, steps in the foregoing method embodiments can be implemented.

An embodiment of this application provides a computer program product. When the computer program product is run on a terminal device, the terminal device is enabled to implement the steps in the foregoing method embodiments when executing the computer program product.

An embodiment of this application further provides a chip system. The chip system includes a processor, the processor is coupled to a memory, and the processor executes a computer program stored in the memory, to implement the method in the foregoing method embodiments. The chip system may be a single chip or a chip module including a plurality of chips.

In the foregoing embodiments, the descriptions of embodiments have respective focuses. For a part that is not described or recorded in detail in an embodiment, refer to related descriptions in other embodiments. It should be understood that a sequence number of each step in the foregoing embodiments does not mean a sequence of execution. An execution sequence of each process should be determined by a function and internal logic of the process, and should not constitute any limitation on an implementation process in embodiments of this application. In addition, in the description of this specification and claims of this application, the terms "first", "second", "third", and the like are merely intended for a purpose of differentiated description, but shall not be understood as an indication or an implication of relative importance. Referring to "an embodiment", "some embodiments", or the like in this specification of this application means that one or more embodiments of this application include a specific feature, structure, or characteristic described with reference to the embodiment. Therefore, in this specification, statements such as "in an embodiment", "in some embodiments", "in some other embodiments", and "in other embodiments" that appear at different places do not necessarily mean a same embodiment, but mean "one or more but not all of the embodiments", unless otherwise specified.

Finally, it should be noted that the foregoing descriptions are merely specific implementations of this application, but the protection scope of this application is not limited thereto. Any variation or replacement within the technical scope disclosed in this application shall fall within the protection scope of this application. Therefore, the protection scope of this application shall be subject to the protection scope of the claims.

## Claims

1. A Wi-Fi scanning control method, applied to a terminal device, wherein the terminal device comprises at least two Wi-Fi chips, and can provide at least two concurrent Wi-Fi paths, and the method comprises:
performing a first Wi-Fi service by using a first Wi-Fi path;
obtaining a Wi-Fi scanning request;
determining a first target path from a second Wi-Fi path in an idle state, wherein the at least two Wi-Fi paths comprise the first Wi-Fi path and the second Wi-Fi path; and
in response to the Wi-Fi scanning request, performing Wi-Fi scanning by using the first target path.

2. The method according to claim 1, wherein the first target path comprises a Wi-Fi path of a first band and a Wi-Fi path of a second band.

3. The method according to claim 1, wherein after the obtaining a Wi-Fi scanning request, if the second Wi-Fi path comprises a Wi-Fi path of only one band, the method further comprises:
determining whether a Wi-Fi service of a preset type exists on a Wi-Fi path of a target band in the first Wi-Fi path, wherein the first Wi-Fi service comprises at least two Wi-Fi services, and the first Wi-Fi path comprises at least two Wi-Fi paths;
if the Wi-Fi service of the preset type exists on the Wi-Fi path of the target band, determining a Wi-Fi path corresponding to the Wi-Fi service of the preset type as a second target path; and
in response to the Wi-Fi scanning request, performing Wi-Fi scanning by using the second target path and a third target path, wherein
the target band is different from a band of the second Wi-Fi path, and the second Wi-Fi path comprises the third target path.

4. The method according to claim 3, wherein the Wi-Fi service of the preset type comprises a non-low-latency service.

5. The method according to claim 1, wherein before the performing a first Wi-Fi service by using a first Wi-Fi path, the method further comprises:
determining whether the first Wi-Fi service is a foreground Wi-Fi service;
if the first Wi-Fi service is a foreground Wi-Fi service, determining a service type of the first Wi-Fi service; and
determining the first Wi-Fi path based on the service type, wherein
when the service type is a first type, the first Wi-Fi path comprises one Wi-Fi path; and
when the service type is a second type, the first Wi-Fi path comprises at least two Wi-Fi paths.

6. The method according to claim 5, wherein the first type comprises a low latency type, and the second type comprises a high-speed download type.

7. The method according to claim 1, wherein when the terminal device can provide at least three concurrent Wi-Fi paths, the performing a first Wi-Fi service by using a first Wi-Fi path comprises:
performing a first projection service by using a fourth target path, and performing a second Wi-Fi service by using a fifth target path, wherein the first Wi-Fi service comprises the first projection service and the second Wi-Fi service, the first Wi-Fi path comprises the fourth target path and the fifth target path, and the second Wi-Fi service is a non-low-latency service;
after the performing Wi-Fi scanning by using the first target path, the method further comprises:
obtaining a first Wi-Fi scanning result; and
performing a second projection service by using a sixth target path based on the first Wi-Fi scanning result, wherein the second Wi-Fi path comprises the sixth target path.

8. The method according to claim 7, wherein before the performing Wi-Fi scanning by using the first target path, the method further comprises:
determining whether a band of the fifth target path is a 5G band; and
if it is determined that the band of the fifth target path is a 5G band, switching the second Wi-Fi service from the fifth target path to a seventh target path in an idle state, to perform the second Wi-Fi service by using the seventh target path, wherein the seventh target path is a 2.4G band Wi-Fi path; and
the first target path comprises the fifth target path, and the fifth target path is used as the sixth target path.

9. The method according to claim 1, wherein the performing Wi-Fi scanning by using the first target path comprises:
obtaining a second Wi-Fi scanning result;
after identifying a target device based on the second Wi-Fi scanning result, performing scanning at a first scanning frequency by using the first target path, to obtain first Wi-Fi information broadcast by the target device;
determining a first distance to the target device based on the first Wi-Fi information; and
when the first distance is less than or equal to a first preset threshold, performing scanning at a second scanning frequency by using the first target path, and obtaining second Wi-Fi information of the target device, wherein the second scanning frequency is higher than the first scanning frequency.

10. The method according to claim 9, wherein after the performing scanning at a second scanning frequency by using the first target path, and obtaining second Wi-Fi information of the target device, the method further comprises:
determining a second distance to the target device based on the second Wi-Fi information; and
when the second distance is less than or equal to a second preset threshold, popping up a window, and displaying information about the target device in the window, wherein the second preset threshold is less than the first preset threshold.

11. A terminal device, comprising at least two Wi-Fi chips, a memory, a processor, and a computer program that is stored in the memory and that can be run on the processor, wherein the terminal device can provide at least two concurrent Wi-Fi paths based on the at least two Wi-Fi chips, and when executing the computer program, the processor implements the following process:
performing a first Wi-Fi service by using a first Wi-Fi path;
obtaining a Wi-Fi scanning request;
determining a first target path from a second Wi-Fi path in an idle state, wherein the at least two Wi-Fi paths comprise the first Wi-Fi path and the second Wi-Fi path; and
in response to the Wi-Fi scanning request, performing Wi-Fi scanning by using the first target path.

12. The terminal device according to claim 11, wherein the first target path comprises a Wi-Fi path of a first band and a Wi-Fi path of a second band.

13. The terminal device according to claim 11, wherein if the second Wi-Fi path comprises a Wi-Fi path of only one band, when executing the computer program, the processor further implements the following process:
determining whether a Wi-Fi service of a preset type exists on a Wi-Fi path of a target band in the first Wi-Fi path, wherein the first Wi-Fi service comprises at least two Wi-Fi services, and the first Wi-Fi path comprises at least two Wi-Fi paths;
if the Wi-Fi service of the preset type exists on the Wi-Fi path of the target band, determining a Wi-Fi path corresponding to the Wi-Fi service of the preset type as a second target path; and
in response to the Wi-Fi scanning request, performing Wi-Fi scanning by using the second target path and a third target path, wherein
the target band is different from a band of the second Wi-Fi path, and the second Wi-Fi path comprises the third target path.

14. The terminal device according to claim 13, wherein the Wi-Fi service of the preset type comprises a non-low-latency service.

15. The terminal device according to claim 11, wherein when executing the computer program, the processor further implements the following process:
determining whether the first Wi-Fi service is a foreground Wi-Fi service;
if the first Wi-Fi service is a foreground Wi-Fi service, determining a service type of the first Wi-Fi service; and
determining the first Wi-Fi path based on the service type, wherein
when the service type is a first type, the first Wi-Fi path comprises one Wi-Fi path; and
when the service type is a second type, the first Wi-Fi path comprises at least two Wi-Fi paths.

16. The terminal device according to claim 15, wherein the first type comprises a low latency type, and the second type comprises a high-speed download type.

17. The terminal device according to claim 11, wherein when the terminal device can provide at least three concurrent Wi-Fi paths, when executing the computer program, the processor specifically implements the following process:
performing a first projection service by using a fourth target path, and performing a second Wi-Fi service by using a fifth target path, wherein the first Wi-Fi service comprises the first projection service and the second Wi-Fi service, the first Wi-Fi path comprises the fourth target path and the fifth target path, and the second Wi-Fi service is a non-low-latency service;
when executing the computer program, the processor further implements the following process:
obtaining a first Wi-Fi scanning result; and
performing a second projection service by using a sixth target path based on the first Wi-Fi scanning result, wherein the second Wi-Fi path comprises the sixth target path.

18. The terminal device according to claim 17, wherein when executing the computer program, the processor further implements the following process:
determining whether a band of the fifth target path is a 5G band; and
if it is determined that the band of the fifth target path is a 5G band, switching the second Wi-Fi service from the fifth target path to a seventh target path in an idle state, to perform the second Wi-Fi service by using the seventh target path, wherein the seventh target path is a 2.4G band Wi-Fi path; and
the first target path comprises the fifth target path, and the fifth target path is used as the sixth target path.

19. The terminal device according to claim 11, wherein when executing the computer program, the processor specifically implements the following process:
obtaining a second Wi-Fi scanning result;
after identifying a target device based on the second Wi-Fi scanning result, performing scanning at a first scanning frequency by using the first target path, to obtain first Wi-Fi information broadcast by the target device;
determining a first distance to the target device based on the first Wi-Fi information; and
when the first distance is less than or equal to a first preset threshold, performing scanning at a second scanning frequency by using the first target path, and obtaining second Wi-Fi information of the target device, wherein the second scanning frequency is higher than the first scanning frequency.

20. The terminal device according to claim 19, wherein when executing the computer program, the processor further implements the following process:
determining a second distance to the target device based on the second Wi-Fi information; and
when the second distance is less than or equal to a second preset threshold, popping up a window, and displaying information about the target device in the window, wherein the second preset threshold is less than the first preset threshold.

21. A computer-readable storage medium, wherein the computer-readable storage medium stores a computer program, and when the computer program is executed by a processor, the method according to any one of claims 1 to 10 is implemented.

22. A chip system, comprising a processor and at least two Wi-Fi chips, wherein the processor is coupled to a memory, and the processor executes a computer program stored in the memory, to implement the method according to any one of claims 1 to 10.
